# EUROPEAN PATENT APPLICATION

(11) **EP 4 485 167 A1**
(43) Date of publication of application: **01.01.2025**
(21) Application number: 23791261.3
(22) Date of filing: 19.04.2023
(51) Int. Cl.: G06F 3/14

(54) **MULTI-SCREEN INTERACTION METHOD AND ELECTRONIC DEVICE**

(30) Priority: 21.04.2022 CN 202210424457
(71) Applicant: Huawei Technologies Co., Ltd., Shenzhen, Guangdong 518129 (CN)
(72) Inventor: ZHANG, Yanan, Shenzhen, Guangdong 518129 (CN); WANG, Hongjun, Shenzhen, Guangdong 518129 (CN); YANG, Zhiyan, Shenzhen, Guangdong 518129 (CN); WANG, Jin, Shenzhen, Guangdong 518129 (CN)
(74) Representative: Maiwald GmbH
(86) International application number: PCT/CN2023/089157
(87) International publication number: WO 2023/202606

(57) **Abstract**

This application provides a multi-screen interaction method and an electronic device. The method includes: A first electronic device displays first content on a first display; the first electronic device receives a first operation, where the first operation is a sliding operation performed on the first display; and the first electronic device sends, in response to the received first operation, the first content to a second electronic device that displays second content on a second display, so that the second electronic device displays the first content on the second display. According to the method, a user only needs to perform a sliding operation on the first display to trigger the first electronic device to share content displayed on the first display with the second display of the second electronic device for display, to implement multi-screen interaction between the first display and the second display. In the method, an operation process is simple and smooth, and application adaptation is not required. This can improve convenience and efficiency of multi-screen interaction.

## Description

### CROSS-REFERENCE TO RELATED APPLICATIONS

This application claims priority to Chinese Patent Application No. 202210424457.X, filed with the China National Intellectual Property Administration on April 21, 2022 and entitled "MULTI-SCREEN INTERACTION METHOD AND ELECTRONIC DEVICE", which is incorporated herein by reference in its entirety.

### TECHNICAL FIELD

This application relates to the field of electronic device technologies, and in particular, to a multi-screen interaction method and an electronic device.

### BACKGROUND

Currently, a head unit is equipped with more displays, and a user has increasing requirements for multi-screen interaction between a plurality of displays on the head unit and multi-screen interaction between a display on a vehicle and a display of a mobile device.

For requirements for multi-screen interaction in the head unit and between the head unit and the mobile device, a current multi-screen interaction method is: An initiator end or a control end of multi-screen interaction may provide a control entry, and the user starts multi-screen interaction by performing an operation on the control entry. Then, the initiator end or the control end provides information about optional displays for the user, and after the user selects displays for multi-screen interaction, the initiator end or the control end controls and implements content sharing between the displays selected by the user. In this way, multi-screen interaction is implemented.

In the foregoing method, the user completes a multi-screen interaction process only after a plurality of operations. Therefore, an operation process is cumbersome. In addition, when multi-screen interaction content is content in a third-party application, the third-party application needs to perform adaptation to provide a control entry. This also increases difficulty in implementing multi-screen interaction. In conclusion, it is difficult to implement multi-screen interaction conveniently and efficiently by using the current multi-screen interaction method.

### SUMMARY

This application provides a multi-screen interaction method and an electronic device, to improve convenience and efficiency of performing multi-screen interaction.

According to a first aspect, an embodiment of this application provides a multi-screen interaction method, where the method includes: A first electronic device displays first content on a first display; the first electronic device receives a first operation, where the first operation is a sliding operation performed on the first display; and the first electronic device sends, in response to the received first operation, the first content to a second electronic device that displays second content on a second display, so that the second electronic device displays the first content on the second display.

In the method, after receiving the sliding operation performed on the first display, the first electronic device to which the first display belongs may share content displayed on the first display with the second display of the second electronic device for display. Therefore, a user can trigger multi-screen interaction between the first display and the second display only by performing the sliding operation on the first display. An operation process is simple and smooth, and convenience and efficiency of multi-screen interaction are improved. In addition, because the first operation that triggers multi-screen interaction is an operation performed on a display, when multi-screen interaction content is content in an application, the application does not need to provide a control entry, and in this case, the application does not need to perform adaptation. Therefore, multi-screen interaction difficulty can also be reduced, and multi-screen interaction efficiency can be improved.

In a possible design, an included angle between a sliding direction of the first operation and a first candidate direction is less than a specified first angle threshold, where the first candidate direction indicates a direction from a position of the first display to a position of the second display.

In the method, the first angle threshold may be considered as an error allowable angle of a direction of the sliding operation performed when a user selects a target display. When the included angle between the sliding direction of the first operation and the first candidate direction is less than the first angle threshold, it may be considered that the direction in which the user performs the sliding operation corresponds to the first candidate direction. In this case, it may be determined that the display selected by the user by performing the sliding operation is the second display corresponding to the first candidate direction, and then it may be determined that the content displayed on the first display is shared with the second display for display. According to the method, the first electronic device can quickly determine, based on the sliding operation performed by the user, the target display selected by the user, and further perform multi-screen interaction with the target display.

In a possible design, the first operation includes a second operation and a third operation, and the second operation and the third operation are sliding operations performed on the first display, where an end contact of the second operation on the first display is a start contact of the third operation on the first display. That the first electronic device receives a first operation includes: The first electronic device receives the second operation; the first electronic device displays identification information of at least one candidate display on the first display in response to the received second operation, where the at least one candidate display includes the second display; and the first electronic device receives the third operation, where the third operation is used to select identification information of the second display.

In the method, the first operation is divided into two sub-operations: the second operation and the third operation, and the identification information of the candidate display is displayed after a user performs the second operation, so that the user can select, by performing the third operation, a target display for multi-screen interaction. It is convenient for the user to intuitively view and select the information about the candidate display on which multi-screen interaction can be performed. In addition, the user can still trigger multi-screen interaction by using continuous sliding operations. This ensures operation convenience and can extend a manner in which the user triggers multi-screen interaction.

In a possible design, an included angle between a candidate direction corresponding to the at least one candidate display and a sliding direction of the second operation is less than a specified second angle threshold; or an included angle between a sliding direction of the second operation and a specified first reference direction is less than a specified second angle threshold, and an included angle between a candidate direction corresponding to the at least one candidate display and the first reference direction is less than the second angle threshold, where a candidate direction corresponding to any candidate display indicates a direction from a position of the first display to a position of the candidate display.

In the method, if an included angle between the direction of the sliding operation of the user and a specific direction and an included angle between the at least one candidate direction and the specific direction are both less than the second angle threshold, it may be considered that the direction of the sliding operation of the user and the at least one candidate direction are directions located on a same side. According to the method, after receiving the sliding operation of the user, the first electronic device can display only information about a candidate display on a side of the direction of the sliding operation, so that the user continues to select a target display for multi-screen interaction from the candidate display.

In a possible design, that the first electronic device displays identification information of at least one candidate display on the first display includes: The first electronic device obtains sorting reference information corresponding to the at least one candidate display, where the sorting reference information indicates: a position of a display, or a distance between a display and the first display, or intimacy between an electronic device to which a display belongs and the first electronic device; the first electronic device sorts the at least one candidate display based on the sorting reference information corresponding to the at least one candidate display; and the first electronic device displays the identification information of the at least one candidate display on the first display based on the sorting of the at least one candidate display.

In the method, after sorting the at least one candidate display, the first electronic device displays the identification information of the at least one candidate display according to the sorting, so that the user quickly selects, based on the sorting, a target display on which multi-screen interaction needs to be performed. This improves user experience.

In a possible design, the at least one candidate display is in a screen-on state.

In the method, when the candidate display is in the screen-on state, it indicates that the candidate display is in a running (working) state, and can display received content. Therefore, the information about the display in the running state is displayed to the user, so that after the user selects a display for multi-screen interaction from the display, it can be ensured that the first electronic device can directly perform multi-screen interaction with the display selected by the user, and the multi-screen interaction is successfully implemented.

In a possible design, the first display and the second display are in a non-relatively static state, and the first candidate direction is a specified direction.

In the method, when the first display and the second display are in the non-relatively static state, the first candidate direction is the specified direction, and the first candidate direction is a candidate direction corresponding to the second display, it can be ensured that no matter how a relative position between the first display and the second display changes, the user may trigger multi-screen interaction between the first display and the second display by performing a sliding operation in a fixed direction (that is, the first candidate direction), so as to ensure successful implementation of multi-screen interaction between the first display and the second display.

In a possible design, the first display and the second display are in a non-relatively static state, and a candidate direction corresponding to the second display is a specified direction.

In the method, when the first display and the second display are in the non-relatively static state, and the candidate direction corresponding to the second display is the specified direction, it can be ensured that no matter how a relative position between the first display and the second display changes, the user can perform a sliding operation in a fixed direction (that is, the candidate direction corresponding to the second display), to trigger multi-screen interaction between the first display and the second display, so as to ensure successful implementation of multi-screen interaction between the first display and the second display.

In a possible design, the first display is a display disposed in a head unit cockpit, and the second display is a display of a mobile device.

In the method, a position of the display in the head unit cockpit can generally remain unchanged for a long time, and a position of the display of the mobile device may change at any time. Therefore, the display in the head unit cockpit and the display of the mobile device are generally in a non-relatively static state. According to the foregoing method, multi-screen interaction between the display in the head unit cockpit and the display of the mobile device can be implemented.

In a possible design, the first display and the second display are in a relatively static state.

In the method, when the first display and the second display are in the relatively static state, the first electronic device may pre-obtain and save a direction from the first display to the second display, and subsequently determine, based on the direction and a user operation, whether a display selected by the user to perform multi-screen interaction is the second display.

In a possible design, the first display and the second display are displays disposed in the same head unit cockpit.

In the method, the displays in the head unit cockpit are generally in the non-relatively static state. Therefore, the first electronic device may obtain a direction relationship between the displays in the head unit cockpit in advance, and further determine, based on the user operation and the direction relationship between the displays, the display selected by the user for multi-screen interaction, so that multi-screen interaction between different displays in the head unit cockpit is implemented.

In a possible design, the first electronic device and the second electronic device are a same vehicle-mounted device in the head unit cockpit; or the first electronic device and the second electronic device are different display devices that belong to a same vehicle-mounted device in the head unit cockpit; or the first electronic device and the second electronic device are different vehicle-mounted devices in the head unit cockpit.

In the method, the first display and the second display may be different displays controlled by a same device, or may be different displays controlled by different devices. Multi-screen interaction in a plurality of scenarios may be implemented with reference to the foregoing method.

In a possible design, that the second electronic device displays the first content on the second display includes: The second electronic device replaces, with the first content, the second content displayed on the second display; or the second electronic device displays, on the second display, a first window including the first content and a second window including the second content, where the first window and the second window are located in different areas of the second display, or the first window covers the second window.

In the method, the second electronic device may display the content from the first electronic device in a plurality of manners, and flexibility is high.

In a possible design, the method further includes: The first electronic device obtains the second content from the second electronic device; and the first electronic device displays the second content on the first display.

In the method, when sharing the content displayed on the first display with the second display of the second electronic device for display, the first electronic device may simultaneously obtain the content displayed on the second display and display the content on the first display, so that an effect of exchanging the display content between the first display and the second display can be implemented.

In a possible design, the method further includes: The first electronic device displays third content on the first display, where the third content is specified content or content displayed before the first electronic device displays the first content; or the first electronic device switches the first display to a screen-off state.

In the method, after sharing the content displayed on the first display with the second display of the second electronic device for display, the first electronic device may control display in a plurality of display control manners, and flexibility is high.

According to a second aspect, an embodiment of this application provides a multi-screen interaction method, where the method includes: A first electronic device displays first content on a first display; the first electronic device receives a first operation, where the first operation is a sliding operation performed on the first display; and the first electronic device sends, in response to the received first operation, the first content to a second electronic device that displays second content on a second display, so that the second electronic device displays the first content on the second display.

In the method, after receiving the sliding operation performed on the first display, the first electronic device to which the first display belongs may share content displayed on the first display with the second display of the second electronic device for display. Therefore, a user can trigger multi-screen interaction between the first display and the second display only by performing the sliding operation on the first display. An operation process is simple and smooth, and convenience and efficiency of multi-screen interaction are improved. In addition, because the first operation that triggers multi-screen interaction is an operation performed on the display, when multi-screen interaction content is content in an application, the application does not need to provide a control entry, and the application does not need to perform adaptation. Therefore, multi-screen interaction difficulty can also be reduced, and multi-screen interaction efficiency can be improved.

In a possible design, the first operation includes a second operation and a third operation, and the second operation and the third operation are sliding operations performed on the first display, where an end contact of the second operation on the first display is a start contact of the third operation on the first display. That the first electronic device receives a first operation includes: The first electronic device receives the second operation; the first electronic device displays identification information of at least one candidate display on the first display in response to the received second operation, where the at least one candidate display includes the second display; and the first electronic device receives the third operation, where the third operation is used to select identification information of the second display.

In the method, the first operation is divided into two sub-operations: the second operation and the third operation, and the identification information of the candidate display is displayed after a user performs the second operation, so that the user can select, by performing the third operation, a target display for multi-screen interaction. It is convenient for the user to intuitively view and select the information about the candidate display on which multi-screen interaction can be performed. In addition, the user can still trigger multi-screen interaction by using continuous sliding operations. This ensures operation convenience and can extend a manner in which the user triggers multi-screen interaction.

In a possible design, the first operation includes a fourth operation, a fifth operation, and a sixth operation, and the fourth operation, the fifth operation, and the sixth operation are sliding operations performed on the first display, where an end contact of the fourth operation on the first display is a start contact of the fifth operation on the first display, and an end contact of the fifth operation on the first display is a start contact of the sixth operation on the first display. That the first electronic device receives a first operation includes: The first electronic device receives the fourth operation; the first electronic device displays first identification information on the first display in response to the received fourth operation, where the first identification information is used to identify a first position area, there is at least one candidate display in the first position area, and the at least one candidate display includes the second display; the first electronic device displays identification information of the at least one candidate display on the first display in response to the received fifth operation, where the fifth operation is used to select the first position area; and the first electronic device receives the sixth operation, where the sixth operation is used to select identification information of the second display.

In the method, the first operation is divided into three sub-operations: the fourth operation, the fifth operation, and the sixth operation, and identification information of position areas is displayed after the user performs the fourth operation, so that the user can select, by performing the fifth operation, displays in a specific position area for multi-screen interaction, and then select, by performing the sixth operation, a specific display in the specific position area for multi-screen interaction. In a level-by-level selection manner, it is convenient for the user to intuitively view and select the information about the candidate display on which multi-screen interaction can be performed. In addition, the user can still trigger multi-screen interaction by using continuous sliding operations. This ensures operation convenience and can extend a manner in which the user triggers multi-screen interaction.

In a possible design, the first display and the second display are in a non-relatively static state.

In a possible design, the first display is a display of a mobile device, and the second display is a display disposed in a head unit cockpit.

In the foregoing method, a position of the display of the mobile device may change at any time, and a position of the display in the head unit cockpit can generally remain unchanged for a long time. Therefore, the display of the mobile device and the display in the head unit cockpit are generally in the non-relatively static state. In this scenario, according to the foregoing method, an effect of sharing content displayed on the display of the mobile device with the display in the head unit cockpit for display can be implemented.

In a possible design, that the second electronic device displays the first content on the second display includes: The second electronic device replaces, with the first content, the second content displayed on the second display; or the second electronic device displays, on the second display, a first window including the first content and a second window including the second content, where the first window and the second window are located in different areas of the second display, or the first window covers the second window.

In the method, the second electronic device may display the content from the first electronic device in a plurality of manners, and flexibility is high.

In a possible design, the method further includes: The first electronic device obtains the second content from the second electronic device; and the first electronic device displays the second content on the first display.

In the method, when sharing the content displayed on the first display with the second display of the second electronic device for display, the first electronic device may simultaneously obtain the content displayed on the second display and display the content on the first display, so that an effect of exchanging the display content between the first display and the second display can be implemented.

In a possible design, the method further includes: The first electronic device displays third content on the first display, where the third content is specified content or content displayed before the first electronic device displays the first content; or the first electronic device switches the first display to a screen-off state.

In the method, after sharing the content displayed on the first display with the second display of the second electronic device for display, the first electronic device may control display in a plurality of display control manners, and flexibility is high.

According to a third aspect, an embodiment of this application provides a multi-screen interaction method, where the method includes: A first electronic device displays a first window and a second window on a first display, where the first window includes first content, and the second window includes second content; the first electronic device receives a first operation, where the first operation is a sliding operation performed on the first display; and the first electronic device sends, in response to the received first operation, target content to a second electronic device that displays third content on a second display, so that the second electronic device displays the target content on the second display, where the target content is the first content and/or the second content.

In the method, the first electronic device may display a plurality of pieces of content in a plurality of windows of the first display. After receiving the sliding operation performed on the first display, the first electronic device may share content displayed in one or more windows of the first display with the second display of the second electronic device for display. Therefore, a user only needs to perform the sliding operation on the first display to trigger multi-screen interaction between the first display and the second display. The operation process is simple and smooth, and content displayed on the first display can be selectively shared. This improves convenience and efficiency of multi-screen interaction, and can be applied to more scenarios. In addition, because the first operation that triggers multi-screen interaction is an operation performed on the display, when multi-screen interaction content is content in an application, the application does not need to provide a control entry, and the application does not need to perform adaptation. Therefore, multi-screen interaction difficulty can also be reduced, and multi-screen interaction efficiency can be improved.

In a possible design, the first window and the second window are located in different areas on the first display. For example, the first display may be a non-foldable screen, or may be a foldable screen in an expanded state.

In the method, the first window and the second window on the first display may respectively occupy different display areas on the first display, so that it is convenient for the user to view content. For example, the first electronic device may display the first window and the second window on the first display in a split-screen display manner.

In a possible design, that the first electronic device sends, in response to the received first operation, target content to a second electronic device that displays third content on a second display includes: sending the first content to the second electronic device when the first electronic device determines that a start contact of the first operation on the first display is located only in the first window; or sending the second content to the second electronic device when the first electronic device determines that a start contact of the first operation on the first display is located only in the second window; or sending the first content and the second content to the second electronic device when the first electronic device determines that a start contact of the first operation on the first display is located in the first window and the second window.

In the method, when the plurality of windows are displayed on the first display, the first electronic device may determine, based on a position of the start contact of the sliding operation performed by the user on the first display, the content shared with the second display. Specifically, when the start contact is located in a single window, the first electronic device shares content in the window with the second display. When the start contact crosses the plurality of windows, the first electronic device shares all content displayed on the first display with the second display. Therefore, according to the method, the user may select, by performing the same sliding operation at different positions, content for multi-screen interaction. This has high flexibility, can meet various requirements of the user, and has high use experience.

In a possible design, that the first electronic device sends, in response to the received first operation, target content to a second electronic device that displays third content on a second display includes: sending the first content to the second display when the first electronic device determines that a distance between the first window and the second display is greater than a distance between the second window and the second display, and the first operation meets a first specified condition, where the first specified condition includes: an included angle between a sliding direction and a first candidate direction is less than a specified first angle threshold, where the first candidate direction indicates a direction from a position of the first display to a position of the second display; and/or a sliding speed is greater than or equal to a specified first threshold, or a sliding acceleration is greater than or equal to a specified second threshold, or a hand-leaving speed is greater than or equal to a specified third threshold.

In the method, when the distance between the first window and the second display is greater than the distance between the second window and the second display, it may be determined that in the first display, the first window is a window that is far away from the second display, and the second window is a window that is close to the second display. In this case, it may be considered that the first window and the second display are separated by the second window, so that when the user selects the second display and a speed/acceleration/hand-leaving speed of the sliding operation of the user is high, the first electronic device may determine that the second window is crossed, and share the content in the first window with the second display. Therefore, the first electronic device may flexibly select, based on the speed/acceleration/hand-leaving speed of the sliding operation of the user, whether to cross the middle window to perform multi-screen interaction. In addition, convenience of a user operation is ensured, and multi-screen interaction efficiency is improved.

In a possible design, the method further includes: The first electronic device displays fourth content in the first window when the target content is the first content, where the fourth content is specified content or content displayed in the first window before the first electronic device displays the first content; or the first electronic device displays only the second content on the first display.

In the method, after sharing the content displayed on the first display with the second display of the second electronic device for display, the first electronic device may control display in a plurality of display control manners, and flexibility is high.

According to a fourth aspect, an embodiment of this application provides a multi-screen interaction method, where the method includes: A first electronic device displays a first window, a second window, and a third window on a first display, where the first window includes first content, the second window includes second content, and the third window includes third content; the first electronic device receives a first operation, where the first operation is a sliding operation performed on the first display; and the first electronic device sends, in response to the received first operation, target content to a second electronic device that displays fourth content on a second display, so that the second electronic device displays the target content on the second display, where the target content is the first content, or the second content, or the third content, or the first content, the second content, and the third content.

In a possible design, that the first electronic device sends, in response to the received first operation, target content to a second electronic device that displays fourth content on a second display includes: sending the first content to the second electronic device when the first electronic device determines that a start contact of the first operation on the first display is located only in the first window; or sending the second content to the second electronic device when the first electronic device determines that a start contact of the first operation on the first display is located only in the second window; or sending the third content to the second electronic device when the first electronic device determines that a start contact of the first operation on the first display is located only in the third window; or sending the first content, the second content, and the third content to the second electronic device when the first electronic device determines that a start contact of the first operation on the first display is located in the first window and the second window.

In a possible design, that the first electronic device sends, in response to the received first operation, target content to a second electronic device that displays fourth content on a second display includes: sending the first content to the second electronic device when the first electronic device determines that a distance between the first window and the second display is greater than a distance between the second window and the second display, the distance between the first window and the second display is greater than a distance between the third window and the second display, and the first operation meets a first specified condition, where the first specified condition includes: an included angle between a sliding direction and a first candidate direction is less than a specified first angle threshold, where the first candidate direction indicates a direction from a position of the first display to a position of the second display; and/or a sliding speed is greater than or equal to a specified first threshold, or a sliding acceleration is greater than or equal to a specified second threshold, or a hand-leaving speed is greater than or equal to a specified third threshold.

In the method, the first electronic device can flexibly select, based on the speed/acceleration/hand-leaving speed of the sliding operation of the user, whether to cross a plurality of middle windows to perform multi-screen interaction. In addition, convenience of a user operation is ensured, and multi-screen interaction efficiency is improved.

In a possible design, the method further includes: The first electronic device displays fifth content in the first window when the target content is the first content, where the fifth content is specified content or content displayed in the first window before the first electronic device displays the first content; or the first electronic device displays the second window and the third window on the first display in a split-screen display manner.

In the method, after sharing the content displayed on the first display with the second display of the second electronic device for display, the first electronic device may control display in a plurality of display control manners, and flexibility is high.

In a possible design, in the method according to the third aspect and the fourth aspect, that the first electronic device determines that a distance between the first window and the second display is greater than a distance between the second window and the second display includes: The first electronic device determines a first target direction corresponding to the first window, where the first target direction indicates a direction from the first window to the second window; and when the first electronic device determines that an included angle between the first target direction and the first candidate direction is less than a specified second angle threshold, determines that the distance between the first window and the second display is greater than the distance between the second window and the second display.

In the method, the first electronic device may determine a direction relationship between the first window, the second window, and the second display based on a direction relationship between the first display and the second display and a direction relationship between the first window and the second window, and further determine a distance between the first window, the second window, and the second display, so that accuracy is high.

In a possible design, in the methods according to the third aspect and the fourth aspect, that the first electronic device determines that a distance between the first window and the second display is greater than a distance between the second window and the second display includes: The first electronic device determines a first target direction corresponding to the first window and a second target direction corresponding to the second window, where the first target direction indicates a direction from the first window to the second window, and the second target direction indicates a direction from the second window to the first window; and when the first electronic device determines that an included angle between the first target direction and the first candidate direction is less than an included angle between the second target direction and the first candidate direction, determines that the distance between the first window and the second display is greater than the distance between the second window and the second display.

In the method, the first electronic device may determine a direction relationship between the first window, the second window, and the second display based on a direction relationship between the first display and the second display and a direction relationship between the first window and the second window, and further determine a distance between the first window, the second window, and the second display, so that accuracy is high.

In a possible design, in the methods according to the third aspect and the fourth aspect, that the second electronic device displays the target content on the second display includes: The second electronic device replaces, with the target content, the third content displayed on the second display; or the second electronic device displays, on the second display, the first window including the target content and the second window including the third content, where the first window and the second window are located in different areas of the second display, or the first window covers the second window.

In the method, the second electronic device may display the content from the first electronic device in a plurality of manners, and flexibility is high.

In a possible design, the first window displayed on the second display is a window in a floating window format.

In a possible design, in the methods according to the third aspect and the fourth aspect, the method further includes: When the target content is the first content, the first electronic device obtains the third content from the second electronic device; and the first electronic device displays the third content in the first window.

In the method, when sharing the content displayed on the first display with the second display of the second electronic device for display, the first electronic device may simultaneously obtain the content displayed on the second display and display the content on the first display, so that an effect of exchanging the display content between the first display and the second display can be implemented.

According to a fifth aspect, an embodiment of this application provides a multi-screen interaction method, where the method includes: A first electronic device displays first content on a first display; the first electronic device receives a first operation, where the first operation is a sliding operation performed on the first display; and the first electronic device sends, in response to the received first operation, the first content to a second electronic device that displays a first window including second content and a second window including third content on a second display, so that the second electronic device displays the first content on the second display.

In the method, after receiving the sliding operation performed on the first display, the first electronic device to which the first display belongs may share content displayed on the first display with the second display of the second electronic device for display. Therefore, a user can trigger multi-screen interaction between the first display and the second display only by performing the sliding operation on the first display. An operation process is simple and smooth, and convenience and efficiency of multi-screen interaction are improved. In addition, because the first operation that triggers multi-screen interaction is an operation performed on the display, when multi-screen interaction content is content in an application, the application does not need to provide a control entry, and the application does not need to perform adaptation. Therefore, multi-screen interaction difficulty can also be reduced, and multi-screen interaction efficiency can be improved.

In a possible design, the method further includes: The first electronic device indicates the second electronic device to display the first content in a target window, where the target window is the first window or the second window.

In the method, a plurality of pieces of content may be displayed in a plurality of windows on the second display of the second electronic device. When sharing the content displayed on the first display with the second display for display, the first electronic device may indicate the second electronic device to display the content in the first window or the second window on the second display. Therefore, the first electronic device may selectively share the content displayed on the first display with a specific window on the second display while ensuring convenience of a user operation. Therefore, in addition to improving convenience and efficiency of multi-screen interaction, this solution can also be applicable to more scenarios, meet diversified interaction requirements of a user, and further improve user experience.

In a possible design, that the first electronic device indicates the second electronic device to display the first content in a target window includes: When the first electronic device determines that a distance between the first window and the first display is greater than a distance between the second window and the first display, and the first operation meets a first specified condition and/or a second specified condition, indicating the second electronic device to display the first content in the first window; or when the first electronic device determines that a distance between the first window and the first display is greater than a distance between the second window and the first display, and the first operation does not meet a second specified condition, indicating the second electronic device to display the first content in the second window, where the first specified condition includes: an included angle between a sliding direction of the first operation and a first candidate direction is less than a specified first angle threshold, where the first candidate direction indicates a direction from a position of the first display to a position of the second display; and the second specified condition includes: a sliding speed is greater than or equal to a specified first threshold, or a sliding acceleration is greater than or equal to a specified second threshold, or a hand-leaving speed is greater than or equal to a specified third threshold.

In the method, when the distance between the first window and the first display is greater than the distance between the second window and the first display, it may be determined that in the second display, the first window is a window that is far away from the first display, and the second window is a window that is close to the first display. In this case, it may be considered that the first window and the first display are separated by the second window, so that when the user selects the second display and a speed/acceleration/hand-leaving speed of the sliding operation of the user is high, the first electronic device may determine that the second window is crossed, and share the content in the first display with the first window of the second display. Therefore, the first electronic device may flexibly select, based on the speed/acceleration/hand-leaving speed of the sliding operation of the user, whether to cross the middle window to perform multi-screen interaction. In addition, convenience of a user operation is ensured, and multi-screen interaction efficiency is improved.

In a possible design, that the second electronic device displays the first content on the second display includes: The second electronic device replaces, with the first content, the second content displayed in the first window; or the second electronic device replaces, with the first content, the third content displayed in the second window; or the second electronic device displays, on the second display, the first window including the second content, the second window including the third content, and a third window including the first content, where the first window, the second window, and the third window are located in different areas of the second display, or the third window covers the first window and/or the second window.

In the method, the second electronic device may display the content from the first electronic device in a plurality of manners, and flexibility is high.

In a possible design, the third window displayed on the second display is a window in a floating window format.

According to a sixth aspect, an embodiment of this application provides a multi-screen interaction method, where the method includes: A first electronic device displays first content on a first display; the first electronic device receives a first operation, where the first operation is a sliding operation performed on the first display; and the first electronic device sends, in response to the received first operation, the first content to a second electronic device that displays a first window including second content, a second window including third content, and a third window including fourth content on a second display, so that the second electronic device displays the first content on the second display.

In a possible design, the method further includes: The first electronic device indicates the second electronic device to display the first content in a target window, where the target window is the first window, the second window, or the third window.

In a possible design, that the first electronic device indicates the second electronic device to display the first content in a target window includes: When the first electronic device determines that a distance between the first window and the first display is greater than a distance between the second window and the first display, the distance between the first window and the first display is greater than a distance between the third window and the first display, and the first operation meets a first specified condition and/or a second specified condition, the first electronic device indicates the second electronic device to display the first content in the first window; or when the first electronic device determines that a distance between the first window and the first display is greater than a distance between the second window and the first display, the distance between the second window and the first display is greater than a distance between the third window and the first display, and the first operation meets a first specified condition and/or a third specified condition, the first electronic device indicates the second electronic device to display the first content in the second window; or when the first electronic device determines that a distance between the first window and the first display is greater than a distance between the second window and the first display, the distance between the second window and the first display is greater than a distance between the third window and the first display, and the first operation meets a first specified condition and/or a fourth specified condition, the first electronic device indicates the second electronic device to display the first content in the third window, where the first specified condition includes: an included angle between a sliding direction of the first operation and a first candidate direction is less than a specified first angle threshold, where the first candidate direction indicates a direction from a position of the first display to a position of the second display; the second specified condition includes: a sliding speed is greater than or equal to a specified first threshold, or a sliding acceleration is greater than or equal to a specified second threshold, or a hand-leaving speed is greater than or equal to a specified third threshold; the third specified condition includes: the sliding speed is less than the specified first threshold and is greater than or equal to a specified fourth threshold, or the sliding acceleration is less than the specified second threshold and is greater than or equal to a specified fifth threshold, or the hand-leaving speed is less than the specified third threshold and is greater than or equal to a specified sixth threshold; and the fourth specified condition includes: the sliding speed is less than the specified fourth threshold, or the sliding acceleration is less than the specified fifth threshold, or the hand-leaving speed is less than the specified sixth threshold.

In the method, the first electronic device can flexibly select, based on the speed/acceleration/hand-leaving speed of the sliding operation of the user, whether to cross a plurality of middle windows to perform multi-screen interaction. In addition, convenience of a user operation is ensured, and multi-screen interaction efficiency is improved.

In a possible design, in the methods according to the fifth aspect and the sixth aspect, that the first electronic device determines that a distance between the first window and the first display is greater than a distance between the second window and the first display includes: The first electronic device determines a first target direction corresponding to the first window, where the first target direction indicates a direction from the first window to the second window; and when the first electronic device determines that an included angle between the first target direction and the first candidate direction is greater than the specified first angle threshold, determines that the distance between the first window and the first display is greater than the distance between the second window and the first display.

In the method, the first electronic device may determine a direction relationship between the first window, the second window, and the first display based on a direction relationship between the first display and the second display and a direction relationship between the first window and the second window, and further determine a distance between the first window, the second window, and the first display, so that accuracy is high.

In a possible design, in the methods according to the fifth aspect and the sixth aspect, that the first electronic device determines that a distance between the first window and the first display is greater than a distance between the second window and the first display includes: The first electronic device determines a first target direction corresponding to the first window, where the first target direction indicates a direction from the first window to the second window; the first electronic device determines, based on the first target direction, a second target direction corresponding to the second window, where the second target direction indicates a direction from the second window to the first window; and when the first electronic device determines that an included angle between the first target direction and the first candidate direction is greater than an included angle between the second target direction and the first candidate direction, the first electronic device determines that the distance between the first window and the second display is greater than the distance between the second window and the second display.

In the method, the first electronic device may determine a direction relationship between the first window, the second window, and the first display based on a direction relationship between the first display and the second display and a direction relationship between the first window and the second window, and further determine a distance between the first window, the second window, and the first display, so that accuracy is high.

In a possible design, in the methods according to the fifth aspect and the sixth aspect, that the first electronic device determines a first target direction corresponding to the first window includes: The first electronic device receives first indication information sent by the second electronic device, where the first indication information indicates the first target direction.

In the method, the first window and the second window are windows on the second display of the second electronic device. Therefore, the first electronic device may obtain the direction relationship between the first window and the second window from the second electronic device, so as to determine the distance between the first window, the second window, and the first display accordingly.

According to a seventh aspect, an embodiment of this application provides a multi-screen interaction method, where the method includes: A first electronic device displays a first window and a second window on a first display, where the first window includes first content, and the second window includes second content; the first electronic device receives a first operation, where the first operation is a sliding operation performed on the first display; and the first electronic device sends, in response to the received first operation, target content to a second electronic device that displays a third window including third content and a fourth window including fourth content on a second display, where the target content is the first content and/or the second content.

In the method, the first electronic device may display a plurality of pieces of content in a plurality of windows of the first display, and the second electronic device may also display a plurality of pieces of content in a plurality of windows of the second display. After receiving the sliding operation performed on the first display, the first electronic device may share, with the second display of the second electronic device for display, content displayed in one or more windows on the first display. Therefore, a user only needs to perform the sliding operation on the first display to trigger multi-screen interaction between the first display and the second display. The operation process is simple and smooth, and content displayed on the first display can be selectively shared. This improves convenience and efficiency of multi-screen interaction, and can be applied to more scenarios. In addition, because the first operation that triggers multi-screen interaction is an operation performed on the display, when multi-screen interaction content is content in an application, the application does not need to provide a control entry, and the application does not need to perform adaptation. Therefore, multi-screen interaction difficulty can also be reduced, and multi-screen interaction efficiency can be improved.

In a possible design, that the first electronic device sends, in response to the received first operation, target content to a second electronic device that displays a third window including third content and a fourth window including fourth content on a second display includes: sending the first content to the second electronic device when the first electronic device determines that a start contact of the first operation on the first display is located only in the first window; or sending the second content to the second electronic device when the first electronic device determines that a start contact of the first operation on the first display is located only in the second window; or sending the first content and the second content to the second electronic device when the first electronic device determines that a start contact of the first operation on the first display is located in the first window and the second window.

In the method, the user may select, by performing the same sliding operation at different positions, content for multi-screen interaction. This has high flexibility, can meet various requirements of the user, and has high use experience.

In a possible design, the method further includes: The first electronic device indicates the second electronic device to display the target content in a target window, where the target window is the third window or the fourth window.

In the method, the first electronic device may selectively share the content displayed on the first display with a specific window on the second display while ensuring convenience of a user operation. Therefore, in addition to improving convenience and efficiency of multi-screen interaction, this solution can also be applicable to more scenarios, meet diversified interaction requirements of a user, and further improve user experience.

In a possible design, that the first electronic device indicates the second electronic device to display the target content in a target window includes: When the first electronic device determines that a distance between the third window and the first display is greater than a distance between the fourth window and the first display, and the first operation meets a first specified condition and/or a second specified condition, indicating the second electronic device to display the target content in the third window; or when the first electronic device determines that a distance between the third window and the first display is greater than a distance between the fourth window and the first display, and the first operation meets a first specified condition and/or a third specified condition, indicating the second electronic device to display the target content in the fourth window, where the first specified condition includes: an included angle between a sliding direction of the first operation and a first candidate direction is less than a specified first angle threshold, where the first candidate direction indicates a direction from a position of the first display to a position of the second display; the second specified condition is: a sliding speed is greater than or equal to a specified first threshold, or a sliding acceleration is greater than or equal to a specified second threshold, or a hand-leaving speed is greater than or equal to a specified third threshold; and the third specified condition is: the sliding speed is less than the specified first threshold and is greater than or equal to a specified fourth threshold, or the sliding acceleration is less than the specified second threshold and is greater than or equal to a specified fifth threshold, or the hand-leaving speed is less than the specified third threshold and is greater than or equal to a specified sixth threshold.

In the method, the first electronic device may define value ranges of different levels for values of the speed/acceleration/hand-leaving speed at which the user performs the sliding operation, and correspond the value ranges of the different levels to windows at different distances from the first display. When it is detected that the speed/acceleration/hand-leaving speed at which the user performs the sliding operation falls within a maximum value range, the first electronic device may share the content on the first display with a window that is on the second display and that is far away from the first display; and when it is detected that the speed/acceleration/hand-leaving speed at which the user performs the sliding operation falls within a second largest value range, the first electronic device may share the content on the first display with a window that is on the second display and that is close to the first display, so that an effect of selectively performing cross-screen interaction is implemented.

In a possible design, that the first electronic device determines that a distance between the third window and the first display is greater than a distance between the fourth window and the first display includes: The first electronic device determines a first target direction corresponding to the third window, where the first target direction indicates a direction from the third window to the fourth window; and when the first electronic device determines that an included angle between the first target direction and the first candidate direction is greater than a specified first angle threshold, determines that the distance between the third window and the first display is greater than the distance between the fourth window and the first display.

In a possible design, that the first electronic device determines that a distance between the third window and the first display is greater than a distance between the fourth window and the first display includes: The first electronic device determines a first target direction corresponding to the third window, where the first target direction indicates a direction from the third window to the fourth window; the first electronic device determines, based on the first target direction, a second target direction corresponding to the fourth window, where the second target direction indicates a direction from the fourth window to the third window; and when the first electronic device determines that an included angle between the first target direction and the first candidate direction is greater than an included angle between the second target direction and the first candidate direction, the first electronic device determines that the distance between the third window and the first display is greater than the distance between the fourth window and the first display.

In a possible design, that the first electronic device determines a first target direction corresponding to the first window includes: The first electronic device receives first indication information sent by the second electronic device, where the first indication information indicates the first target direction.

In a possible design, the method further includes: When the target content is the first content, the first electronic device obtains the third content from the second electronic device; and the first electronic device displays the third content in the first window.

In a possible design, the method further includes: The first electronic device displays fourth content in the first window when the target content is the first content, where the fourth content is specified content or content displayed in the first window before the first electronic device displays the first content; or the first electronic device displays only the second content on the first display.

In a possible design, that the second electronic device displays the target content on the second display includes: The second electronic device displays, on the second display, a third window including the third content, a fourth window including the fourth content, and a fifth window including the target content, where the third window, the fourth window, and the fifth window are located in different areas of the second display, or the fifth window covers the third window and/or the fourth window.

In a possible design, the fifth window displayed on the second display is a window in a floating window format.

In a possible design, in the methods according to the third aspect to the seventh aspect, the first display and the second display are in a relatively static state.

In the method, when the first display and the second display are in the relatively static state, the first electronic device may pre-obtain and save a direction from the first display to the second display, and may subsequently determine, based on the direction and the user operation, whether the display selected by the user to perform multi-screen interaction is the second display or a specific window in the second display.

In a possible design, in the methods according to the third aspect to the seventh aspect, the first display and the second display are displays disposed in a same head unit cockpit.

In the method, the displays in the head unit cockpit are generally in the non-relatively static state. Therefore, the first electronic device may obtain a direction relationship between the displays in the head unit cockpit in advance, and further determine, based on the user operation and the direction relationship between the displays, the display selected by the user for multi-screen interaction, so that multi-screen interaction between different displays in the head unit cockpit is implemented.

In a possible design, in the methods according to the third aspect to the seventh aspect, the first electronic device and the second electronic device are a same vehicle-mounted device in the head unit cockpit; or the first electronic device and the second electronic device are different display devices that belong to a same vehicle-mounted device in the head unit cockpit; or the first electronic device and the second electronic device are different vehicle-mounted devices in the head unit cockpit.

In the method, the first display and the second display may be different displays controlled by a same device, or may be different displays controlled by different devices. Multi-screen interaction in a plurality of scenarios may be implemented with reference to the foregoing method.

In a possible design, in the methods according to the third aspect to the seventh aspect, the first display may be a non-foldable screen, or may be a foldable screen in an expanded state.

In the method, the first display may be displays of a plurality of forms, and flexibility is high.

In a possible design, in the methods according to the third aspect to the seventh aspect, the second display may be a non-foldable screen, or may be a foldable screen in an expanded state.

In the method, the first display may be displays of a plurality of forms, and flexibility is high.

According to an eighth aspect, this application provides an electronic device. The electronic device includes a display, a memory, and one or more processors, where the memory is configured to store computer program code, and the computer program code includes computer instructions; and when the computer instructions are executed by one or more processors, the electronic device is enabled to perform the method described in any one of the first aspect to the seventh aspect or any possible design of any one of the first aspect to the seventh aspect.

According to a ninth aspect, this application provides a multi-screen interaction system. The system includes a first electronic device and a second electronic device, where the first electronic device is configured to perform the method performed by the first electronic device in the method according to any one of the first aspect to the seventh aspect, and the second electronic device is configured to perform the method performed by the second electronic device in the method according to any one of the first aspect to the seventh aspect.

According to a tenth aspect, this application provides a computer-readable storage medium. The computer-readable storage medium stores a computer program. When the computer program is run on a computer, the computer is enabled to perform the method described in any one of the first aspect to the seventh aspect or any possible design of any one of the first aspect to the seventh aspect.

According to an eleventh aspect, this application provides a computer program product. The computer program product includes a computer program or instructions. When the computer program or the instructions is/are run on a computer, the computer is enabled to perform the method described in any one of the first aspect to the seventh aspect or any possible design of any one of the first aspect to the seventh aspect.

For beneficial effects of the fourth aspect, refer to descriptions of beneficial effects of the third aspect. For beneficial effects of the sixth aspect, refer to descriptions of beneficial effects of the fifth aspect. For beneficial effects of the seventh aspect, refer to descriptions of beneficial effects of the third aspect and the fifth aspect. For beneficial effects of the eighth aspect to the eleventh aspect, refer to descriptions of beneficial effects of the first aspect to the seventh aspect. Details are not described herein.

### BRIEF DESCRIPTION OF DRAWINGS

FIG. 1 is a diagram of an architecture of a possible system to which a solution according to an embodiment of this application is applicable;
FIG. 2 is a diagram of a hardware architecture of an electronic device according to an embodiment of this application;
FIG. 3 is a diagram of a scenario in which a display is disposed in a head unit cockpit according to an embodiment of this application;
FIG. 4 is a diagram of a method for determining a target display based on a user operation according to an embodiment of this application;
FIG. 5 is a diagram of a hot zone display interface according to an embodiment of this application;
FIG. 6a is a diagram of a method for determining a candidate display based on a user operation according to an embodiment of this application;
FIG. 6b is a diagram of a hot zone display interface according to an embodiment of this application;
FIG. 7a-1 and FIG. 7a-2 are a diagram of display interfaces in a multi-screen interaction process according to an embodiment of this application;
FIG. 7b-1, FIG. 7b-2, and FIG. 7b-3 are a diagram of display interfaces in a multi-screen interaction process according to an embodiment of this application;

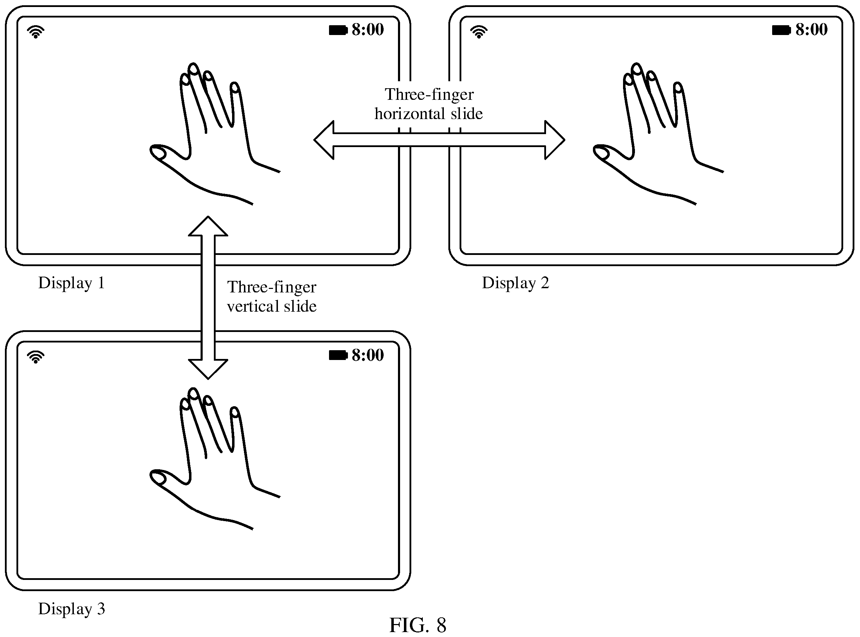

FIG. 8 is a diagram of a sliding operation according to an embodiment of this application;

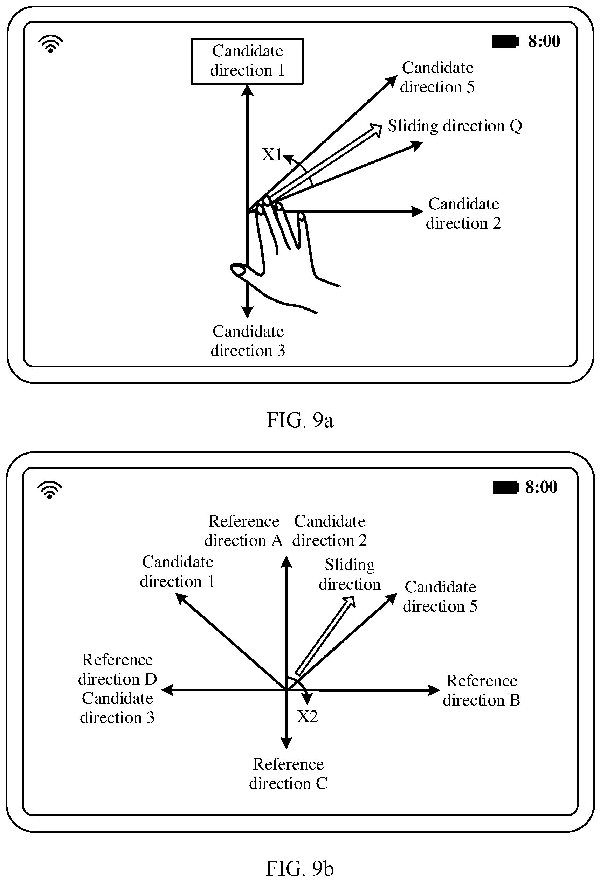

FIG. 9a is a diagram of a method for determining a target display based on a user operation according to an embodiment of this application;
FIG. 9b is a diagram of a method for determining a target display based on a user operation according to an embodiment of this application;

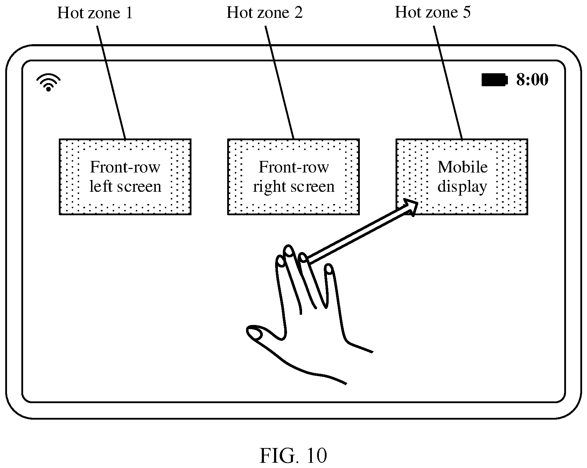

FIG. 10 is a diagram of a hot zone display interface according to an embodiment of this application;

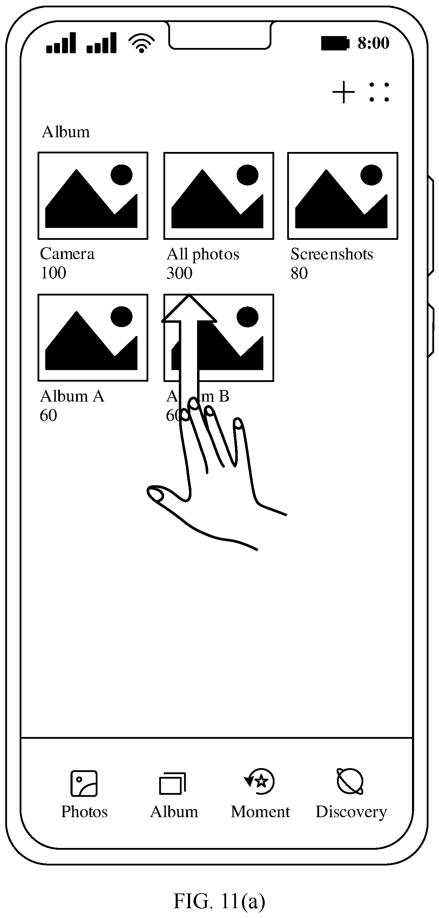

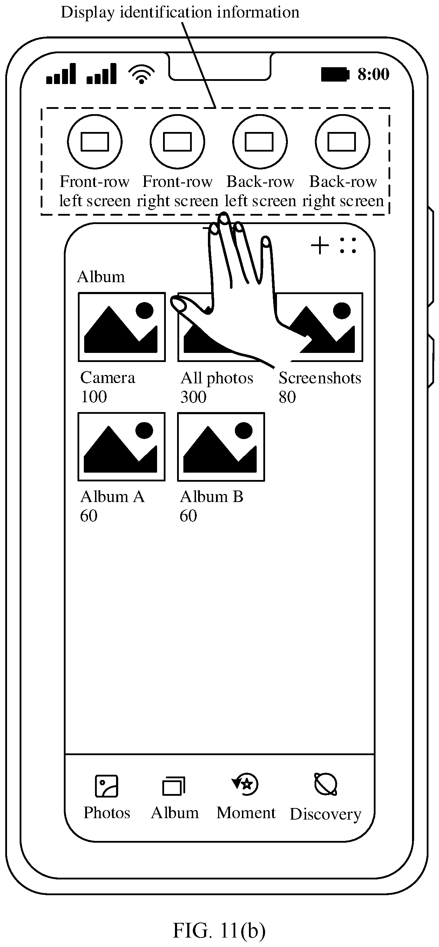

FIG. 11(a) and FIG. 11(b) are a diagram of multi-screen interaction triggered by a sliding operation according to an embodiment of this application;

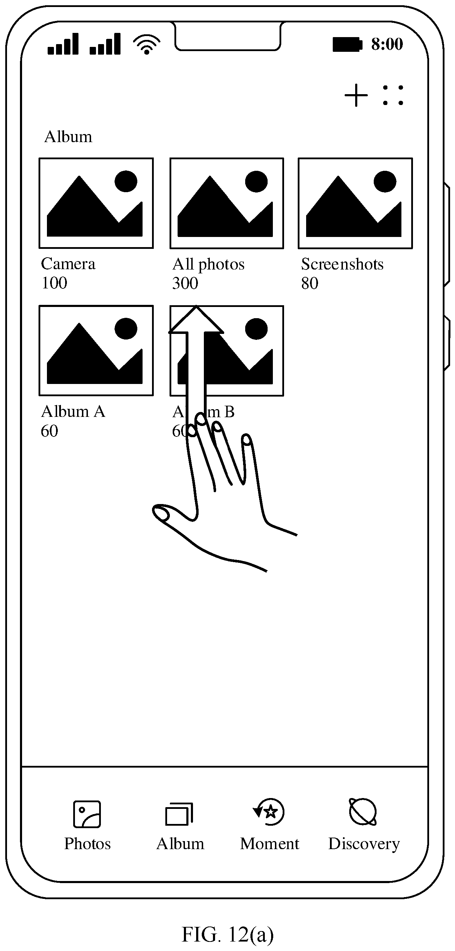

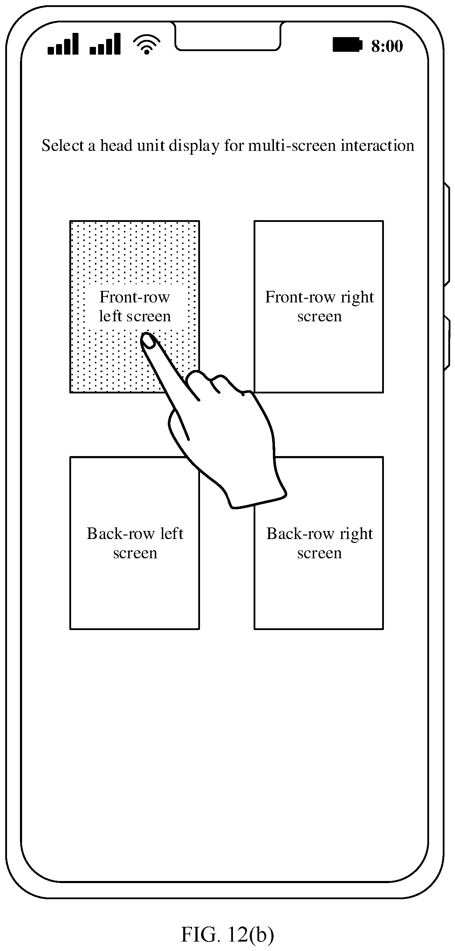

FIG. 12(a) and FIG. 12(b) are a diagram of multi-screen interaction triggered by a sliding operation according to an embodiment of this application;

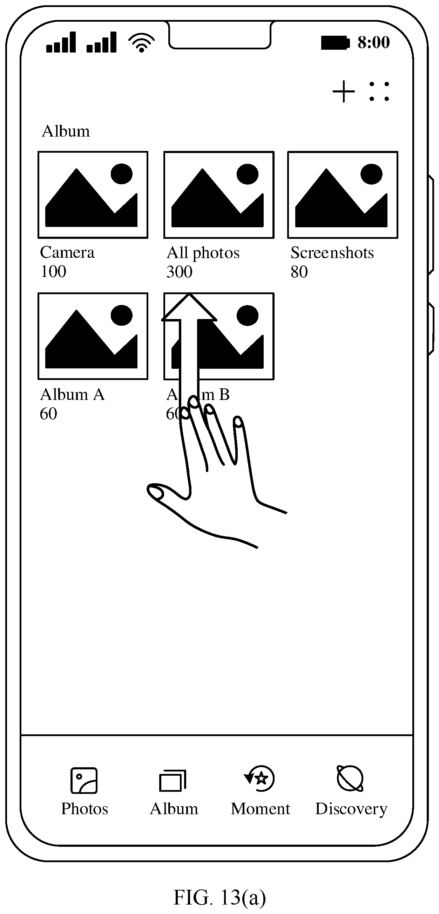

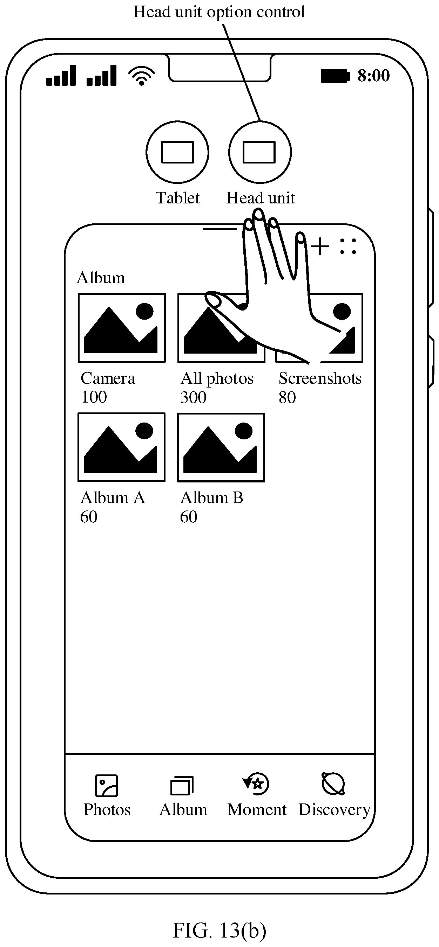

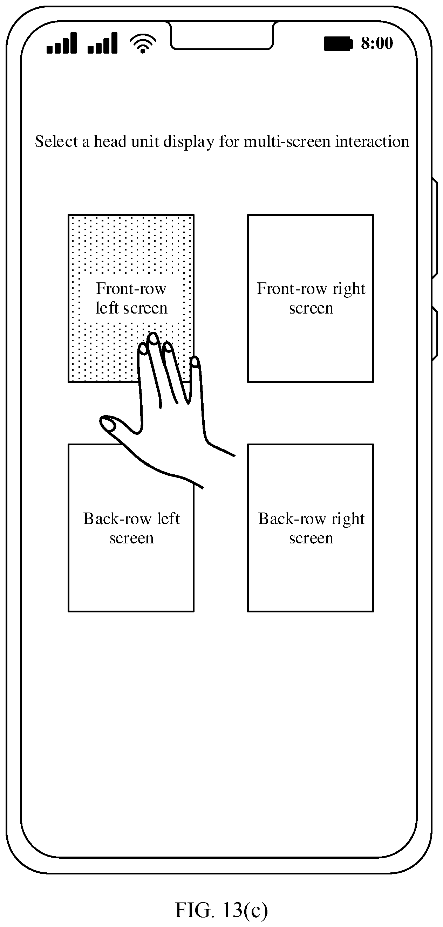

FIG. 13(a), FIG. 13(b), and FIG. 13(c) are a diagram of multi-screen interaction triggered by a sliding operation according to an embodiment of this application;

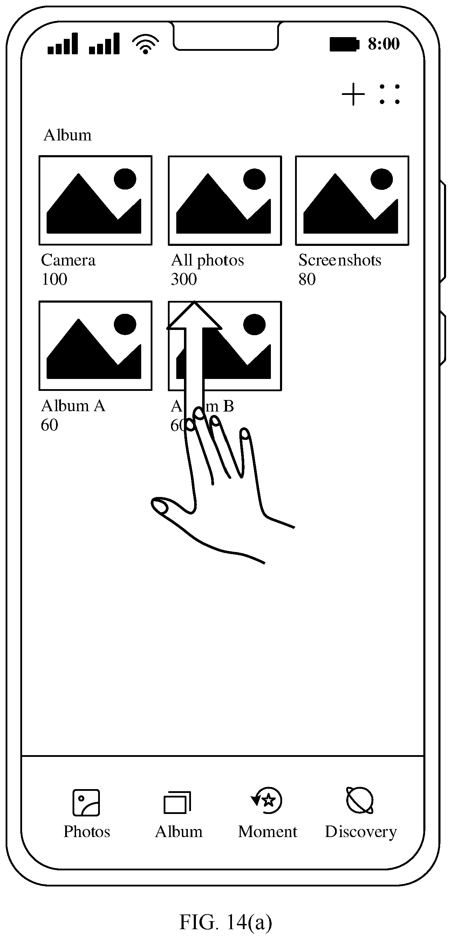

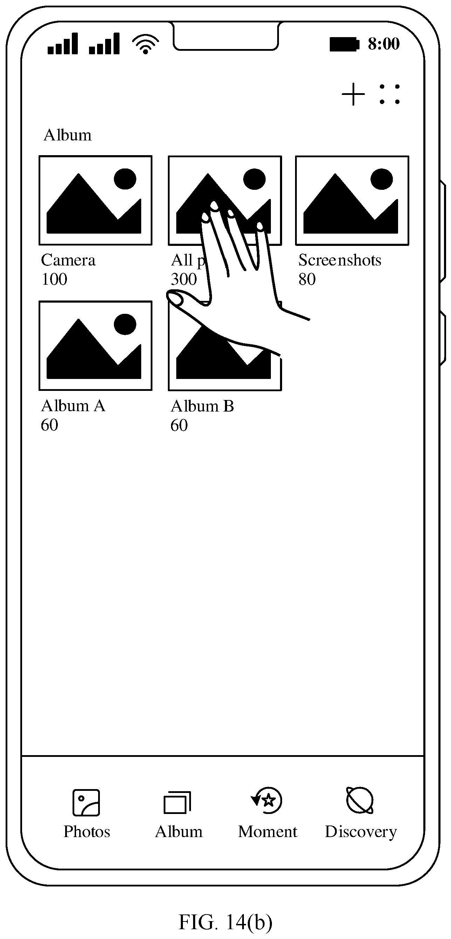

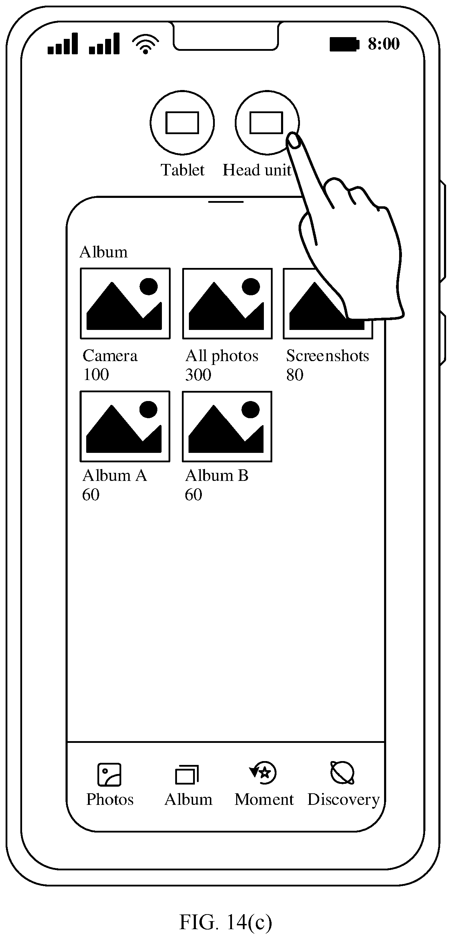

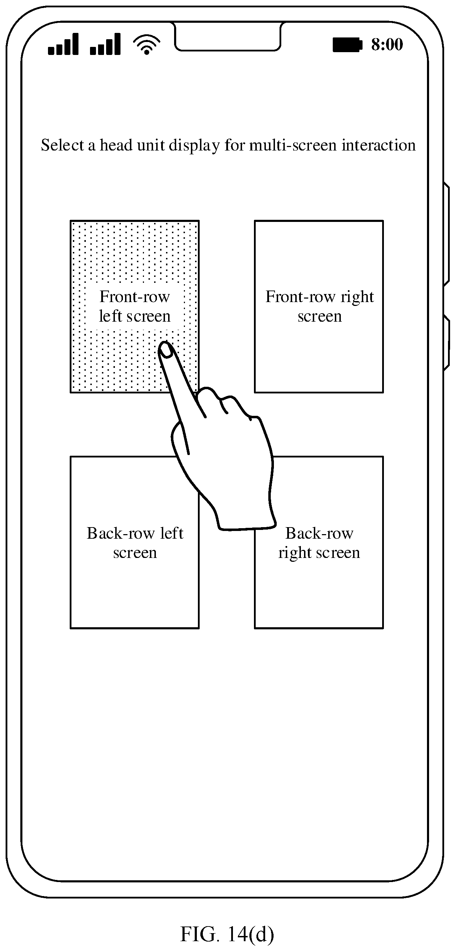

FIG. 14(a), FIG. 14(b), FIG. 14(c), and FIG. 14(d) are a diagram of multi-screen interaction triggered by a sliding operation according to an embodiment of this application;
FIG. 15a-1 and FIG. 15a-2 are a diagram of display interfaces in a multi-screen interaction process according to an embodiment of this application;
FIG. 15b-1, FIG. 15b-2, and FIG. 15b-3 are a diagram of display interfaces in a multi-screen interaction process according to an embodiment of this application;

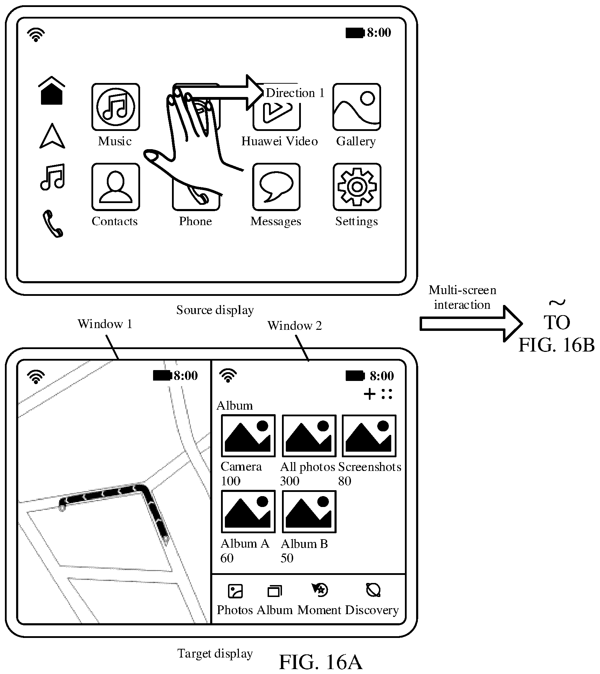

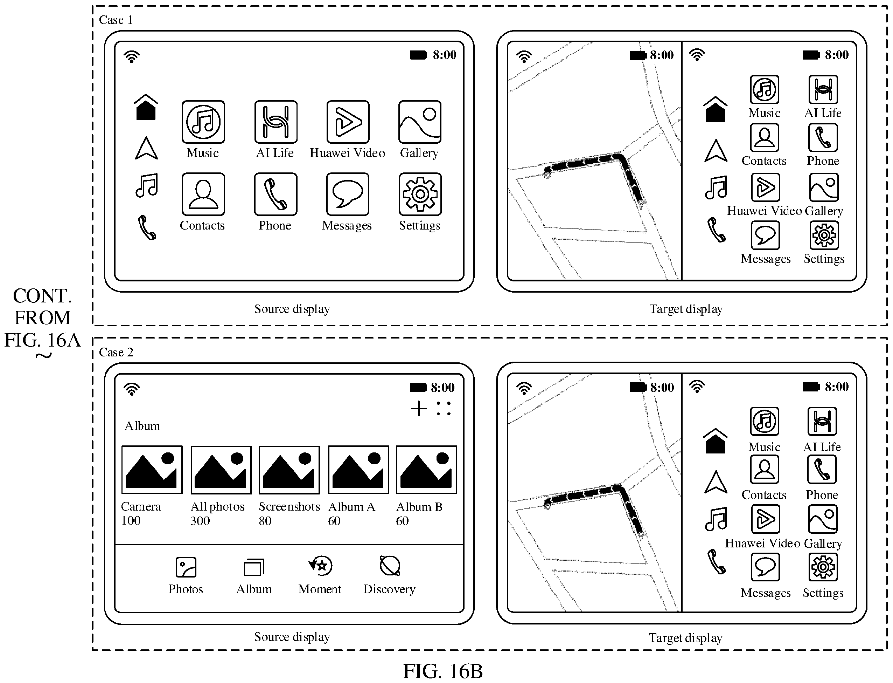

FIG. 16A and FIG. 16B are a diagram of display interfaces in a multi-screen interaction process according to an embodiment of this application;

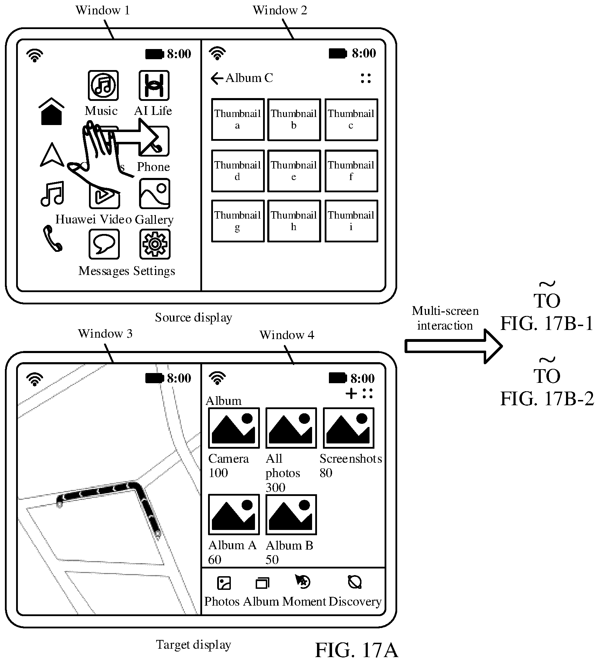

FIG. 17A, FIG. 17B-1, and FIG. 17B-2 are a diagram of display interfaces in a multi-screen interaction process according to an embodiment of this application;

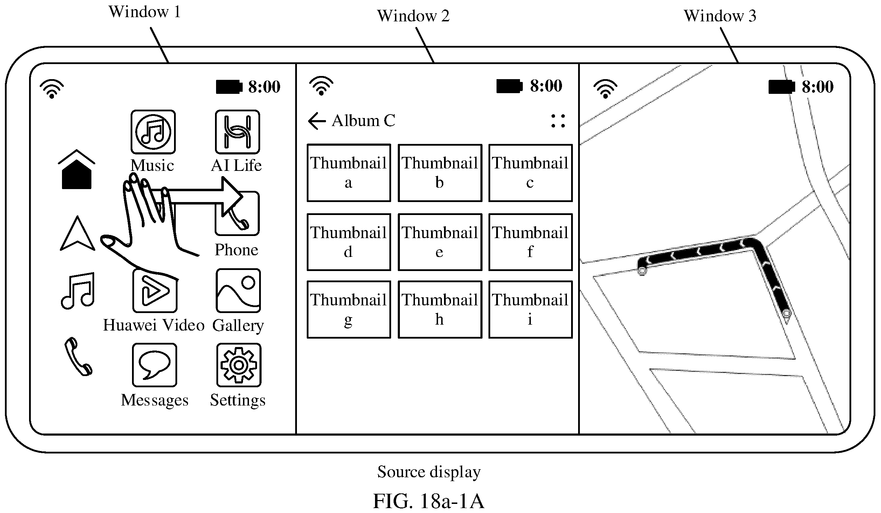

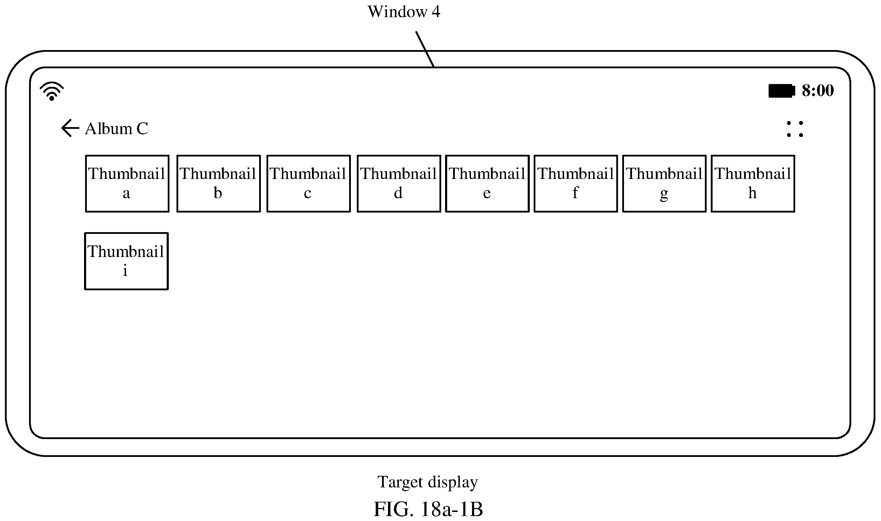

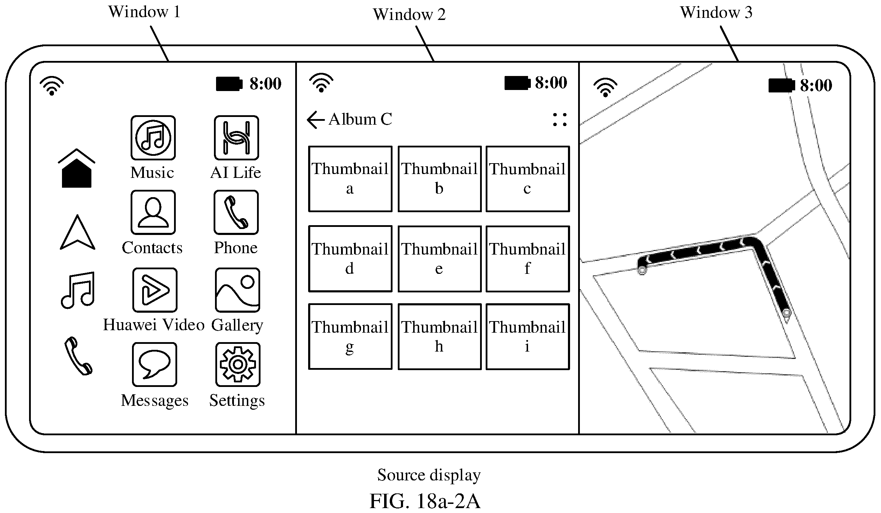

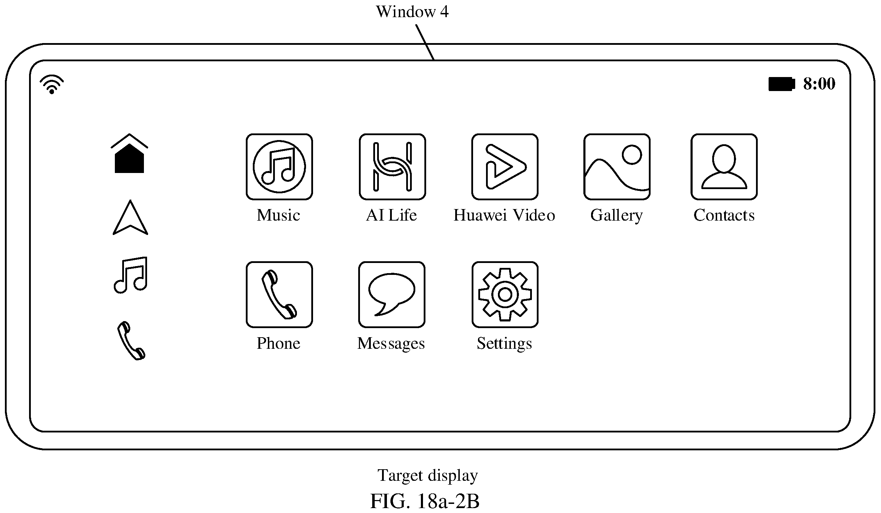

FIG. 18a-1A, FIG. 18a-1B, FIG. 18a-2A, and FIG. 18a-2B are a diagram of display interfaces in a multi-screen interaction process according to an embodiment of this application;

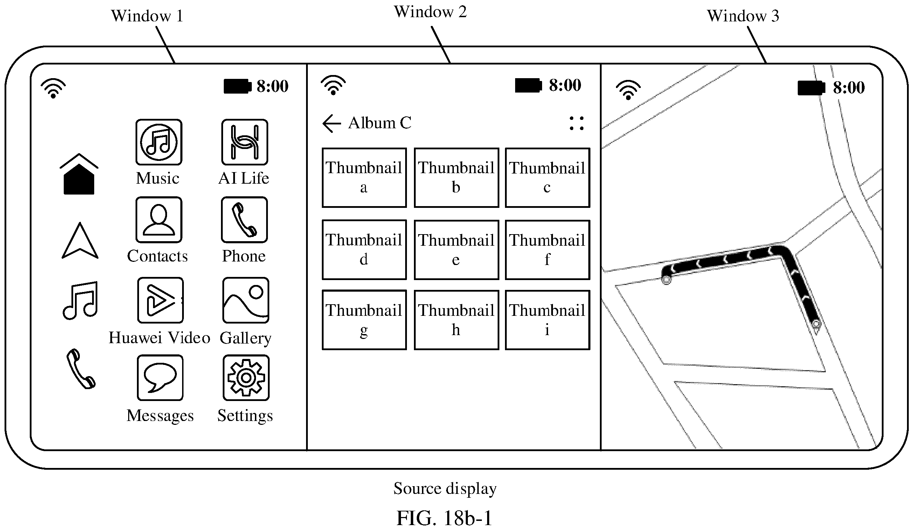

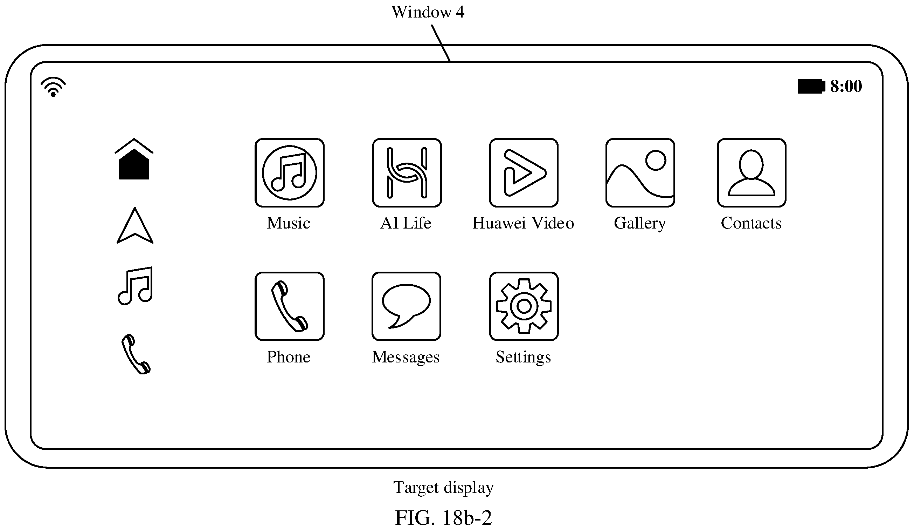

FIG. 18b-1 and FIG. 18b-2 are a diagram of display interfaces in a multi-screen interaction process according to an embodiment of this application;
FIG. 19a-1, FIG. 19a-2A, and FIG. 19a-2B are a diagram of display interfaces in a multi-screen interaction process according to an embodiment of this application;
FIG. 19b-1, FIG. 19b-2, and FIG. 19b-3 are a diagram of display interfaces in a multi-screen interaction process according to an embodiment of this application;

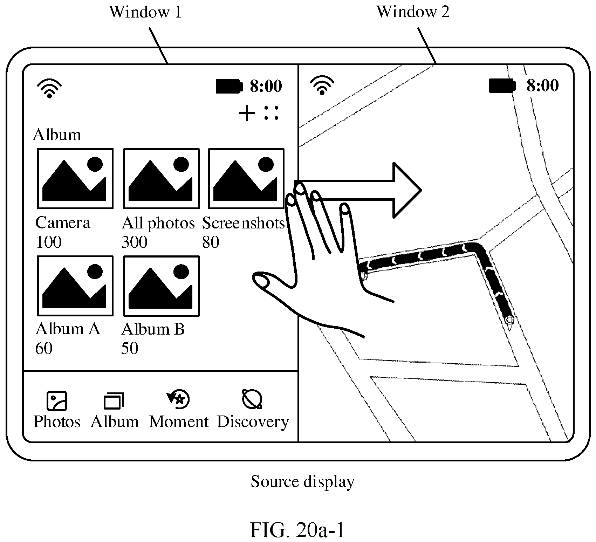

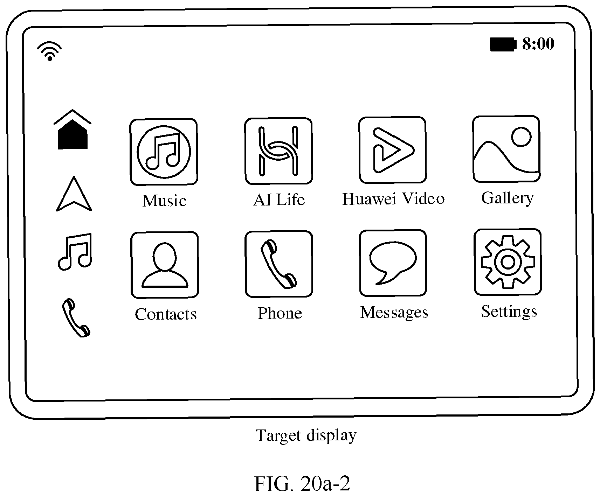

FIG. 20a-1 and FIG. 20a-2 are a diagram of display interfaces in a multi-screen interaction process according to an embodiment of this application;

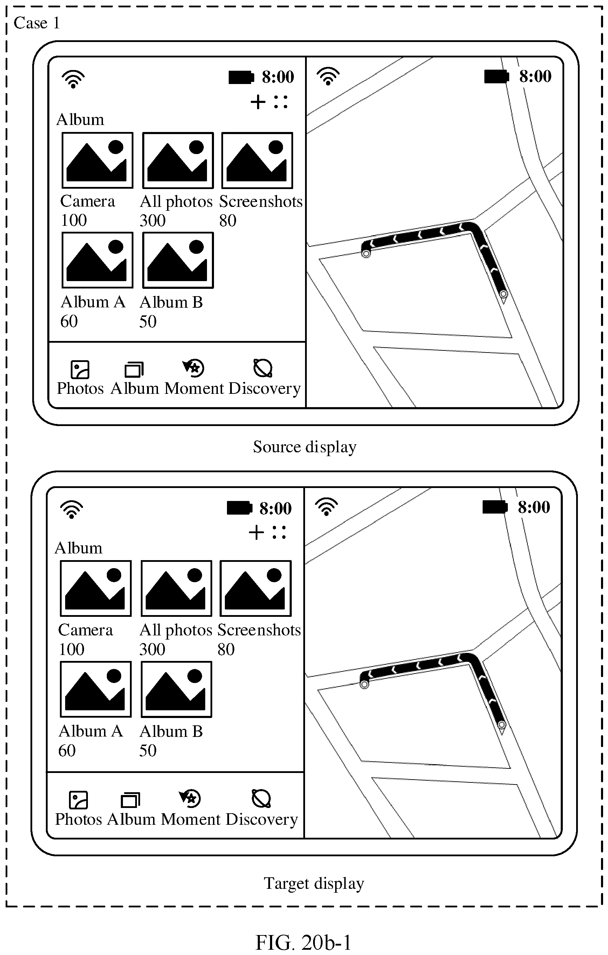

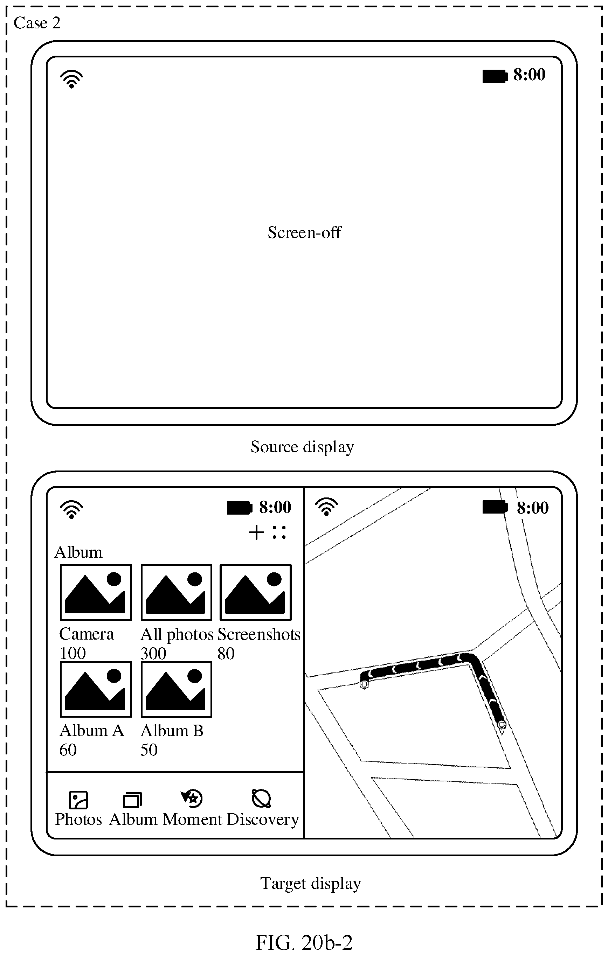

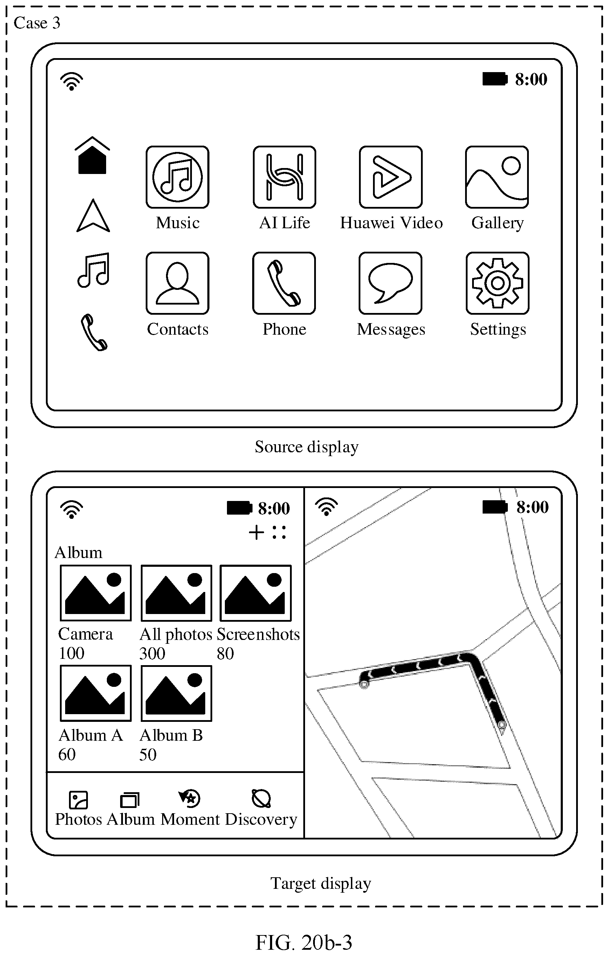

FIG. 20b-1, FIG. 20b-2, and FIG. 20b-3 are a diagram of display interfaces in a multi-screen interaction process according to an embodiment of this application;

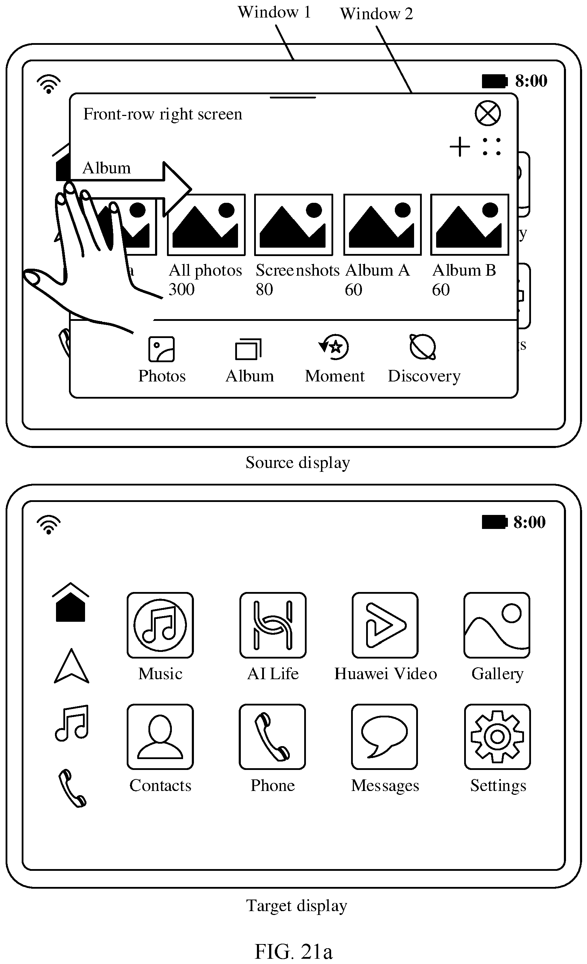

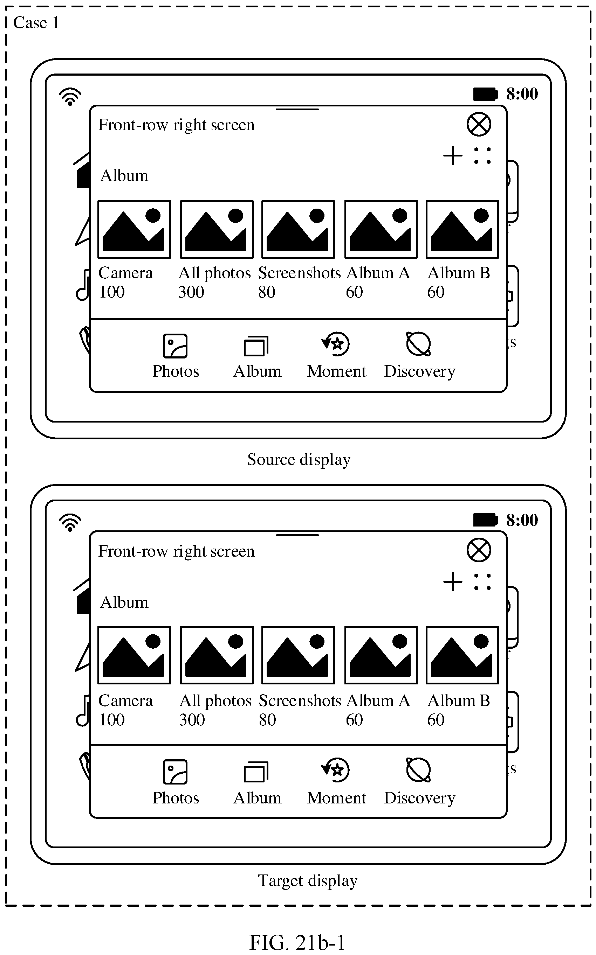

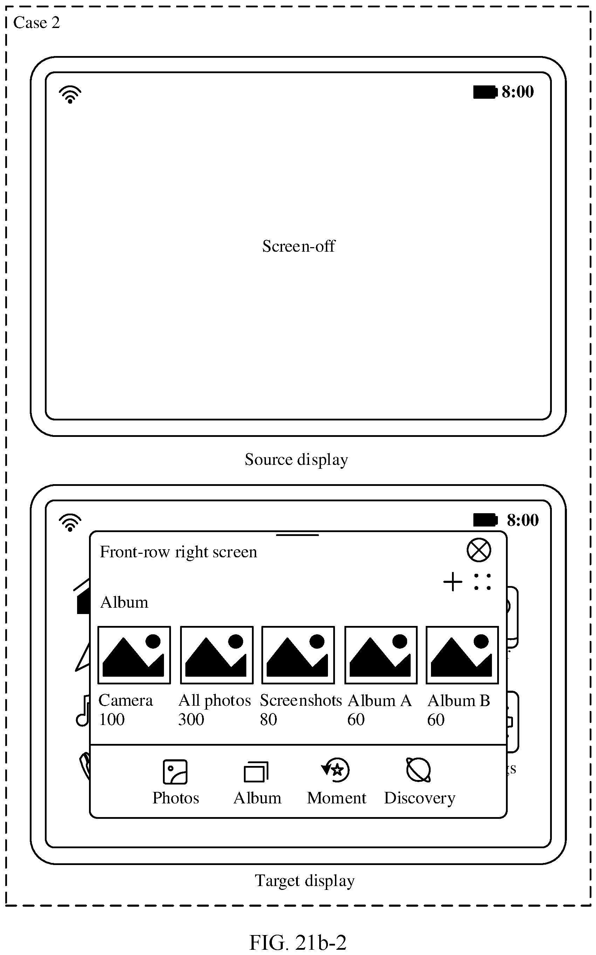

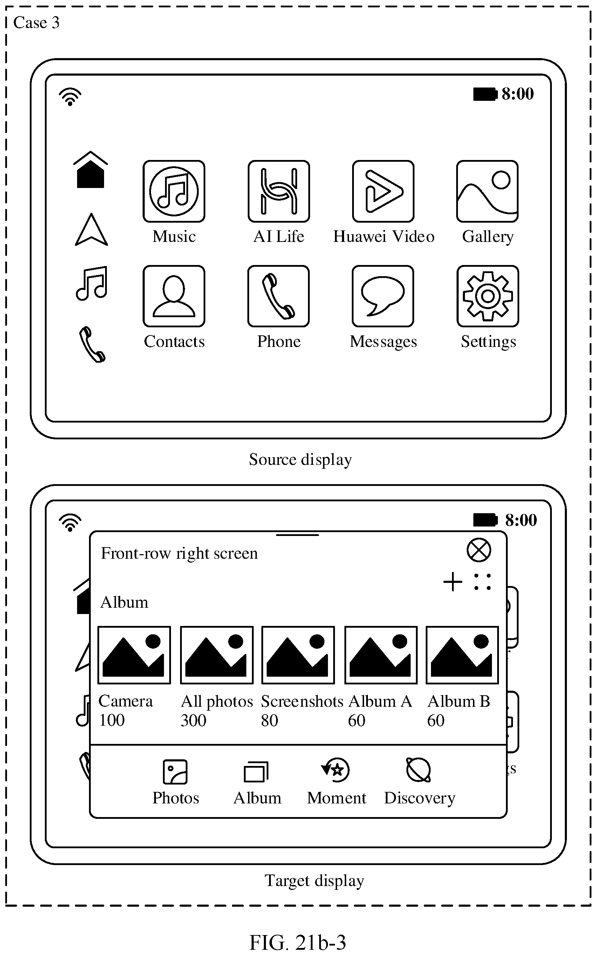

FIG. 21a is a diagram of display interfaces in a multi-screen interaction process according to an embodiment of this application;
FIG. 21b-1, FIG. 21b-2, and FIG. 21b-3 are a diagram of display interfaces in a multi-screen interaction process according to an embodiment of this application;

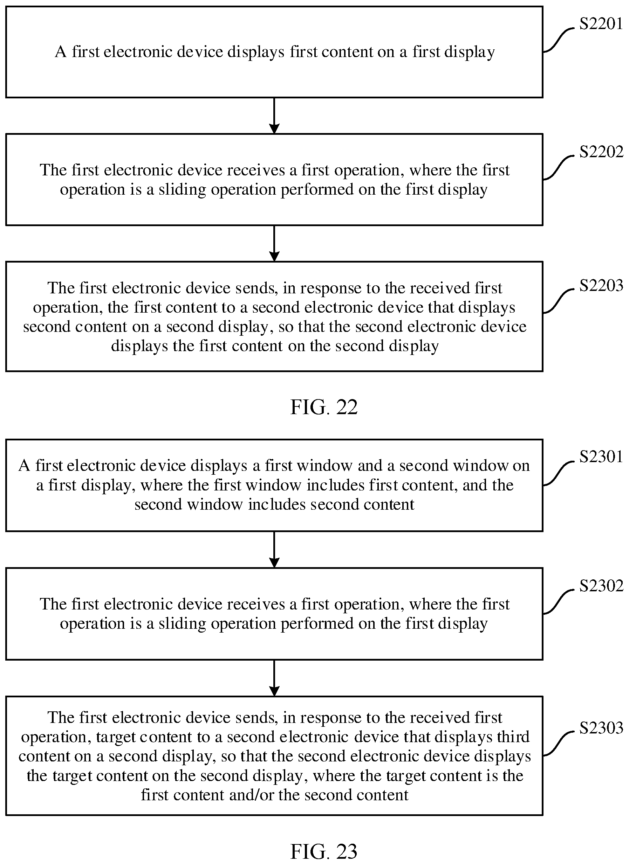

FIG. 22 is a diagram of a multi-screen interaction method according to an embodiment of this application;
FIG. 23 is a diagram of a multi-screen interaction method according to an embodiment of this application;

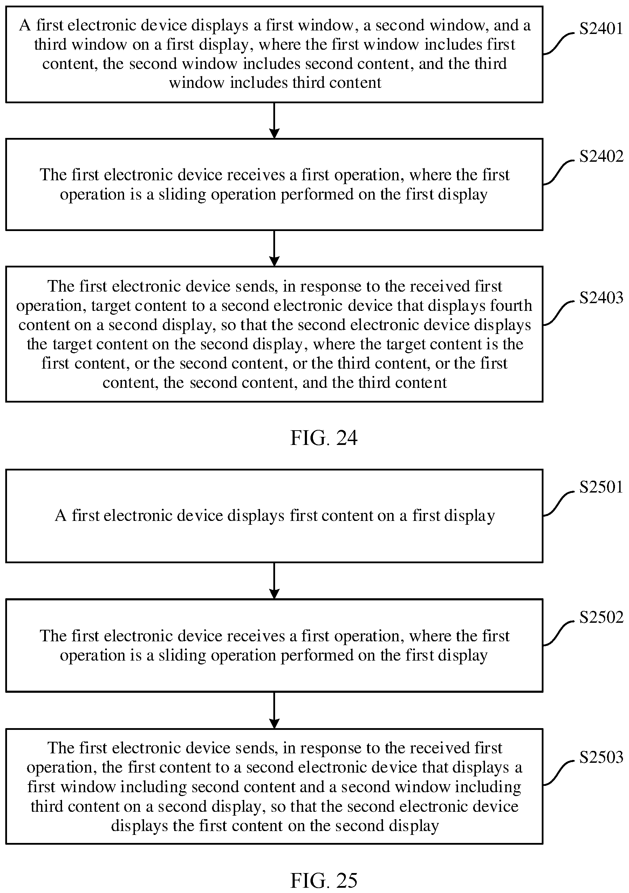

FIG. 24 is a diagram of a multi-screen interaction method according to an embodiment of this application;
FIG. 25 is a diagram of a multi-screen interaction method according to an embodiment of this application;

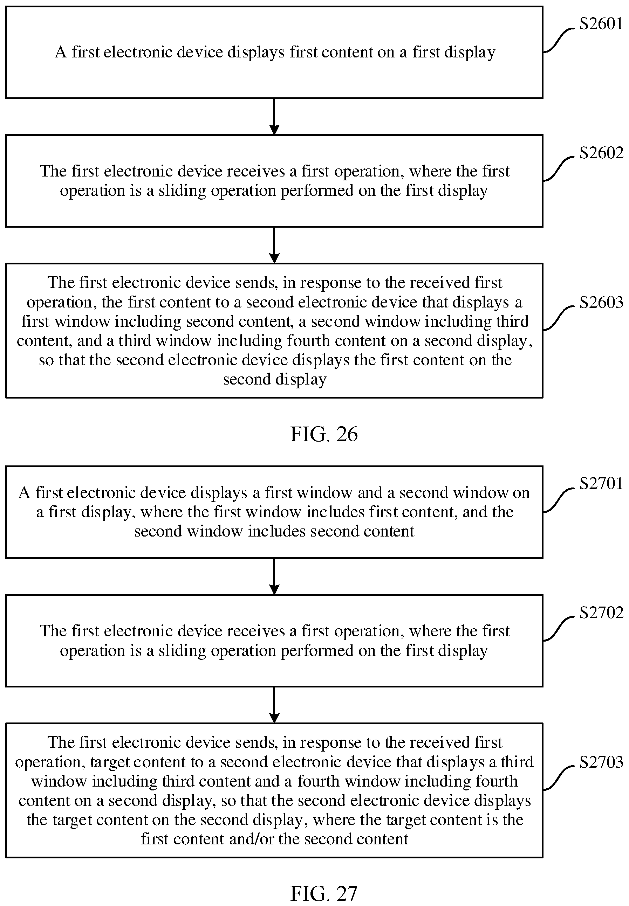

FIG. 26 is a diagram of a multi-screen interaction method according to an embodiment of this application;
FIG. 27 is a diagram of a multi-screen interaction method according to an embodiment of this application; and

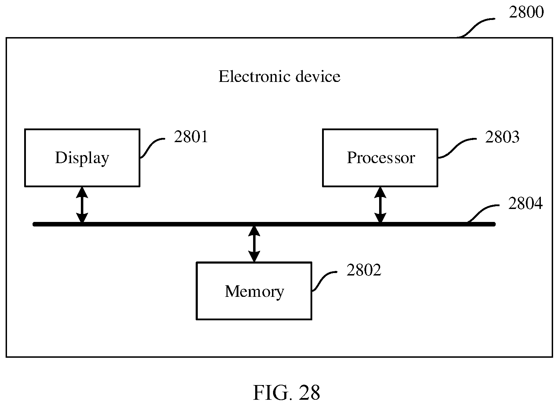

FIG. 28 is a diagram of a structure of an electronic device according to an embodiment of this application.

### DESCRIPTION OF EMBODIMENTS

To make objectives, technical solution, and advantages of embodiments of this application clearer, the following further describes embodiments of this application in detail with reference to the accompanying drawings. The terms "first" and "second" below in descriptions of embodiments of this application are merely used for a description purpose, and shall not be understood as an indication or implication of relative importance or implicit indication of a quantity of indicated technical features. Therefore, a feature limited by "first" or "second" may explicitly or implicitly include one or more features.

For ease of understanding, descriptions of concepts related to this application are provided as examples for reference, as shown in the following:

An electronic device may be a device with a display. In some embodiments of this application, the electronic device may further have a wireless connection function and the like.

In some embodiments of this application, the electronic device may be a portable device, for example, a mobile phone, a tablet computer, a wearable device (for example, a watch, a band, a helmet, or a headset) with a wireless communication function, an in-vehicle terminal device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), a smart home device (for example, a smart television or a smart speaker), a smart robot, a workshop device, a wireless terminal in self driving (self driving), a wireless terminal in remote surgery (remote medical surgery), a wireless terminal in a smart grid (smart grid), a wireless terminal in transportation safety (transportation safety), a wireless terminal in a smart city (smart city), a wireless terminal in a smart home (smart home), or a flight device (for example, a smart robot, a hot air balloon, an uncrewed aerial vehicle, or an aircraft).

The wearable device is a portable device that can be directly worn by a user or integrated into clothes or accessories of the user.

In some embodiments of this application, the electronic device may alternatively be a portable terminal device that further includes another function, for example, a personal digital assistant function and/or a music player function. An example embodiment of the portable terminal device includes but is not limited to a portable terminal device using iOS^{®}, Android^{®}, Microsoft^{®}, or another operating system. Alternatively, the portable terminal device may be another portable terminal device, for example, a laptop computer (laptop) with a touch-sensitive surface (for example, a touch panel). It should be further understood that in some other embodiments of this application, the electronic device may alternatively be a desktop computer with a touch-sensitive surface (for example, a touch panel), instead of the portable terminal device.

It should be understood that in embodiments of this application, "at least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists. A and B may be singular or plural. The character "/" generally indicates an "or" relationship between the associated objects. "At least one of the following items (pieces)" or a similar expression thereof indicates any combination of these items, including a single item or any combination of a plurality of items. For example, at least one of a, b, or c may represent: a, b, c, a and b, a and c, b and c, or a, b and c, where a, b, and c may be singular or plural.

Currently, in a scenario in which a plurality of displays are disposed in a head unit, a plurality of passengers or a same passenger has a requirement for multi-screen interaction (or referred to as cross-screen interaction). For example, a passenger has a requirement for sharing content displayed on one display in the head unit with another display in the head unit for display, or a requirement for sharing content displayed on a display in the head unit with a display of a mobile device for display, or a requirement for sharing content displayed on a display of a mobile device with a display in the head unit for display.

Currently, multi-screen interaction in the head unit is mainly implemented by using the following solutions: An in-application sharing entry or a system-level sharing entry may be displayed on a display used by a user. An operation performed by the user on the sharing entry may trigger display of a cross-screen control interface. The interface includes identifiers of a plurality of displays. The user may touch and hold an identifier of one display and drag the identifier to another display, to share content displayed on the one display with the another display. After the sharing, content displayed on the two displays is the same. In some scenarios, the user may alternatively trigger display of the cross-screen control interface by performing a specified operation (for example, pressing the display with a plurality of fingers).

Multi-screen interaction between the display in the head unit and the display of the mobile device may be implemented by using a method the same as that for multi-screen interaction in the head unit. Alternatively, sharing the content on the display in the head unit with the display of the mobile device may be implemented by using a method the same as that for multi-screen interaction in the head unit. When the content on the display of the mobile device is shared with the head unit, the mobile device may provide a corresponding control entry. After the user performs an operation on the control entry, the mobile device displays information about an optional display in the head unit. After the user selects a display from the optional display, the mobile device shares the content with the display selected by the user.

In conclusion, in a current multi-screen interaction implementation solution, the user completes a multi-screen interaction process only after a plurality of operations, and cannot directly implement multi-screen interaction in one step. Therefore, the multi-screen interaction process is not convenient enough, and efficiency is low. In addition, a third-party application needs to adapt to a sharing-entry function to provide the sharing entry in the application. Therefore, to implement multi-screen interaction, adaptation processing of the third-party application needs to be performed additionally, and this is not conducive to convenient and efficient multi-screen interaction. Consequently, convenience of the current multi-screen interaction method is low, and user experience is poor.

In view of this, embodiments of this application provide a multi-screen interaction method and an electronic device. In this solution, multi-screen interaction can be performed conveniently and quickly, convenience of multi-screen interaction is improved, and user experience is further improved.

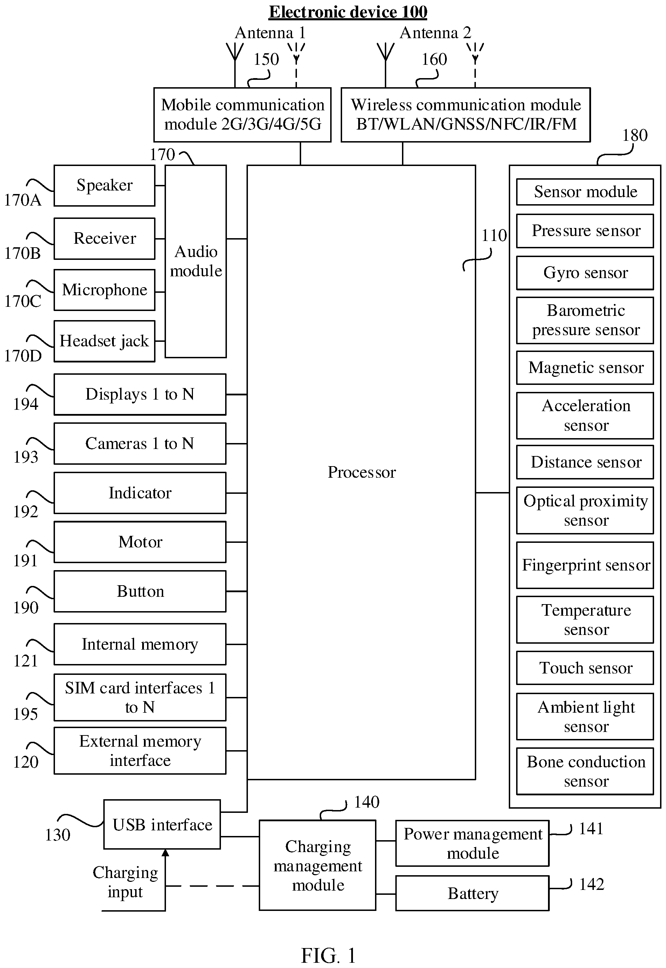

Refer to FIG. 1. The following describes a structure of an electronic device to which the method provided in an embodiment of this application is applicable.

As shown in FIG. 1, an electronic device 100 may include a processor 110, an external memory interface 120, an internal memory 121, a USB interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, an SIM card interface 195, and the like.

The sensor module 180 may include a gyro sensor, an acceleration sensor, an optical proximity sensor, a fingerprint sensor, a touch sensor, a temperature sensor, a pressure sensor, a distance sensor, a magnetic sensor, an ambient light sensor, a barometric pressure sensor, a bone conduction sensor, and the like.

It may be understood that the electronic device 100 shown in FIG. 1 is merely an example, and does not constitute a limitation on the electronic device. In addition, the electronic device may have more or fewer components than those shown in the figure, or may combine two or more components, or may have different component configurations. The various components shown in FIG. 1 may be implemented in hardware including one or more signal processing circuits and/or application-specific integrated circuits, software, or a combination of hardware and software.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors. The controller may be a nerve center and a command center of the electronic device 100. The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data that have/has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

Execution of the multi-screen interaction method provided in embodiments of this application may be controlled by the processor 110 or completed by invoking another component, for example, invoking a processing program in this embodiment of this application stored in the internal memory 121, or invoking, by using the external memory interface 120, a processing program in this embodiment of this application stored in a third-party device, to control the wireless communication module 160 to perform data communication with another device, to implement intelligence and convenience of the electronic device 100, and improve user experience. The processor 110 may include different components. For example, when a CPU and a GPU are integrated, the CPU and the GPU may cooperate with each other to perform the multi-screen interaction method provided in embodiments of this application. For example, some algorithms in the multi-screen interaction method are executed by the CPU, and some algorithms are executed by the GPU, to obtain high processing efficiency.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1. The display 194 may be configured to display information entered by the user or information provided to the user and various graphical user interfaces (graphical user interfaces, GUIs). For example, the display 194 may display a photo, a video, a web page, a file, or the like.

In this embodiment of this application, the display 194 may be an integrated flexible display, or may be a spliced display including two rigid screens and one flexible screen located between the two rigid screens.

The camera 193 (a front-facing camera or a rear-facing camera, or a camera that can serve as a front-facing camera and a rear-facing camera) is configured to capture a static image or a video. Usually, the camera 193 may include a photosensitive element, for example, a lens group and an image sensor. The lens group includes a plurality of lenses (convex lens or concave lens), and is configured to: collect an optical signal reflected by a to-be-shot object, and transfer the collected optical signal to the image sensor. The image sensor generates an original image of the to-be-shot object based on the optical signal.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store code of an operating system, an application (for example, a control function), and the like. The data storage area may store data created during use of the electronic device 100.

The internal memory 121 may further store one or more computer programs corresponding to the control algorithm provided in embodiments of this application. The one or more computer programs are stored in the internal memory 121 and are configured to be executed by the one or more processors 110. The one or more computer programs include instructions, and the instructions may be used to perform the steps in the following embodiments.

In addition, the internal memory 121 may include a high-speed random access memory, and may further include a nonvolatile memory, for example, at least one magnetic disk storage component, a flash storage component, or a universal flash storage (universal flash storage, UFS).

Certainly, code of a control algorithm provided in embodiments of this application may alternatively be stored in an external memory. In this case, the processor 110 may run, by using the external memory interface 120, code of a user posture detection algorithm stored in the external memory.

The sensor module 180 may include a gyro sensor, an acceleration sensor, an optical proximity sensor, a fingerprint sensor, a touch sensor, and the like.

The touch sensor is also referred to as a "touch panel". The touch sensor may be disposed on the display 194, and the touch sensor and the display 194 form a touchscreen, which is also referred to as a "touch screen". The touch sensor is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor may alternatively be disposed on a surface of the electronic device 100, and is at a position different from that of the display 194.

For example, the display 194 of the electronic device 100 displays a home screen, and the home screen includes icons of a plurality of applications (for example, a camera application and a Health application). For example, the user may tap an icon of the camera application on the home screen by using the touch sensor, to trigger the processor 110 to start the camera application and turn on the camera 193. The display 194 displays an interface of the camera application, for example, a viewfinder interface.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a solution of wireless communication that is applied to the electronic device 100 and that includes a 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110. In this embodiment of this application, the mobile communication module 150 may be further configured to: exchange information with another device.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio apparatus (which is not limited to the speaker 170A, the receiver 170B, or the like), or displays an image or a video by the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave by the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2. In this embodiment of this application, the wireless communication module 160 is configured to establish a connection to another electronic device to perform data exchange. Alternatively, the wireless communication module 160 may be configured to access an access point device, send a control instruction to another electronic device, or receive data sent by another electronic device.

In addition, the electronic device 100 may implement audio functions, for example, music playing and recording, by using the audio module 170, the speaker 170A, the receiver 170B, the microphone 170C, the headset jack 170D, the application processor, and the like. The electronic device 100 may receive an input of the button 190, and generate a button signal input related to a user setting and function control of the electronic device 100. The electronic device 100 may generate a vibration prompt (for example, an incoming call vibration prompt) by using the motor 191. The indicator 192 of the electronic device 100 may be an indicator light, may be configured to indicate a charging state and a battery level change, and may be further configured to indicate a message, a missed call, a notification, and the like. The SIM card interface 195 in the electronic device 100 is configured to connect to a SIM card. The SIM card may be inserted into the SIM card interface 195 or removed from the SIM card interface 195, to implement contact with or separation from the electronic device 100.

It should be understood that, in actual application, the electronic device 100 may include more or fewer components than those shown in FIG. 1. This is not limited in this embodiment of this application. The electronic device 100 shown in the figure is merely an example, and the electronic device 100 may have more or fewer components than those shown in the figure, may combine two or more components, or may have different component configurations. Various components shown in the figure may be implemented in hardware including one or more signal processing and/or application-specific integrated circuits, software, or a combination of hardware and software.

A software system of the electronic device 100 may use a layered architecture, an event-driven architecture, a microkernel architecture, a micro service architecture, or a cloud architecture. In embodiments of this application, an Android system with a layered architecture is used as an example for describing a software structure of the electronic device.

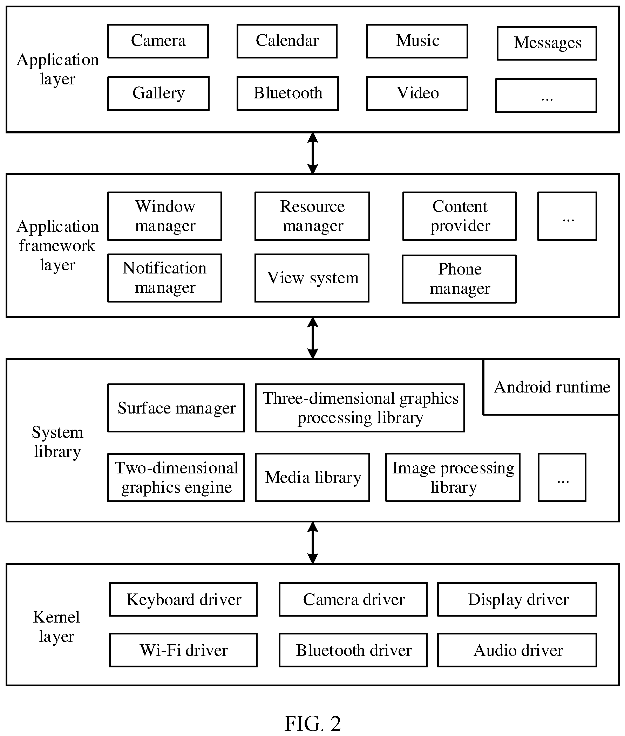

In a layered architecture, software is divided into several layers, and each layer has a clear role and task. The layers communicate with each other through a software interface. As shown in FIG. 2, this software architecture may be divided into four layers: an application layer, an application framework (framework, FWK), an Android runtime and system library, and a Linux kernel layer from top to bottom.

The application layer is the top layer of an operating system, and includes native applications of the operating system, such as Camera, Gallery, Calendar, Bluetooth, Music, Video, and Messages. An application (application, APP) in embodiments of this application is a software program that can implement one or more specific functions. Generally, a plurality of applications may be installed in the electronic device, for example, a camera application, a mailbox application, and a Health application. An application mentioned below may be a system application installed when the electronic device is delivered from the factory, or may be a third-party application downloaded by a user from a network or obtained by the user from another electronic device during use of the electronic device.

Certainly, a developer may compile an application and install the application at the layer. In a possible implementation, the application may be developed by using a Java language, and is completed by invoking an application programming interface (application programming interface, API) provided by an application framework layer. A developer may interact with a bottom layer (for example, a kernel layer) of an operating system through an application framework, to develop an application of the developer.

The application framework layer is an API and a programming framework of the application layer. The application framework layer may include some predefined functions. The application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include information, for example, a file (for example, a document, a video, an image, or an audio) and a text.

The view system includes visual controls, for example, controls that display content, for example, texts, pictures, and documents. The view system may be configured to construct an application. An interface in a display window may include one or more views. For example, a display interface including an SMS message notification icon may include a text display view and an image display view.

The phone manager is configured to provide a communication function of the electronic device. The notification manager enables an application to display notification information in a status bar, and may be configured to convey a notification message. The notification manager may automatically disappear after a short pause without requiring a user interaction.

The Android runtime includes a kernel library and a virtual machine. The Android runtime is responsible for scheduling and management of the Android system.

The kernel library of the Android system includes two parts: one is a function that needs to be called in Java language, and the other is the kernel library of the Android system. The application layer and the application framework layer run on the virtual machine. Java is used as an example. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager, a media library, a three-dimensional graphics processing library (for example, OpenGL ES), and a two-dimensional graphics engine (for example, SGL). The surface manager is configured to manage a display subsystem and provide fusion of two-dimensional and three-dimensional graphics layers for a plurality of applications. The media library supports playback and recording in a plurality of commonly used audio and video formats, and static image files. The media library may support a plurality of audio and video encoding formats, for example, MPEG-4, H.564, MP3, AAC, AMR, JPG, and PNG. The three-dimensional graphics processing library is configured to implement three-dimensional graphics drawing, image rendering, composition, layer processing, and the like. The two-dimensional graphics engine is a drawing engine for two-dimensional drawing.

The kernel (kernel) layer provides a core system service of the operating system. For example, security, memory management, process management, a network protocol stack, and a driver model are all based on the kernel layer. The kernel layer is also used as an abstraction layer between hardware and a software stack. The layer has many drivers related to the electronic device, mainly including a display driver, a driver of a keyboard used as an input device, a camera driver, an audio driver, a Bluetooth driver, a Wi-Fi driver, and the like.

It should be understood that the function service described above is merely an example. In actual application, the electronic device may alternatively be divided into more or fewer function services based on other factors, or may be divided into functions of each service in another manner, or may not be divided into function services, but works as a whole.

The following describes a solution provided in embodiments of this application.

The solution provided in embodiments of this application may be applied to a scenario in which multi-screen interaction is performed between a plurality of displays. The multi-screen interaction is a process in which for both interaction parties, content displayed on a display can be shared with another display for display. The plurality of displays may be located in a same space range, and the plurality of displays may belong to a same electronic device, or may separately belong to different electronic devices.

In an example, the plurality of displays may be a plurality of displays disposed in a head unit cockpit, and the plurality of displays may be displays that are disposed based on a one-core multi-screen mechanism or a multi-core multi-screen mechanism. In another example, the plurality of displays may include at least one display disposed in a head unit cockpit and a display of at least one terminal device located in space of the head unit cockpit. The terminal device may be an electronic device carried by a user (passenger) in the head unit cockpit.

In the foregoing examples, although a position of the display disposed in the head unit cockpit may be adjusted, in an actual scenario, in a long time range, a relative position between different displays disposed in the head unit cockpit is generally fixed. Therefore, in embodiments of this application, it may be considered that a relative position between displays disposed in the head unit cockpit is fixed, and an electronic device to which each display belongs may obtain a position of another display in the head unit cockpit in advance, to determine a relative position between different displays in the head unit cockpit. When a position of a display disposed in the head unit cockpit changes, an electronic device to which the display belongs may notify an electronic device to which another display belongs of a latest position of the display, to ensure that an electronic device to which each display belongs can accurately obtain position distribution information of each display in the head unit cockpit. However, due to uncertainty of using a terminal device by a user to which the terminal device belongs, a relative position between a display of the terminal device and a display disposed in the head unit cockpit may change at any time, and it is difficult to remain fixed for a long time. Therefore, in embodiments of this application, it may be considered that the relative position between the display of the terminal device and the display disposed in the head unit cockpit can be changed.

In embodiments of this application, for multi-screen interaction between displays whose relative positions are fixed, two interaction parties may pre-store a relative position relationship between the different displays. In a multi-screen interaction process, based on the prestored relative position relationship, the two interaction parties may present information about the different displays to the user or determine a multi-screen interaction object indicated by a user operation. For multi-screen interaction between displays whose relative positions can be changed, the two interaction parties may use a predefined position relationship as the position relationship between the displays. In a multi-screen interaction process, based on the position relationship, the two interaction parties may present information about the different displays to the user or determine a multi-screen interaction object indicated by a user operation. The user may control the multi-screen interaction process by performing a sliding operation on the display by using a specified gesture, for example, selecting an object for multi-screen interaction.

The following describes in detail the solution provided in embodiments of this application with reference to a specific scenario. For ease of description, in the following embodiments of this application, a display that shares content in two displays performing multi-screen interaction is denoted as a source display, and a display that receives the content shared by the source display in the two displays performing multi-screen interaction is denoted as a target display. Content displayed on the source display is denoted as source end content, and content displayed on the target display is denoted as target content. An electronic device to which the source display belongs is denoted as a source device, and an electronic device to which the target display belongs is denoted as a target device. Any electronic device may be used as a source device to perform multi-screen interaction with another electronic device, or may be used as a target device to perform multi-screen interaction with another electronic device.

### First part: Multi-screen interaction between displays whose relative positions are fixed

In this embodiment of this application, the source device and the target device may pre-specify an operation manner used to control multi-screen interaction, and the user may control a multi-screen interaction process by performing a corresponding operation. The operation manner may be a gesture operation of sliding on a display by using a specified gesture. For example, the gesture operation may be a multi-finger (for example, three-finger) sliding operation, and the user may control the multi-screen interaction process by performing a three-finger sliding operation on the display.

In this embodiment of this application, for the displays whose relative positions are fixed, an electronic device to which each display belongs may predetermine and store a relative position relationship between the displays. When multi-screen interaction is performed, the electronic device to which each display belongs may determine, based on an operation performed by the user on the display, a target display selected by the user, so as to share content displayed on the display of the electronic device with the target display for display. For example, the displays whose relative positions are fixed may be displays disposed in the head unit cockpit, displays disposed in a home environment scenario, or the like.

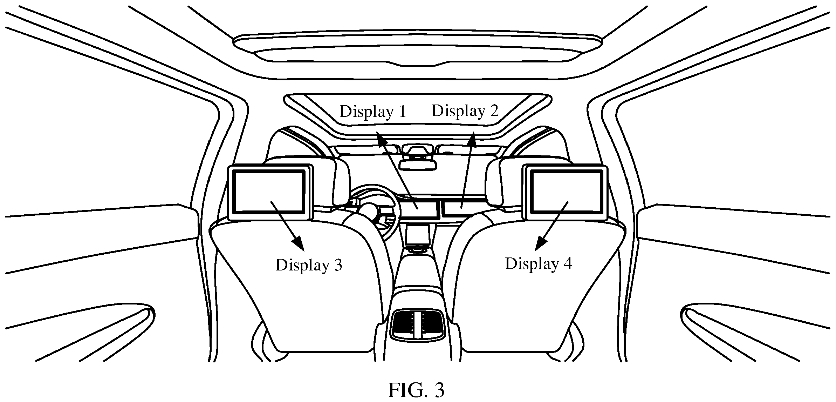

Embodiment 1: The displays whose relative positions are fixed may be the displays disposed in the head unit cockpit, for example, may be displays 1 to 4 shown in FIG. 3, and the displays 1 to 4 belong to electronic devices 1 to 4, respectively. A position corresponding to a display 1 is a front-row left seat, and the display 1 may be denoted as a front-row left screen (or a central control screen). A position corresponding to a display 2 is a front-row right seat, and the display 2 may be denoted as a front-row right screen (or a front-passenger screen). A position corresponding to a display 3 is a back-row left seat, and the display 3 may be denoted as a back-row left screen. A position corresponding to a display 4 is a back-row right seat, and the display 4 may be denoted as a back-row right screen. In this case, a relative position relationship of the display 1 to the display 4 may be determined based on relative positions between the seats corresponding to the display 1 to the display 4. The relative position relationship may be preset by the user in the electronic device to which each display belongs, or may be determined after the electronic device to which each display belongs performs interaction. For example, when the display 1 and the display 2 belong to different electronic devices, after an electronic device 1 to which the display 1 belongs establishes a communication connection to an electronic device 2 to which the display 2 belongs, the electronic device 1 may send a device identifier of the electronic device 1 and corresponding seat information to the electronic device 2. The electronic device 2 may determine that the display 1 of the electronic device 1 is located on the left side of the display 2, so as to establish and store a relative position relationship between the display 2 of the electronic device 2 and the display 1 of the electronic device 1. Subsequently, when it is determined, based on a user operation, that the user indicates to share content on a display with a left display, the content may be shared with the display 1 of the electronic device 1 for display.

In the foregoing method, when determining, based on the operation performed by the user on the source display, the target display selected by the user, the source device may use any one of the following manner 1 to manner 3.

Manner 1: Determine the target display based on a direction angle of a user operation.

In this manner, the source device may determine, based on a direction angle of a movement path of a contact when the user performs a sliding operation on the source display, the target display selected by the user. Specifically, when the user performs the sliding operation on the source display, the source device determines a sliding direction of the sliding operation, that is, the direction of the movement path of the contact on the source display when the user performs the sliding operation, and compares the sliding direction with at least one candidate direction. When an included angle between the sliding direction and any candidate direction is less than a specified first angle threshold or is less than an included angle between the sliding direction and another candidate direction, the electronic device determines that the target display is a candidate display corresponding to the candidate direction. The at least one candidate direction is in a one-to-one correspondence with at least one candidate display, a candidate direction corresponding to any candidate display is a direction from a position of the source display to a position of the candidate display, and the candidate display is a display of an electronic device that can perform multi-screen interaction with the source device.

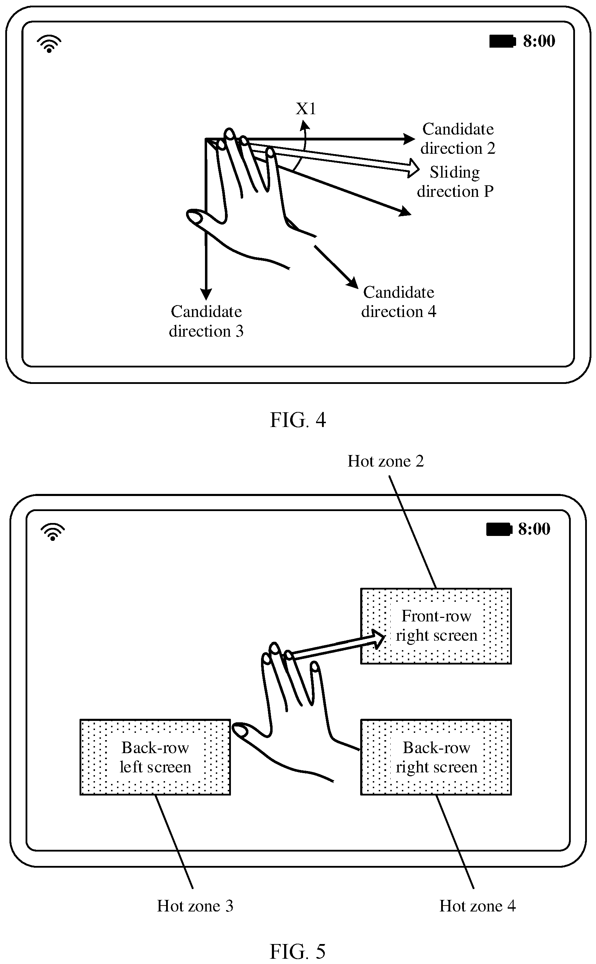

Embodiment 2: In the scenario described in the example 1, the source device may be the electronic device 1, and at least one candidate device may be the electronic devices 2 to 4. The source display is the display 1, and the at least one candidate display is the displays 2 to 4. As shown in FIG. 4, the source device may determine, based on a relative position relationship between the displays 2 to 4 and the display 1, that the at least one candidate direction is candidate directions 2 to 4, where a candidate direction 2 is a direction from the display 1 to the display 2, that is, a direction pointing to the right side, a candidate direction 3 is a direction from the display 1 to the display 3, and a candidate direction 4 is a direction from the display 1 to the display 4. When the direction pointed by the movement path of the contact on which the user performs the operation on the source display is a sliding direction P, and an included angle between the sliding direction P and the candidate direction 2 is less than a specified first angle threshold X1, the source device may determine that the target display is the display 2. Therefore, a process of sharing content displayed on the display 1 with the display 2 for display may be started.

In some embodiments of this application, the source device may allocate angle ranges of the candidate displays based on positions and a quantity of the candidate displays. When a plurality of candidate displays are all located in a same direction range on one side of the target display, an angle range corresponding to the direction range may be equally divided for the plurality of candidate displays, where angle ranges corresponding to different displays do not overlap each other. In this case, the source device may use a value less than or equal to a half of the angle range corresponding to the candidate display as a first angle threshold corresponding to the candidate display. For example, when there is one candidate display in each of the front, rear, left, and right directions of the source display, an angle range of a direction range corresponding to the source display is 360 degrees. In this case, an angle range corresponding to each of the displays in the front, rear, left, and right directions of the source display is 90 degrees, and a first angle threshold is 45 degrees. When the direction of the sliding operation of the user is within an angle range of 90 degrees by using the front direction of the source display as a center, the included angle between the sliding direction and the front direction is less than the first angle threshold. In this case, it may be determined that a display in front of the source display is the target display.

In some embodiments of this application, all candidate displays are in a screen-on state (that is, a power-on state). If a display is in a screen-off state (that is, a power-off state), the source device does not use the display as a candidate display. For example, in the foregoing example 2, if the displays 2 and 3 are in a screen-on state, and the display 4 is in a screen-off state, the source device uses the displays 2 and 3 as candidate displays that can perform multi-screen interaction with the display 1. The source device may obtain status information of another display from a device to which the another display belongs, and further determine, based on the status information, whether to use the another display as a candidate display.

Manner 2: Determine the target display based on a hot zone selected through a user operation.

In this manner, the source device may display a hot zone corresponding to a candidate display, and determine, based on a hot zone selected when the user performs the sliding operation on the source display, the target display selected by the user. Specifically, the source device may display, when detecting that the user performs the sliding operation on the source display, a hot zone corresponding to the at least one candidate display, so that the user may select the target display in a manner of continuing to slide to the hot zone. In this case, the source device may determine, based on the hot zone in which a last position of the contact of the sliding operation performed by the user is located, the target display selected by the user. The hot zone is an interactive (or tappable) area that is of a specified size and that is displayed on the display in a specific manner. In this embodiment of this application, hot zones at different positions may be used to represent different displays, and the user may select, by tapping a hot zone, the display corresponding to the hot zone. Optionally, the hot zone corresponding to the candidate display may further include identification information of the candidate display, and the identification information may be information, for example, a position, a name, and a type of the candidate display.

Embodiment 3: Based on the scenario described in the example 2, the source device is the electronic device 1. When detecting the sliding operation of the user, the source device may display an interface shown in FIG. 5 on the source display. The interface includes hot zones 2 to 4, and the hot zones 2 to 4 are hot zones corresponding to the displays 2 to 4. After the hot zone is displayed, the user continues the previous sliding operation. When the user continues to slide to a hot zone 2 and stops the sliding operation, the source device may determine that the target display is the display 2.

Manner 3: Determine the target display based on a direction of a user operation and a hot zone selected through the user operation.

In this manner, the source device may display, based on the direction of the user operation, a hot zone corresponding to a candidate display, and determine, based on a hot zone selected when the user performs the sliding operation on the source display, the target display selected by the user. Specifically, when detecting the sliding operation performed by the user on the source display, the source device compares a sliding direction of the sliding operation with at least one reference direction. If the sliding direction is consistent with any reference direction or an included angle is less than a specified second angle threshold, the source device displays, on the display, at least one hot zone corresponding to the reference direction, so that the user can select the target display in a manner of continuing to slide to the hot zone. In this way, the source device may determine, based on the hot zone in which a last position of the contact of the sliding operation performed by the user is located, the target display selected by the user. The reference direction may be a specified direction or a sliding direction in which the user performs the sliding operation, and the hot zone corresponding to the reference direction is a hot zone that is of the display and that corresponds to a candidate direction whose included angle with the reference direction is less than the specified second angle threshold. Optionally, the second angle threshold is greater than the first angle threshold.

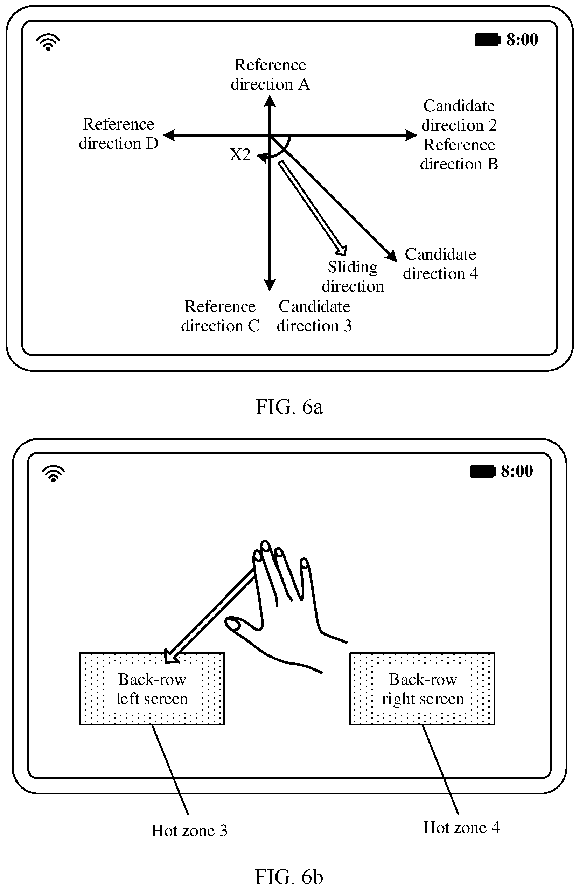

Embodiment 4: Based on the scenario described in the example 2, the reference direction may be reference directions A to D shown in FIG. 6a. When detecting the sliding operation of the user, the source device compares the current sliding direction of the sliding operation with the specified reference directions A to D. When determining that an included angle between the current sliding direction and a reference direction C is less than a specified second angle threshold X2, the source device may display an interface shown in FIG. 6b on the source display, where the interface includes a hot zone 3 and a hot zone 4 that correspond to the display 3 and the display 4. After the hot zones are displayed, the user continues the previous sliding operation. When the user continues to slide to the hot zone 3 and stops the sliding operation, the source device may determine that the target display is the display 3.

According to the methods described in the manner 1 to the manner 3, the user needs to perform only one sliding operation on the source display to select the target display, and trigger a process in which the source device shares the content on the source display with the target display for display. An operation process is very simple and can be implemented in one step.

In this embodiment of this application, after the multi-screen interaction process is started, the source device may send, to the target device, source end content displayed on the source display. After receiving the source end content from the source device, the target device may display the source end content on the target display. After multi-screen interaction (that is, after the source device sends the source end content to the target device), the source device may display the content on the source display in any one of the following manners:

### (1) Remain the displayed content unchanged

In this manner, after sending, to the target device, the content displayed on the source display, the source device remains the content displayed on the source display unchanged.

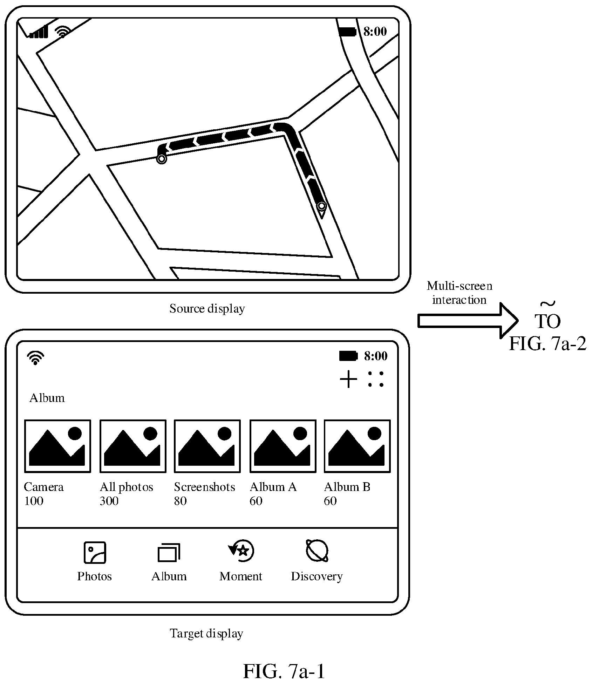

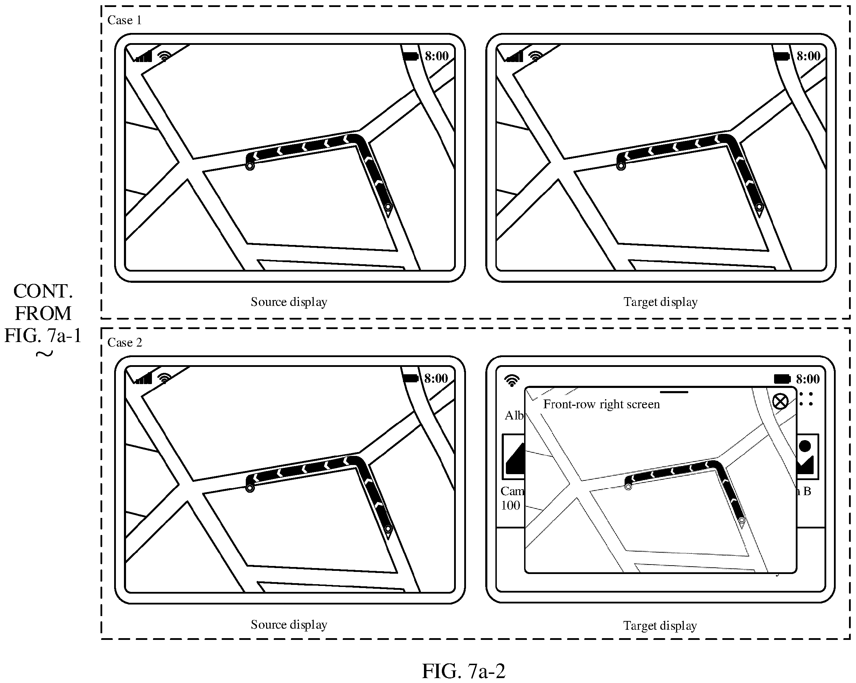

Embodiment 5: As shown in FIG. 7a-1 and FIG. 7a-2, before multi-screen interaction, a navigation interface is displayed on the source display of the source device, and an album interface is displayed on the target display of the target device. When the source device uses this manner, content displayed on the source display after multi-screen interaction is performed, as shown in a case 1 or 2 in FIG. 7a-2, is consistent with the content displayed on the source display before multi-screen interaction, and therefore, the displayed content is unchanged.

### (2) Display a specified interface

In this manner, the specified interface may be a desktop interface or an interface previous to an interface displayed on the source display before multi-screen interaction. After sending, to the target device, the content displayed on the source display, the source device may jump to the desktop interface or the interface previous to the current interface for display.

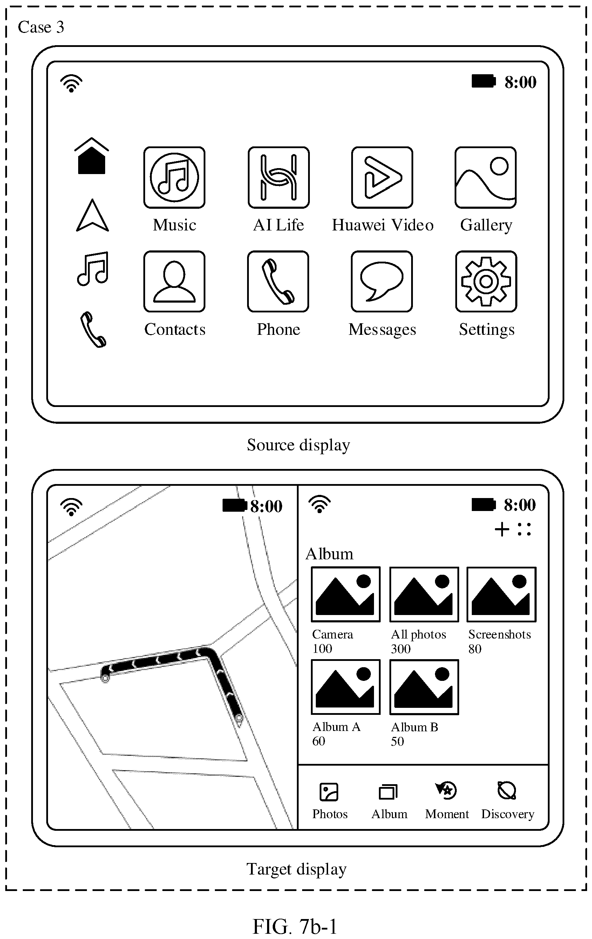

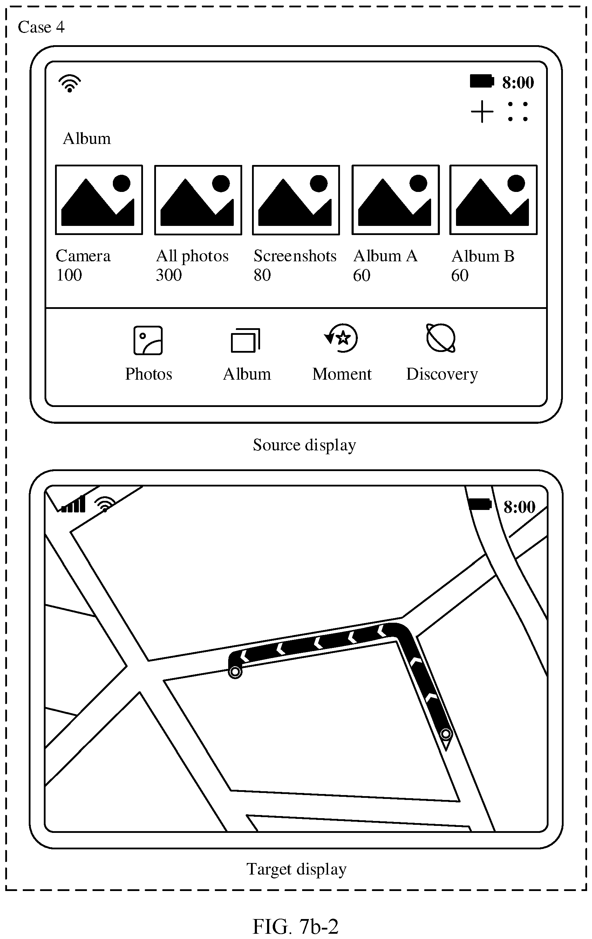

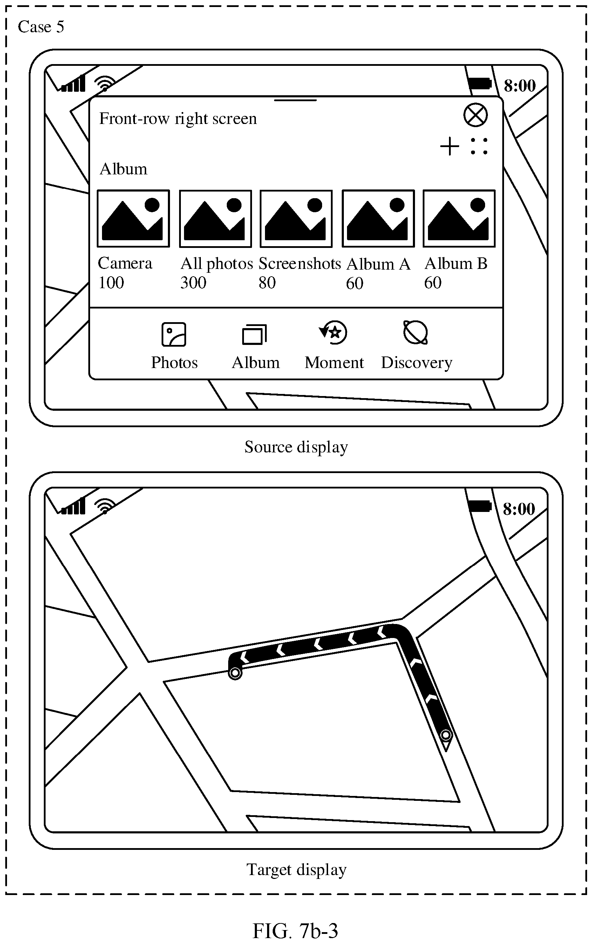

Embodiment 6: Based on the scenario shown in FIG. 7a-1 and FIG. 7a-2, after multi-screen interaction is performed, when the source device uses this manner, the source display displays a desktop interface shown in a case 3 in FIG. 7b-1. Certainly, the source display may alternatively display an interface displayed before the navigation interface.

### (3) No display and screen off

In this manner, after sending, to the target device, the content displayed on the source display, the source device may no longer display the content, and switch to a screen-off state.

### (4) Display target content on the target display

In this manner, after sending the source end content to the target device, the source device may obtain, from the target device, the target content displayed on the target display, and display the target content on the source display. In this manner, an effect of exchanging the display content between the source display and the target display can be implemented.

When displaying the target content, the source device may replace an interface for displaying the source end content with an interface for displaying the target content, or may display the target content in a new window (or interface). The new window covers the interface for displaying the source end content.

Embodiment 7: Based on the scenario shown in FIG. 7a-1 and FIG. 7a-2, after multi-screen interaction is performed, when the source device uses this manner, the source display displays an interface shown in a case 4 in FIG. 7b-2, that is, an album interface. Alternatively, the source display displays an interface shown in a case 5 in FIG. 7b-3, that is, an album interface displayed in a new window.

After multi-screen interaction, the target device may display the source end content on the target display in any one of the following manners:

### (1) Full-screen display manner

In this manner, after receiving the source end content from the source device, the target device may replace currently displayed target content with the source end content.

Embodiment 8: Based on the scenario shown in FIG. 7a-1 and FIG. 7a-2, after multi-screen interaction is performed, when a target device uses this manner, content displayed on the target display is the navigation interface shown in the case 1 in FIG. 7a-2.

### (2) Window display manner

In this manner, after receiving the source end content from the source device, the target device may display the source end content in a newly added window (or interface), where the newly added window covers an interface in which current content is located.

Embodiment 9: Based on the scenario shown in FIG. 7a-1 and FIG. 7a-2, after multi-screen interaction is performed, when the target device uses this manner, the target display displays an interface shown in the case 2 in FIG. 7a-2.

### (3) Split-screen display manner

In this manner, after receiving the source end content from the source device, the target device may display the target content and the source end content in the split-screen display manner. Optionally, the terminal device may display the content in this manner in a specified scenario. For example, when the target display displays the navigation interface, the target device may display the target content and the source end content on the target display in the split-screen display manner.

Optionally, the source device may determine whether a sliding speed/sliding acceleration/hand-leaving speed at which the user performs the sliding operation on the source display is greater than a corresponding speed threshold. If the sliding speed/sliding acceleration/hand-leaving speed at which the user performs the sliding operation on the source display is greater than the corresponding speed threshold, when sharing the content, the source device may simultaneously indicate the target device to use the split-screen display manner and display the source end content in a split-screen window that is far away from the source display. If the sliding speed/sliding acceleration/hand-leaving speed at which the user performs the sliding operation on the source display is not greater than the corresponding speed threshold, when sharing the content, the source device may simultaneously indicate the target device to use the split-screen display manner and display the source end content in a split-screen window that is close to the source display. For the two split-screen windows of the target display after screen splitting, when an included angle between a direction from the source display to one of the split-screen windows and a direction from the split-screen window to the other split-screen window is less than a specified angle threshold, it may be determined that the split-screen window is the split-screen window that is close to the source display, and the other split-screen window is the split-screen window that is far from the source display.

Embodiment 10: Based on the scenario shown in FIG. 7a-1 and FIG. 7a-2, after multi-screen interaction is performed, when the target device uses this manner, the target display displays an interface shown in a case 3 in FIG. 7b-1.

According to the foregoing method, the source device and the target device may flexibly select a manner of displaying content after multi-screen interaction, so as to implement different display effects. The source device and the target device may select the manner of displaying content based on a type of the display content, a display scenario, a task type, a task priority, a display position, or the like, or select a display manner based on a user indication. This is not specifically limited in this embodiment of this application.

In some embodiments of this application, when both the source display and the target display display the source end content after the cross-screen display, the source device and the target device may synchronously perform subsequent control on the source end content, or the source device and the target device may independently control the source end content separately displayed. For example, when the source end content is a video, after multi-screen interaction, the source device and the target device may separately control the source display and the target display to synchronously play the video. When the user performs an operation (for example, adjusting progress or closing) on a video played on one of the displays, the display pauses playing the video or responds based on a user indication.

In the foregoing embodiment, the user may perform an operation on the source display, to control and implement an effect of sharing the source end content displayed on the source display with the target display for display. In some embodiments of this application, the user may further perform an operation on the target display according to the method provided in the foregoing embodiment, to control and implement an effect of sharing the source end content displayed on the source display with the target display for display. The source device or the target device may determine, based on a user indication, that an operation control manner for controlling multi-screen interaction is: performing an operation on the source display or performing an operation on the target display.

In a scenario, when the operation control manner indicated by the user is performing an operation on the source display, the source device and the target device may perform multi-screen interaction in the manner provided in the foregoing embodiment.

In another scenario, when the operation control manner indicated by the user is performing an operation on the target display, for a manner in which the target device determines the source display based on the user operation, refer to the method for determining the target display by the source device in the foregoing embodiment. Specifically, the target device may determine the source display in any one of the following manner 1 to manner 3.

Manner 1: Determine the source display based on a direction angle of a user operation.

In this manner, the target device may determine, based on a direction angle of a movement path of a contact when the user performs a sliding operation on the target display, the source display selected by the user. Specifically, when the user performs the sliding operation on the target display, the target device determines a sliding direction of the sliding operation, that is, the direction of the movement path of the contact on the target display when the user performs the sliding operation, and compares the sliding direction with at least one candidate direction. When an included angle between the sliding direction and any candidate direction is less than or equal to a specified first angle threshold or is less than an included angle between the sliding direction and another candidate direction, the electronic device determines that the source display is a display corresponding to the candidate direction. The at least one candidate direction is in a one-to-one correspondence with the at least one candidate display, a candidate direction corresponding to any candidate display is a direction from a position of the candidate display to the target display, and the candidate display is a display of an electronic device that can perform multi-screen interaction with the target device.

Manner 2: Determine the source display based on a hot zone selected through a user operation.

In this manner, the target device may display, when detecting that the user performs the sliding operation on the target display, a hot zone corresponding to the at least one candidate display, so that the user can select the source display from the candidate display in a manner of continuing to slide to the hot zone. In this case, the target device may determine, based on the hot zone in which a last position of the contact of the sliding operation performed by the user is located, the source display selected by the user.

Manner 3: Determine the source display based on a direction of a user operation and a hot zone selected through the user operation.

In this manner, when detecting a sliding operation performed by the user on the target display, the target device compares a reverse direction of a sliding direction of the sliding operation with at least one reference direction. If the reverse direction is consistent with any reference direction or an included angle is less than a specified second angle threshold, the source device displays, on the display, at least one hot zone corresponding to the reference direction, so that the user can select the source display in a manner of continuing to slide to the hot zone. In this way, the target device may determine, based on the hot zone in which a last position of the contact of the sliding operation performed by the user is located, the source display selected by the user. The reference direction is a specified direction, and the hot zone corresponding to the reference direction is a hot zone that is of the display and that corresponds to a candidate direction whose included angle with the reference direction is less than the specified second angle threshold.

In some embodiments of this application, when the sliding operation performed by the user on the display of the electronic device may trigger both selection of the source display and selection of the target display, the electronic device may alternatively trigger selection of the target display by default, that is, an operation performed by the user on the display is used to control a priority of sharing content on the display with another electronic device to be higher than a priority of obtaining content on the another display.

For a manner of displaying content on the target display and the source display after multi-screen interaction, refer to the method for displaying the content on the target display and the source display in the foregoing embodiment. Details are not described herein. For some multi-screen interaction effects implemented in this manner, refer to the following examples 11 and 12.

Embodiment 11: When the source display is the display 1 shown in FIG. 3, and the target device is the display 2 shown in FIG. 3, the user may perform a sliding operation the same as that in the example 2, that is, perform a sliding operation along the sliding direction P, on the target display. In this case, the target device may be triggered to obtain, from the source device, the source end content displayed on the source display, and display the source end content on the target display, to implement an effect of controlling multi-screen interaction on the target display. Interfaces displayed on the source display and the target display after the multi-screen interaction may be interfaces shown in the case 1 and the case 2 in FIG. 7a-1 and FIG. 7a-2 or the case 3 to the case 5 in FIG. 7b-1, FIG. 7b-2, and FIG. 7b-3.

Embodiment 12: In the scenario shown in FIG. 3, the display 1 and the display 2 are displays located in a same row in the cockpit, and the display 1 and the display 3 are displays located in a same column in the cockpit. According to the method provided in the foregoing embodiment, the user may control and implement multi-screen interaction between the display 1 and the display 2 by performing the sliding operation on the display 1 or the display 2, and the user may control and implement multi-screen interaction between the display 1 and the display 3 by performing the sliding operation on the display 1 or the display 3. For example, as shown in FIG. 8, the user may control, by performing a horizontal right-sliding operation on a display 1 or a display 2 with three fingers, a device 1 to share content on the display 1 with the display 2 of a device 2 for display. The user may control, by performing a horizontal left-sliding operation on the display 1 or the display 2 with three fingers, the device 2 to share content on the display 2 with the display 1 of the device 1 for display. The user may control, by performing a vertical down-sliding operation on the display 1 or a display 3 with three fingers, the device 1 to share the content on the display 1 with the display 3 of a device 3 for display. The user may control, by performing a vertical up-sliding operation on the display 1 or the display 3 with three fingers, the device 3 to share content on the display 3 with the display 1 of the device 1 for display. Optionally, the device 1, the device 2, and the device 3 may be a same device, or may be different devices, or some of the devices are a same device. For example, the device 1 and the device 2 may be a same device, and are different from the device 3.

According to the foregoing method, the user may control multi-screen interaction at the source end, or may control multi-screen interaction at the target end. Therefore, a control manner is flexible, and it is convenient for the user to select a proper control manner according to an actual situation, to improve user experience.

### Second part: Multi-screen interaction between displays whose relative positions can be changed

In this part of content, for implementation of multi-screen interaction between displays whose relative positions can be changed, refer to the method for implementing multi-screen interaction between the displays whose relative positions are fixed in the first part. The following provides specific descriptions.

In some embodiments of this application, in an optional implementation, the pre-specified gesture operation in the content of the first part may alternatively control multi-screen interaction between the displays whose relative positions can be changed, that is, the source device and the target device may use the same gesture operation to control multi-screen interaction in the foregoing two scenarios. For example, for interaction between the displays whose relative positions are fixed, and interaction between the displays whose relative positions can be changed, both the source device and the target device are controlled by using a three-finger sliding operation. In another optional implementation, the pre-specified gesture operation in the content of the first part is only used to control multi-screen interaction between the displays whose relative positions are fixed. For interaction between the displays whose relative positions can be changed, the source device and the target device may preset another gesture operation for control. For example, for interaction between the displays whose relative positions are fixed, the source device and the target device may be controlled by using the three-finger sliding operation, and for interaction between the displays whose relative positions can be changed, the source device and the target device may be controlled by using a two-finger sliding operation.

In this embodiment of this application, the display whose relative position is fixed and the display whose relative position can be changed may coexist. In other words, in a plurality of displays that can perform multi-screen interaction, relative positions between some displays may be fixed, and relative positions between some displays can be changed.

Embodiment 13: Based on the foregoing example 1, in the head unit cockpit shown in FIG. 3, in addition to the display 1 to the display 4, a display 5 of a mobile device (for example, a mobile phone or a tablet) carried by the user may further exist. In this case, in space of the head unit cockpit, both a display whose relative position is fixed and a display whose relative position can be changed exist. Relative positions of the display 1 to the display 4 are fixed, and relative positions of the display 5 and other displays can be changed. For multi-screen interaction between any two displays of the display 1 to the display 4, refer to the method described in the first part. For interaction between the display 5 and the other displays, for details, refer to the method described in the second part. The following provides description with reference to a specific scenario.

Scenario 1: A candidate display whose relative position to the source display is fixed and a candidate display whose relative position to the source display can be changed exist in ambient space in which the source device is located.

In this scenario, the source device may determine the target display in any one of the manner 1 to the manner 3 described in the foregoing embodiment.

When the source device determines the target display in the manner 1 or the manner 3 described in the foregoing embodiment, for the candidate display whose relative position to the source display can be changed, the source device may use a pre-specified position relationship as the relative position relationship between the candidate display and the source display. In this way, a fixed direction of the candidate display relative to the source display may be determined based on the specified position relationship, so that the user may select the target display by performing the sliding operation in the direction. Specifically, the source device may use a specified candidate direction as a candidate direction corresponding to the candidate display, where the specified candidate direction is different from a candidate direction corresponding to another display. For other processing methods, refer to the manner 1 or the manner 3 in the foregoing embodiment.

Embodiment 14: In this scenario, the source display may be the display 4 in the example 13, and the candidate displays are the display 1 to the display 3 and the display 5. A position of the display 5 relative to the display 4 can be changed, and the display 1 to the display 3 are located on a left front side, a front side, and a left side of the display 4, respectively. In this case, the device 1 may correspond the position of the display 5 to a right front side of the display 4 (or any other orientation that does not correspond to the candidate display, for example, a right side, a rear side, or a right rear side). No matter how the position of the display 5 changes, the source device considers that the display 5 is located on the right front side of the display 4, so that the user can trigger, by performing an operation of sliding to an upper right corner on the display 4, the source device to share content on the display 4 with the display 5 for display. For example, as shown in FIG. 9a, candidate directions corresponding to the display 1 to the display 3 are respectively a candidate direction 1 to a candidate direction 3. In this case, the source device may use a specified candidate direction 5 as a candidate direction corresponding to the display 5. When the source device determines the target display in the manner 1 in the foregoing embodiment, when a direction pointed by a movement path of a contact on which the user performs an operation on the source display is a sliding direction Q, an included angle between the sliding direction Q and the candidate direction 5 is less than a specified first angle threshold X1. In this case, the source device may determine that the target display is the display 5, so as to start a process of sharing the content displayed on the display 4 with the display 5 for display. When the source device determines the target display in the manner 3 in the foregoing embodiment, as shown in FIG. 9b, when an included angle between a sliding direction of a sliding operation of the user and the reference direction A is less than the specified second angle threshold X2, the source device may display an interface shown in FIG. 10 on the source display, where the interface includes a hot zone 1, a hot zone 2, and a hot zone 5 that correspond to the display 1, the display 2, and the display 5. After the hot zone is displayed, the user continues the previous sliding operation. When the user continues to slide to the hot zone 5 and stops the sliding operation, the source device may determine that the target display is the display 5.

When the source device determines the target display in the manner 2 in the foregoing embodiment, the hot zone displayed by the terminal device includes a hot zone corresponding to the candidate display whose relative position to the source display is fixed, and a hot zone corresponding to the candidate display whose relative position to the source display can be changed. For a display manner and a selection manner of the hot zone, refer to the method described in the manner 2 in the foregoing embodiment. Details are not described herein.

Optionally, in the foregoing method, when there are a plurality of candidate displays whose relative positions to the source display can be changed in the ambient space in which the source device is located, for the plurality of candidate displays, when the source device displays hot zones of the candidate displays, display positions of the hot zones of the plurality of candidate displays on the source display may be arranged in any one of the following manners:

### (1) Arranged by an orientation

In this manner, the source device may determine a relative position between the candidate displays and the source display based on pre-specified candidate directions corresponding to the different candidate displays, and display the hot zones of the candidate displays on the source display based on the relative position.

### (2) Arranged based on a distance from the source display

In this manner, the source device may separately detect a distance between a device to which each candidate display belongs and the source device, and after performing sorting based on the determined distance, display the hot zones of the candidate displays on the source display based on the sorting. Optionally, the source device may further adjust a size of the hot zones of the candidate displays based on the sorting. For example, the source device may display a hot zone corresponding to a candidate display with a small distance before a hot zone corresponding to a candidate display with a large distance; and the source device may further increase an area occupied by the hot zone corresponding to the candidate display with the small distance, and decrease an area occupied by the hot zone corresponding to the candidate display with the large distance.

### (3) Arranged based on intimacy between a device to which the candidate display belongs and the source device

Optionally, the intimacy may be determined based on a quantity of times or frequency of interaction between a device to which the candidate display belongs and the source device in a historical time period. Specifically, there is a positive correlation between the intimacy and the quantity of times or frequency of interaction between the device to which the candidate display belongs and the source device. Alternatively, the intimacy may be determined based on a time interval between a current time and a time at which the device to which the candidate display belongs and the source device perform last multi-screen interaction, and the time interval has a negative correlation with the intimacy. Optionally, intimacy obtained when a device to which the candidate display belongs and the source device log in to a same user account is higher than intimacy obtained when a device to which the candidate display belongs and the source device log in to different user accounts. Intimacy obtained when a device to which the candidate display belongs and the source device log in to a same member account or different member accounts under a same home account is higher than intimacy obtained when a device to which the candidate display belongs and the source device log in to different stranger user accounts.

The source device may display the hot zones of the candidate displays on the source display based on an intimacy order. A hot zone corresponding to a candidate display with high intimacy may be displayed before a hot zone corresponding to a candidate display with high intimacy.

In some embodiments of this application, when there are a plurality of candidate displays whose relative positions to the source display can be changed in the ambient space in which the source device is located, the source device may alternatively correspond the plurality of candidate displays to a same candidate direction. When an included angle between the direction in which the user performs the sliding operation and the candidate direction is less than or equal to the specified first angle threshold, the source device may display the hot zones of the plurality of candidate displays on the source display, and the user may continue to perform the sliding operation or perform a tap operation, to select a hot zone of any display, so that the display is selected as the target display. When the source device may display the hot zones of the plurality of candidate displays on the source display, any one of the foregoing three arrangement manners may be used.

In this scenario, when the target display determined by the source device is the display whose relative position to the source device can be changed, for the manners of displaying content by the source display and the target display after multi-screen interaction is performed, refer to the manners described in the foregoing embodiments. Details are not described herein.

Scenario 2: No display whose relative position to the source display is fixed exists in ambient space in which the source device is located.

In this scenario, the source device may control multi-screen interaction by using a gesture operation the same as that in the foregoing scenario 1.

In an optional implementation, when detecting that the user performs a specified gesture sliding operation on the source display, the source device displays identification information (or hot zones) of candidate displays that can perform multi-screen interaction with the source display, and the user may select identification information of any candidate display by continuing to perform the gesture sliding operation. The source device detects an end position of a contact at which the user performs the gesture sliding operation on the source display, and uses a candidate display corresponding to identification information at the position as the target display. The identification information may be information that can uniquely identify a display, for example, a name, a position, a type, a display ID, or an icon of the display.

Embodiment 15: Based on the scenario described in the example 13, the source device may be a device to which the display 5 belongs, and the candidate displays may be the displays 1 to 4. As shown in FIG. 11(a), the user may trigger multi-screen interaction by performing a three-finger sliding operation on the display 5. When the source device detects the three-finger sliding operation performed by the user on the display 5, the source device may display an interface shown in FIG. 11(b). The interface includes identification information of the displays 1 to 4. In this case, the user may continue to slide to identification information of any one of the displays 1 to 4, and then stop the sliding operation. In this case, the source device may determine that a display corresponding to the identification information is the target display.

In another optional implementation, after detecting that the user performs a specified gesture sliding operation on the source display, the source device may display identification information (or hot zones) of candidate displays that can perform multi-screen interaction with the source display, and the user may select identification information of any candidate display by performing a tap operation. The source device uses the candidate display selected by the user as the target display.

Embodiment 16: Based on the scenario described in the example 15, as shown in FIG. 12(a), the user may trigger multi-screen interaction by performing a three-finger sliding operation on the display 5. After detecting the three-finger sliding operation performed by the user on the display 5, the source device may display an interface shown in FIG. 12(b), where the interface includes identification information of the displays 1 to 4. In this case, the user may perform a tap operation to select identification information of any one of the displays 1 to 4, and the source device may determine, based on the tap operation of the user, the identification information selected by the user, and use the display corresponding to the identification information as the target display.

Optionally, in the foregoing two implementations, when candidate displays that can perform multi-screen interaction with the source display are displays of a same type, before displaying identification information of each candidate display, the source device may first display an option control used to select candidate displays of this type. After the user selects the candidate displays of this type by performing an operation on the option control, the source device displays the identification information of each candidate display on the source display, and the user continues to perform an operation to select a candidate display corresponding to the identification information.

Embodiment 17: Based on the scenario described in the example 15, the displays 1 to 4 all belong to displays disposed in a head unit cockpit. As shown in FIG. 13(a), the user may trigger multi-screen interaction by performing a three-finger sliding operation on the display 5. When the source device detects the three-finger sliding operation performed by the user on the display 5, the source device may display an interface shown in FIG. 13(b), where the interface includes an option control used to select a head unit. The user may continue to perform the sliding operation to select the control. In this case, the source device may determine, based on the operation of the user, to select the display in the head unit as the target display, and the source device may continue to display an interface shown in FIG. 13(c), where the interface includes identification information of the displays 1 to 4. The user may continue to slide to identification information of any one of the displays 1 to 4, and then stop the sliding operation. In this case, the source device may determine that a display corresponding to the identification information is the target display. Alternatively, the user may select the identification information in a tap operation manner after stopping the sliding operation, and the source device determines that a display corresponding to the identification information is the target display.

Embodiment 18: Based on the scenario described in the example 15, as shown in FIG. 14(a) and FIG. 14(b), the user may trigger multi-screen interaction by performing a three-finger sliding operation on the display 5. After the source device detects the three-finger sliding operation performed by the user on the display 5 (sliding from a position shown in FIG. 14(a) to a position shown in FIG. 14(b) and then stopping sliding), the source device may display an interface shown in FIG. 14(c). The interface includes an option control used to select a head unit. The user may select the control by performing a tap operation. In this case, the source device may determine, based on the operation of the user, to select the display in the head unit as the target display, and the source device may continue to display the interface shown in FIG. 14(d), where the interface includes identification information of the displays 1 to 4. The user may select the identification information in a tap operation manner, and the source device determines a display corresponding to the identification information as the target display.

Optionally, in the foregoing method, both the source device and the candidate device may log in to a same user account.

In the foregoing method, when selecting the identification information by performing the tap operation, the user may select one or more pieces of identification information, and share the content displayed on the source display with one or more displays corresponding to the one or more pieces of identification information selected by the user. When the user selects a plurality of pieces of identification information, the source device may share, in a mirroring manner, the content displayed on the source display with the displays corresponding to the plurality of pieces of identification information selected by the user.

### Third part: Multi-screen interaction in a split-screen scenario and a multi-window scenario

In the foregoing embodiments, before multi-screen interaction is performed, both the source display of the source device and the target display of the target device display a single interface in full screen. However, in an actual application, before multi-screen interaction is performed, both the source display and the target display may display content in a split-screen or multi-window manner. In this scenario, the source device and the target device need to adjust an execution process of multi-screen interaction with reference to a manner in which the source display and the target display display content. The following provides description with reference to a specific scenario.

### Scenario 1: Split-screen display scenario

In this scenario, the source device and the target device may control multi-screen interaction by using a gesture operation the same as that in the foregoing embodiment. Because the source display and/or the target display use/uses the split-screen display manner, there are more than two windows (or interfaces) on the source display and the target display that perform multi-screen interaction, the source display and the target display may perform multi-screen interaction on content displayed in one window or content displayed in the entire display. To ensure implementation of a multi-screen interaction effect between the source display and the target display for one of the windows, the source device and the target device may select, based on a contact feature of the sliding operation of the user, a window for performing multi-screen interaction, and may select, based on a speed/acceleration feature of the sliding operation of the user, whether to cross some middle windows to perform multi-screen interaction, so that multi-screen interaction between different windows on the displays can be implemented based on the user operation.

In some embodiments of this application, when the source display uses a split-screen display manner, the source device may use a window in which a start contact of the sliding operation performed by the user is located as a window for performing multi-screen interaction, so as to share content in the window with the target display for display in a multi-screen interaction process. When the source display and/or the target display use/uses the split-screen display manner, the source device may determine, based on a speed/acceleration/hand-leaving speed of the sliding operation performed by the user, whether to cross some windows and how many windows are crossed to perform multi-screen interaction. The following provides specific description with reference to a specific scenario.

Specifically, in this scenario, the following three cases may exist.

Case 1: Before multi-screen interaction, the source display displays two windows in a split-screen display manner, and the target display displays one window in a full-screen display manner.

In this case, when the user performs the sliding operation on the source display to trigger multi-screen interaction, in addition to selecting the target display, the user further needs to select a source window, so as to indicate the source device to share content in the source window with the target display, where the source window is any window displayed on the source display. For a method for selecting the target display by the source device, refer to the method provided in the foregoing first part of embodiments. Details are not described herein. When selecting the source window, the source device may perform selection based on a position of a start contact at which the user performs the sliding operation on the source display. When the start contact at which the user performs the sliding operation falls inside any window on the source display, the source device may determine that the window is the source window.

In this embodiment of this application, before multi-screen interaction is performed, the source device may obtain, from the target device, information about a quantity of windows and a window position on the target display. In a multi-screen interaction process, after the source device determines the source window, if the source device determines that the source window is a window that is far away from the target display, the source device determines, based on a speed/acceleration/hand-leaving speed at which the user performs the sliding operation, whether to cross a window that is close to the target display. If the source device determines to cross the window that is close to the target display, the content in the source window is shared with the target display for display. If the source device determines not to cross the window that is close to the target display, display positions of a source display window and another window on the source display may be exchanged. When an included angle between a direction in which the source window points to the another window on the source display and a direction in which the source window points to the target display is less than or equal to a specified angle threshold, it may be determined that the source window is a window that is far away from the target display. When the included angle between the direction in which the source window points to the another window on the source display and the direction in which the source window points to the target display is greater than the specified angle threshold, it may be determined that the source window is a window that is close to the target display.

In an optional implementation, when the source window is the window that is far away from the target display, the source device may detect a speed at which the user performs the sliding operation, and if the detected speed is greater than or equal to a specified speed threshold, determine to cross one window to perform multi-screen interaction. After determining the target display based on the user operation, the source device sends the content in the source window to the target device. The target device displays the content on the target display. If the detected speed is less than the specified speed threshold, the source device determines not to cross the window to perform multi-screen interaction, and the source device may display the content in the source window and content in another window interchangeably.

In another optional implementation, when the source window is the window that is far away from the target display, the source device may detect acceleration of the sliding operation performed by the user, and if the detected acceleration is greater than or equal to a specified acceleration threshold, determine to cross one window to perform multi-screen interaction. After determining the target display based on the user operation, the source device sends the content in the source window to the target device. The target device displays the content on the target display. If the detected acceleration is less than the specified acceleration threshold, the source device determines not to cross the window to perform multi-screen interaction, and the source device may display the content in the source window and the content in the another window interchangeably.

In still another optional implementation, when the source window is the window that is far away from the target display, the source device may detect a hand-leaving speed at which the user performs the sliding operation. If the detected hand-leaving speed is less than or equal to a specified hand-leaving speed threshold, the source device determines to cross one window to perform multi-screen interaction. After determining the target display based on the user operation, the source device sends the content in the source window to the target device. The target device displays the content on the target display. If the detected hand-leaving speed is greater than the specified hand-leaving speed threshold, the source device determines not to cross the window to perform multi-screen interaction, and the source device may display the content in the source window and the content in the another window interchangeably.

In some embodiments of this application, after the source device performs multi-screen interaction on the source window in the source display with the target device, for a method for displaying content by the source device in the source window of the source display, reference may be made to the method for displaying the content by the source device in the source display in the foregoing first part of embodiments; and for a method for displaying content by the target device on the target display, reference may be made to the method for displaying the content by the target device on the target display in the foregoing first part of embodiments. Details are not described herein. Content displayed by the source device in a window other than the source window on the source display may not change, and is consistent with that before multi-screen interaction is performed. In some embodiments of this application, after multi-screen interaction is performed on the source window between the source device and the target device, the source window may no longer be displayed, and a window other than the source window is displayed on the source display in a full-screen display manner.

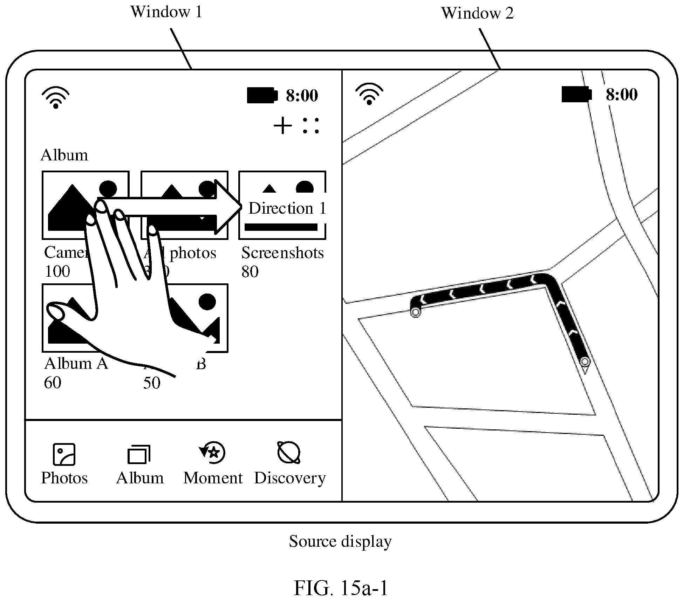

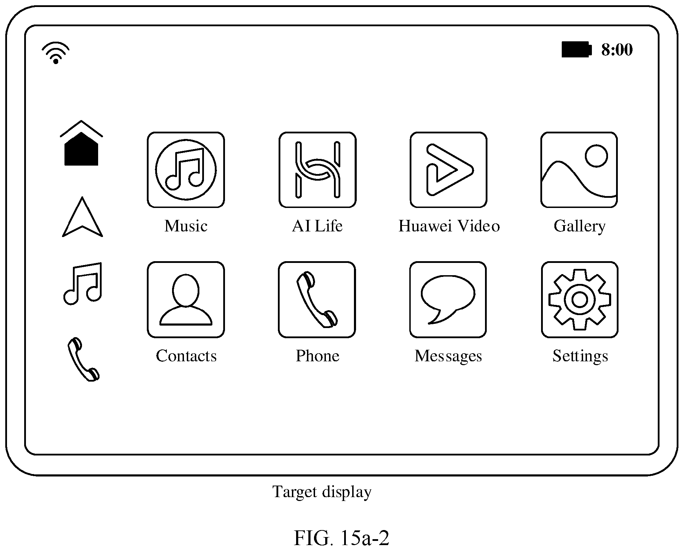

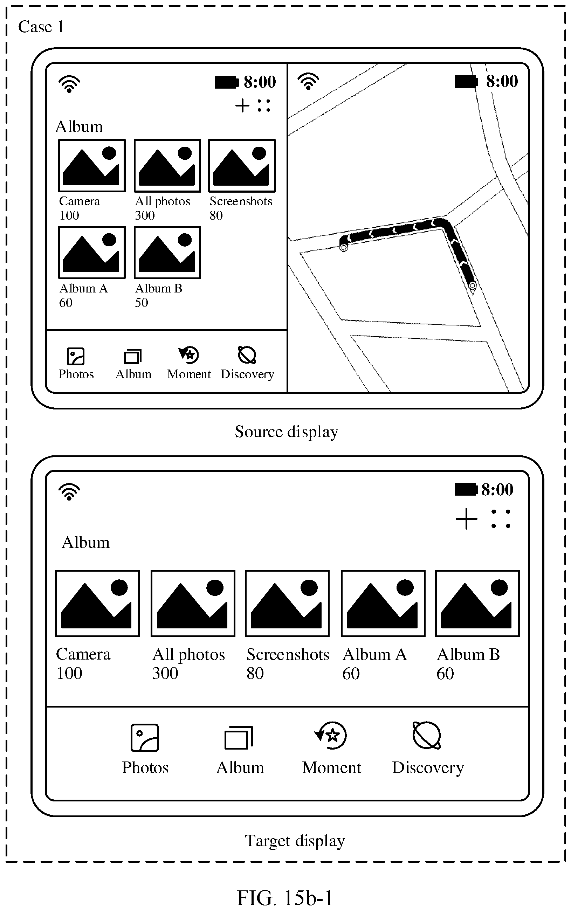

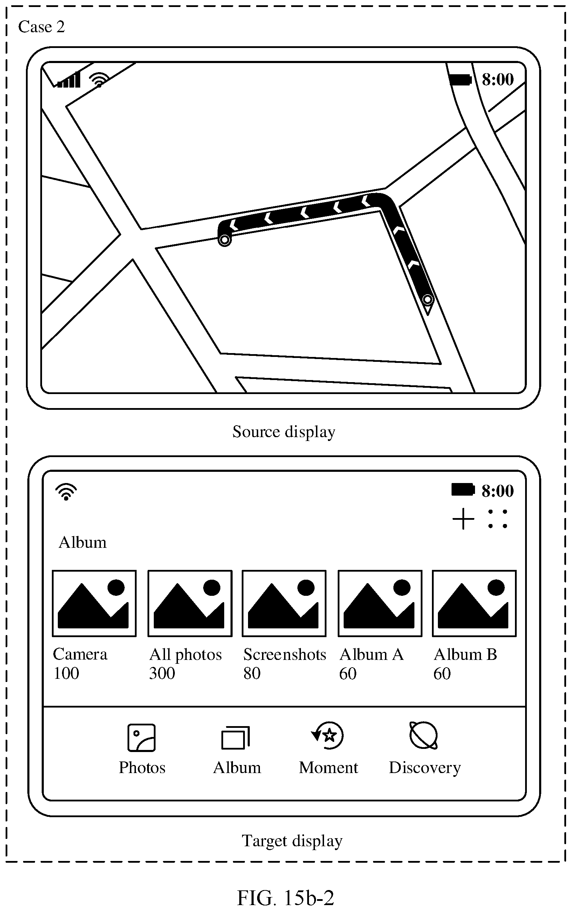

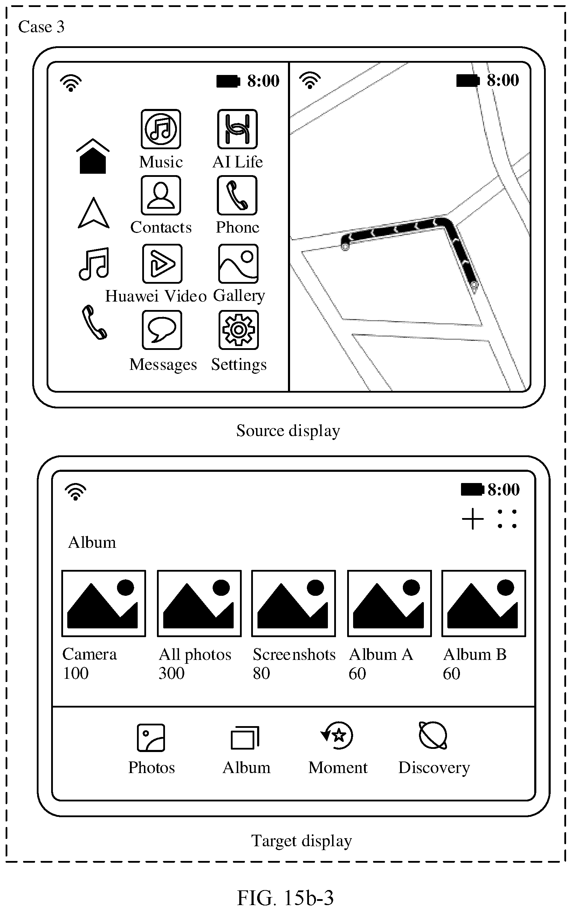

Embodiment 19: As shown in FIG. 15a-1 and FIG. 15a-2, a window 1 and a window 2 are displayed in a source display, one window is displayed on a target display in a full-screen display manner, and a target direction is a direction 1 shown in FIG. 15a-1. When detecting that the user performs a three-finger sliding operation along the direction 1 in an area in which the window 1 is located on the source display, the source device may first determine the target display based on the sliding operation performed by the user, and determine the window 1 as the source window; then determine whether a detected speed at which the user performs the sliding operation in this process is greater than or equal to the specified speed threshold. If the detected speed at which the user performs the sliding operation in this process is greater than or equal to the specified speed threshold, the source device may send the source end content displayed in the source window to the target device, so that the target device displays the source end content. Based on this, as shown in FIG. 15b-1, FIG. 15b-2, and FIG. 15b-3, the source device may cross the window 2, and share content in the window 1 with the target device for display. After multi-screen interaction, interfaces displayed on the source display and the target display may be any one of interfaces in a case 1 to a case 3 shown in FIG. 15b-1, FIG. 15b-2, and FIG. 15b-3. When displaying the content from the peer end, the source device or the target device may adapt to a size of a display window on the display of the source device or the target device and then display the content. For example, the source device or the target device may properly adjust a layout manner of the content on the display interface and then display the content on the display or a corresponding window.

Based on the foregoing manner, in the split-screen display scenario, the user may also control a multi-screen interaction process by performing one operation, and may implement multi-screen interaction for different windows.

Case 2: Before multi-screen interaction, the source display displays one window in a full-screen display manner, and the target display displays two windows in a split-screen display manner.

In this case, when the user performs the sliding operation on the source display to trigger multi-screen interaction, in addition to selecting the target display, the user further needs to select a target window, so as to indicate the source device to share content in the source display with the target window of the target display. The target window is any window displayed on the target display. For a method for selecting the target display by the source device, refer to the method provided in the foregoing first part of embodiments. Details are not described herein.

In this embodiment of this application, before multi-screen interaction is performed, the source device may obtain, from the target device, information about a quantity of windows and a window position on the target display, to further determine a relative position relationship between the source display and each window on the target display. In a multi-screen interaction process, when selecting the target window, the source device may determine, based on a speed/acceleration/hand-leaving speed of the sliding operation performed by the user on the source display, whether to cross one screen to perform multi-screen interaction, and further determine the target display based on whether to cross one screen to perform multi-screen interaction.

In an optional implementation, when detecting that the user performs the specified gesture sliding operation on the source display, the source device detects a speed at which the user performs the sliding operation. If the detected speed is less than or equal to a specified speed threshold, the source device determines not to cross another window to perform multi-screen interaction, and determines that the target window is a window that is on the target display and that is closer to the source display. If the detected speed is greater than the specified speed threshold, the source device determines to cross one window to perform multi-screen interaction, and determines that the target window is a window that is on the target display and that is far away from the source display. A distance between the window on the target display and the source display may be determined based on a position of the window on the display and a target direction, where the target direction is a direction from the source display to the target display. A smaller included angle between the target direction and a direction from one window to another window on the target display indicates a smaller distance between the window and the source display, and it may be determined that the window is a window closer to the source display. A larger included angle between the target direction and a direction from one window to another window on the target display indicates a larger distance between the window and the source display, and it may be determined that the window is a window far away from the source display. The source device may determine the determined included angle by specifying a corresponding angle threshold. When the included angle is less than the specified angle threshold, the source device may determine that the window is a window closer to the source display. When the included angle is not less than the specified angle threshold, the source device determines that the window is a window far away from the source display.

In another optional implementation, when detecting that the user performs the specified gesture sliding operation on the source display, the source device detects an acceleration at which the user performs the sliding operation, if the detected acceleration is less than or equal to a specified acceleration threshold, determines not to cross another window to perform multi-screen interaction, and determines that the target window is a window that is on the target display and that is closer to the source display. If the detected acceleration is greater than the specified acceleration threshold, the source device determines to cross one window to perform multi-screen interaction, and determines that the target window is a window that is on the target display and that is far away from the source display. A distance between the window on the target display and the source display may be determined in a manner provided in the foregoing method. Details are not described herein.

In still another optional implementation, when detecting that the user performs a specified gesture sliding operation on the source display, the source device detects a hand-leaving speed at which the user performs the sliding operation. If the detected hand-leaving speed is less than or equal to a specified hand-leaving speed threshold, the source device determines not to cross another window to perform multi-screen interaction, and determines that the target window is a window that is on the target display and that is closer to the source display. If the detected hand-leaving speed is greater than the specified hand-leaving speed threshold, the source device determines to cross one window to perform multi-screen interaction, and determines that the target window is a window that is on the target display and that is far away from the source display. A distance between the window on the target display and the source display may be determined in a manner provided in the foregoing method. Details are not described herein.

Embodiment 20: As shown in FIG. 16A and FIG. 16B, a window is displayed on a source display in a full-screen display manner, a window 1 and a window 2 are displayed on a target display, and a target direction is a direction 1 in FIG. 16A. When detecting that the user performs a three-finger sliding operation along the direction 1 on the source display, the source device may first determine the target display based on the sliding operation performed by the user, and then determine whether a detected hand-leaving speed at which the user performs the sliding operation in this process is less than or equal to a specified hand-leaving speed threshold. If the detected hand-leaving speed at which the user performs the sliding operation in this process is less than or equal to the specified hand-leaving speed threshold, the source device uses the window 1 as the target window. If the detected hand-leaving speed at which the user performs the sliding operation in this process is greater than the specified hand-leaving speed threshold, the source device uses the window 2 as the target window. After determining the target window, the source device may send, to the target device, the source end content displayed on the source display, so that the target device displays the source end content. When the source device determines the window 2 as the target window, as shown in FIG. 16A and FIG. 16B, the source device may cross the window 1 on the target display, and share content in the source display with the window 2 in the target display for display. After multi-screen interaction, interfaces displayed on the source display and the target display may be interfaces in a case 1 or a case 2 shown in FIG. 16A and FIG. 16B.

In the foregoing method, after determining the target window on the target display, the source device indicates the target window to the target device when sharing content on the source display with the target device, so that the target device displays, in the target window, the content from the source device.

Case 3: Before multi-screen interaction, the source display and the target display display more than three windows in total.

In this case, a case in which the source display and the target display display windows may be as follows: The source display displays a plurality of windows in a split-screen display manner, and the target display displays a plurality of windows in the split-screen display manner; or the source display displays more than two windows in a split-screen display manner, and the target display displays one window in a full-screen display manner; or the source display displays one window in a full-screen display manner, and the target display displays more than two windows in a split-screen display manner.

In this case, when a plurality of windows are displayed on the source display, the source device needs to select a source window from the plurality of windows based on a user operation. When a plurality of windows are displayed on the target display, the source device needs to select a target window from the plurality of windows based on a user operation. In this way, content in the source window is shared with the target window of the target display based on the user operation, where the source window may be any window displayed on the source display, and the target window may be any window displayed on the target display. For a method for selecting the target display by the source device, refer to the method provided in the foregoing first part of embodiments. Details are not described herein. When the source device selects the source window, reference may be made to the method for selecting the source window in the foregoing case 1. Details are not described herein.

In some embodiments of this application, when multi-screen interaction is performed, the target device may notify the source device of a quantity and distribution information of windows in the target display, and the source device may agree with the target device based on the information to use any window in the target display as a default target window. When a user performs a sliding operation in an area of the source window on the source display to trigger multi-screen interaction, the source device sends content in the source window to the target device, and the target device displays the content from the source device in the default target window.

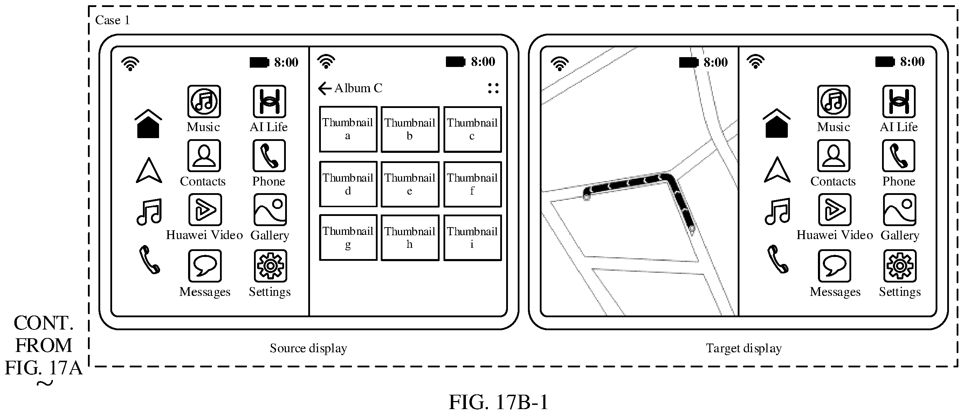

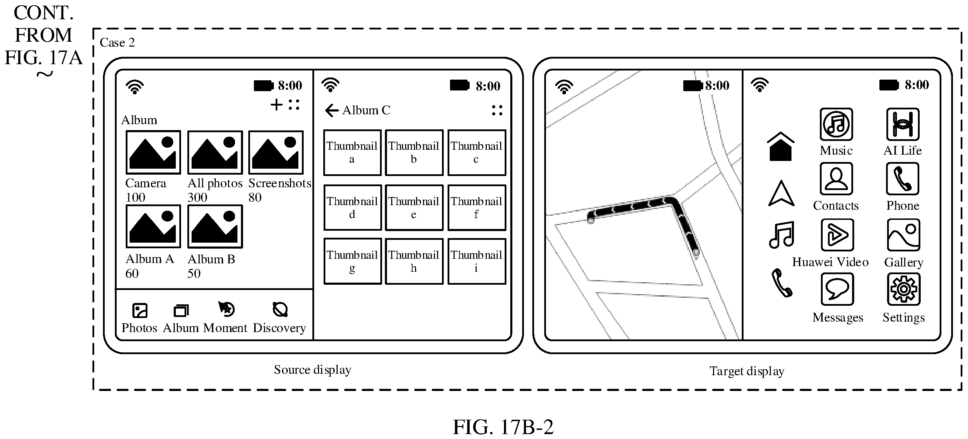

Embodiment 21: As shown in FIG. 17A, FIG. 17B-1, and FIG. 17B-2, a window 1 and a window 2 are displayed in a source display, a window 3 and a window 4 are displayed in a target display, and the window 4 is a default target window. When the source device detects that the user performs a three-finger sliding operation in an area of the window 1 on the source display, the source device may first determine the target display based on the sliding operation performed by the user, and determine the window 1 as the source window. In this case, the source device sends source end content displayed in the window 1 to the target device, and the target device displays the source end content in the window 4 after receiving the source end content. Based on this, the source device may cross the window 2 on the source display and the window 3 on the target display, and share content in the window 1 with the window 4 on the target display for display, to implement an effect of crossing the plurality of displays to perform interaction. After multi-screen interaction, interfaces displayed on the source display and the target display may be interfaces in a case 1 shown in FIG. 17B-1 or a case 2 shown in FIG. 17B-2.

In some embodiments of this application, the source device may alternatively select the target window based on a speed/acceleration/hand-leaving speed at which the user performs the sliding operation on the source display.

In an optional implementation, when determining that the speed of the sliding operation of the user is greater than or equal to a specified threshold, the source device may determine to cross all middle windows to perform multi-screen interaction, that is, interact with a window that is farthest from the source window on the source display, so that the source device may determine that the target window is the window that is farthest from the source window. When determining that the speed of the sliding operation of the user is less than the specified threshold, the source device may determine to exchange display positions of different windows on the source display, or may determine to cross one window to perform multi-screen interaction, so that the source device may determine that the target window is a window that is closest to the source window.

Embodiment 22: As shown in FIG. 18a-1A, FIG. 18a-1B, FIG. 18a-2A, and FIG. 18a-2B, a window 1, a window 2, and a window 3 are displayed in a source display, and a window 4 is displayed in a target display. When the source window is the window 1, in an optional manner, when determining that a speed at which the user performs a sliding operation is greater than or equal to the specified threshold, the source device may determine to directly cross to the window on the target display, and determine that the target display is the display 4. Content displayed on the source display and the target display after multi-screen interaction is shown in FIG. 18b-1 and FIG. 18b-2. In addition, when determining that the speed at which the user performs the sliding operation is less than the specified threshold, the source device may determine to exchange display positions of the window 1 and another window.

In another optional implementation, the source device may set a threshold range of a speed/acceleration/hand-leaving speed of the sliding operation of the user based on a quantity of windows that can be crossed, where each threshold range corresponds to a quantity of crossed windows. When receiving the sliding operation of the user, the source device may determine, based on threshold ranges to which different values of the speed/acceleration/hand-leaving speed of the sliding operation of the user belong, a quantity of windows crossed during multi-screen interaction, and further determine the target window. There is a positive correlation between the value of the speed/acceleration/hand-leaving speed of the sliding operation of the user and the quantity of windows crossed during multi-screen interaction. A larger value of the speed/acceleration/hand-leaving speed of the sliding operation of the user indicates a larger quantity of crossed windows.

In some embodiments of this application, when the source device performs a cross-screen operation crossing a plurality of windows, the plurality of crossed windows may belong to a same display or may belong to different displays.

In some embodiments of this application, in the split-screen display scenario, the user may also perform an operation on the target display according to the method provided in the foregoing embodiment, to control and implement an effect of sharing source end content in a source window on the source display with a target window on the target display for display. When the target device determines the source display based on the operation performed by the user on the target display, reference may be made to the method provided in the foregoing first part of embodiments. When determining the source window on the source display and the target window on the target display based on the operation performed by the user on the target display, the target device may use, as the target window, a window corresponding to the sliding operation of the user in the area in which the contact of the display is located, and select the source window based on the speed/acceleration at which the user performs the sliding operation on the target display. For details, refer to the method in the foregoing embodiment. Details are not described herein.

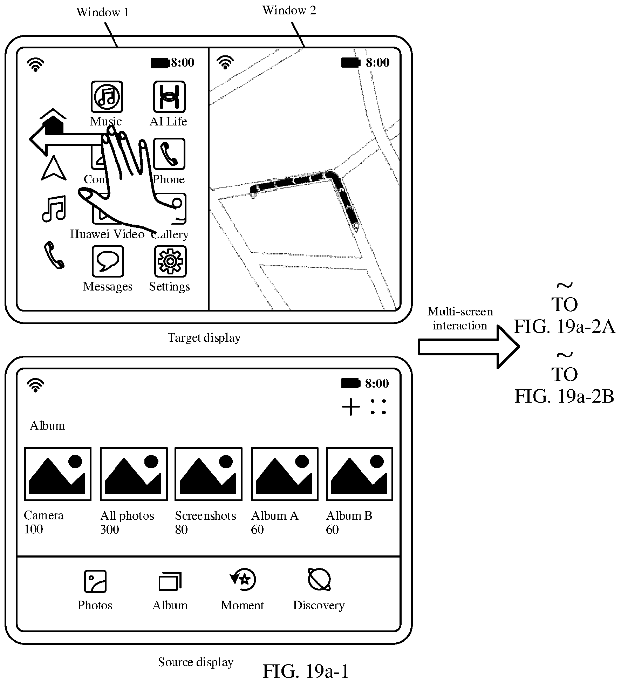

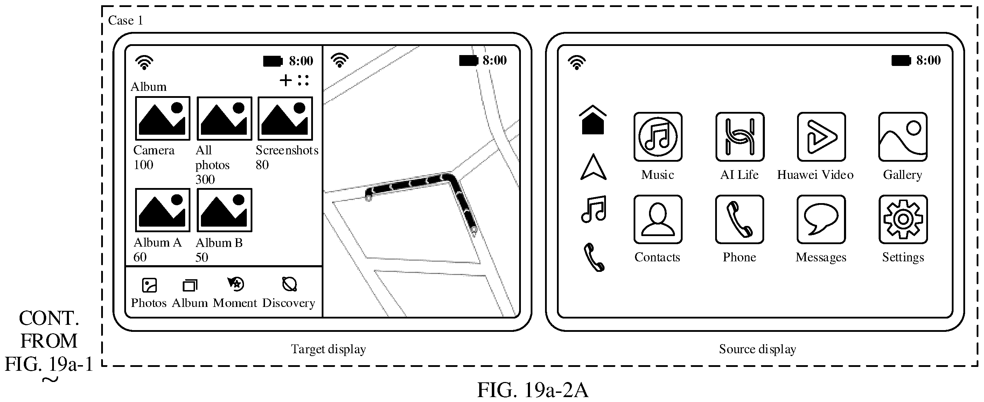

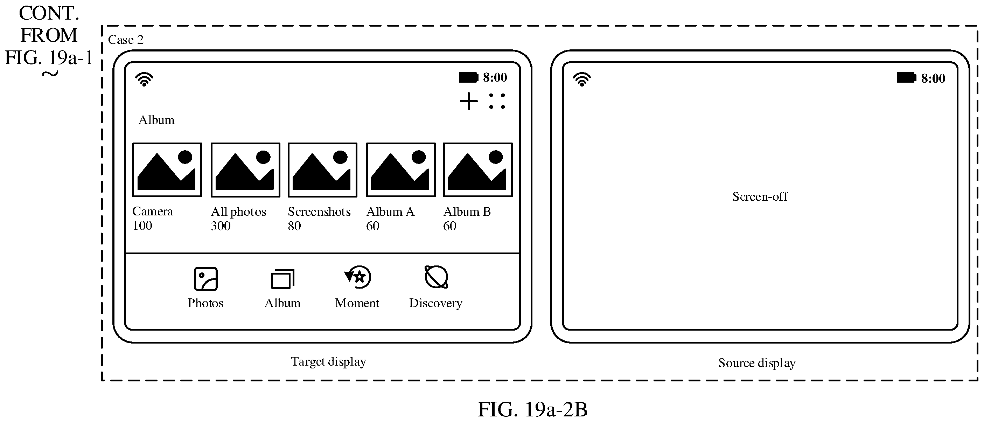

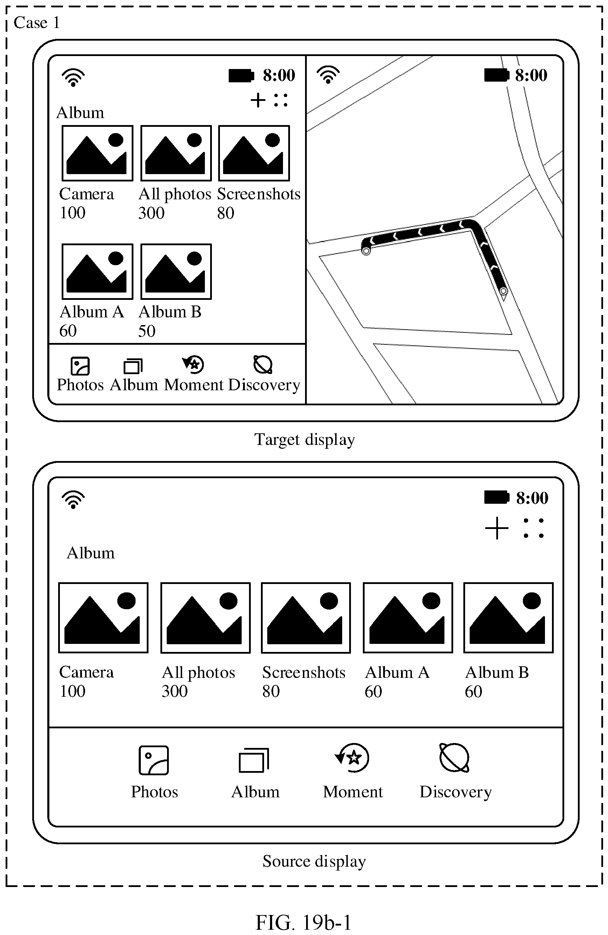

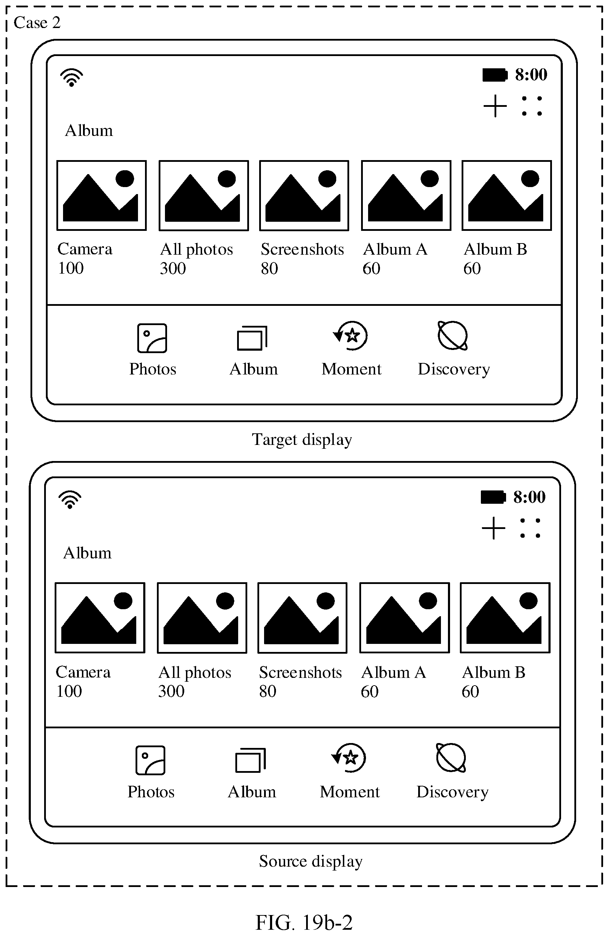

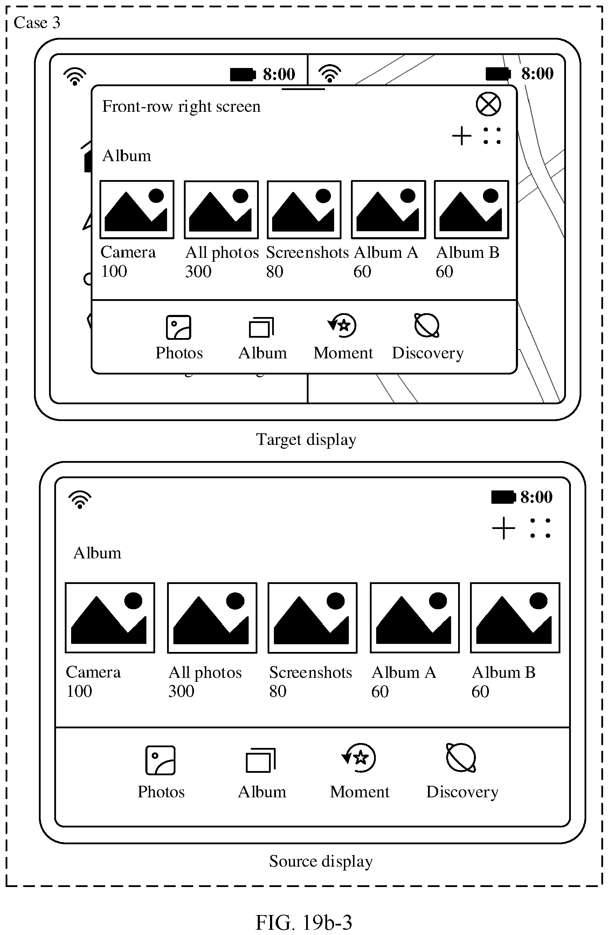

Embodiment 23: According to the method, as shown in FIG. 19a-1, FIG. 19a-2A, and FIG. 19a-2B, a window 1 and a window 2 are displayed in a target display, and one window is displayed on a source display in a full-screen display manner. When detecting that the user performs a three-finger sliding operation on the target display, the target device determines, based on the operation, the source display selected by the user and a target window selected by the user. When the target window is the window 1, the target device may obtain, from the source device, the content displayed on the source display, and display the content in the window 1, to implement an effect of crossing a window (the window 2) to pull and display the content on the source display. After multi-screen interaction, interfaces displayed on the target display and the source display may be any interface in a case 1 shown in FIG. 19a-2A and a case 2 shown in FIG. 19a-2B, or any interface in a case 3 to a case 5 shown in FIG. 19b-1, FIG. 19b-2, and FIG. 19b-3.

### Scenario 2: Multi-window display scenario

In this scenario, the source display of the source device has a plurality of windows. When a start contact at which the user performs the sliding operation on the source display crosses the plurality of windows, the source device may directly share all content displayed on the source display with the target display. When the start contact at which the user performs the sliding operation on the source display is located in one window, the source device may share only the content displayed in the window with the target display. Display areas of the plurality of windows on the source display may be different from each other, for example, may be displayed in the split-screen display manner in the foregoing scenario 1. The plurality of windows may alternatively have an overlapping area in the display area of the display, that is, the plurality of windows are displayed in a stacked manner. Any window may cover another window, or may be covered by another window.

Embodiment 24: As shown in FIG. 20a-1 and FIG. 20a-2, a window 1 and a window 2 are displayed on a source display in a split-screen display manner, and one window is displayed on a target display in a full-screen display manner. When the source device detects that the user performs a three-finger sliding operation on the source display and a start contact of the operation crosses a plurality of windows, the source device shares all content on the source display with the target display. After multi-screen interaction, interfaces displayed on the source display and the target display may be any interface in a case 1 to a case 3 in FIG. 20b-1, FIG. 20b-2, and FIG. 20b-3.

Embodiment 25: As shown in FIG. 21a, a window 1 and a window 2 are displayed on a source display in a stacked manner, and one window is displayed on a target display in a full-screen display manner. When the source device detects that the user performs a three-finger sliding operation on the source display and a start contact of the operation crosses a plurality of windows, the source device shares all content on the source display with the target display. After multi-screen interaction, interfaces displayed on the source display and the target display may be any interface in a case 1 to a case 3 in FIG. 21b-1, FIG. 21b-2, and FIG. 21b-3.

Based on the foregoing manner, when the user slides a window of the start contact of the operation, it may be considered that the user does not need to perform multi-screen interaction on content in a single window. In this case, the source device shares the entire content on the source display with the target display for display. A concept of a window may be blurred in this scenario. This better meets user's intent to control multi-screen interaction.

It should be noted that the examples provided in the foregoing embodiments are merely examples for describing effects that can be implemented in the solutions provided in the embodiments of this application, do not cover all effects that can be implemented in the solutions of this application, and do not limit the effects implemented in the solutions of this application. The content provided in the foregoing examples may also be recombined or used in combination, to implement more diversified multi-screen interaction results.

Based on the foregoing embodiments and a same concept, an embodiment of this application further provides a multi-screen interaction method. As shown in FIG. 22, the method includes the following steps.

S2201: A first electronic device displays first content on a first display.

S2202: The first electronic device receives a first operation, where the first operation is a sliding operation performed on the first display.

S2203: The first electronic device sends, in response to the received first operation, the first content to a second electronic device that displays second content on a second display, so that the second electronic device displays the first content on the second display.

In a possible example, the first electronic device may be the source device in the first content part in the foregoing embodiment, the second electronic device may be the target device in the first content part in the foregoing embodiment, the first display may be the source display in the first content part in the foregoing embodiment, the second display may be the target display described in the first part of content in the foregoing embodiment, and the first operation may be the three-finger sliding operation described in the foregoing embodiment. For a method for performing multi-screen interaction between the first display and the second display by the first electronic device and the second electronic device, refer to the method described in the first part of the foregoing embodiment. Details are not described herein.

For example, before and after the first electronic device performs multi-screen interaction with the second electronic device, the first display and the second display may display content in manners shown in FIG. 7a-1 and FIG. 7a-2, and FIG. 7b-1, FIG. 7b-2, and FIG. 7b-3.

In another possible example, the first electronic device may be the source device in the scenario 1 in the second part content in the foregoing embodiment, the second electronic device may be the target device in the scenario 1 in the second part content in the foregoing embodiment, the first display may be the source display in the scenario 1 in the second part content in the foregoing embodiment, the second display may be the target display described in the scenario 1 in the second part in the foregoing embodiment, and the first operation may be the three-finger sliding operation described in the foregoing embodiment. For a method for performing multi-screen interaction between the first display and the second display by the first electronic device and the second electronic device, refer to the method described in the scenario 1 in the second part in the foregoing embodiment. Details are not described herein.

In still another possible example, the first electronic device may be the source device in the scenario 2 in the second part content in the foregoing embodiment, the second electronic device may be the target device in the scenario 2 in the second part in the foregoing embodiment, the first display may be the source display in the scenario 2 in the second part in the foregoing embodiment, the second display may be the target display in the scenario 2 in the second part in the foregoing embodiment, and the first operation may be the three-finger sliding operation described in the foregoing embodiment. For a method for performing multi-screen interaction between the first display and the second display by the first electronic device and the second electronic device, refer to the method described in the scenario 2 in the second part in the foregoing embodiment. Details are not described herein.

For example, the first operation may be an operation performed in an operation manner shown in FIG. 11(a) and FIG. 11(b) or FIG. 13(a), FIG. 13(b), and FIG. 13(c).

Based on the foregoing embodiments and a same concept, an embodiment of this application further provides a multi-screen interaction method. As shown in FIG. 23, the method includes the following steps.

S2301: A first electronic device displays a first window and a second window on a first display, where the first window includes first content, and the second window includes second content.

S2302: The first electronic device receives a first operation, where the first operation is a sliding operation performed on the first display.

S2303: The first electronic device sends, in response to the received first operation, target content to a second electronic device that displays third content on a second display, so that the second electronic device displays the target content on the second display, where the target content is the first content and/or the second content.

For example, the first electronic device may be the source device in the case 1 of the scenario 1 in the foregoing third part of the embodiment, the second electronic device may be the target device in the case 1 of the scenario 1 in the foregoing third part of the embodiment, the first display may be the source display described in the case 1 of the scenario 1 in the foregoing third part of the embodiment, the second display may be the target display described in the case 1 of the scenario 1 in the foregoing third part of the embodiment, and the first operation may be the three-finger sliding operation described in the foregoing embodiments. For a method for performing multi-screen interaction between the first display and the second display by the first electronic device and the second electronic device, refer to the method described in the case 1 of the scenario 1 in the foregoing third part of the embodiment. Details are not described herein.

For example, before and after the first electronic device performs multi-screen interaction with the second electronic device, the first display and the second display may display content in manners shown in FIG. 15a-1 and FIG. 15a-2, and FIG. 15b-1, FIG. 15b-2, and FIG. 15b-3.

Based on the foregoing embodiments and a same concept, an embodiment of this application further provides a multi-screen interaction method. As shown in FIG. 24, the method includes the following steps.

S2401: A first electronic device displays a first window, a second window, and a third window on a first display, where the first window includes first content, the second window includes second content, and the third window includes third content.

S2402: The first electronic device receives a first operation, where the first operation is a sliding operation performed on the first display.

S2403: The first electronic device sends, in response to the received first operation, target content to a second electronic device that displays fourth content on a second display, so that the second electronic device displays the target content on the second display, where the target content is the first content, or the second content, or the third content, or the first content, the second content, and the third content.

For example, the first electronic device may be the source device in the case 3 of the scenario 1 in the foregoing third part of the embodiment, the second electronic device may be the target device in the case 3 of the scenario 1 in the foregoing third part of the embodiment, the first display may be the source display described in the case 3 of the scenario 1 in the foregoing third part of the embodiment, the second display may be the target display described in the case 3 of the scenario 1 in the foregoing third part of the embodiment, and the first operation may be the three-finger sliding operation described in the foregoing embodiments. For a method for performing multi-screen interaction between the first display and the second display by the first electronic device and the second electronic device, refer to the related method in the case 3 of the scenario 1 in the foregoing third part of the embodiment. Details are not described herein.

For example, before and after the first electronic device performs multi-screen interaction with the second electronic device, the first display and the second display may display content in manners shown in FIG. 18a-1A, FIG. 18a-1B, FIG. 18a-2A, and FIG. 18a-2B, and FIG. 18b-1 and FIG. 18b-2.

Based on the foregoing embodiments and a same concept, an embodiment of this application further provides a multi-screen interaction method. As shown in FIG. 25, the method includes the following steps.

S2501: A first electronic device displays first content on a first display.

S2502: The first electronic device receives a first operation, where the first operation is a sliding operation performed on the first display.

S2503: The first electronic device sends, in response to the received first operation, the first content to a second electronic device that displays a first window including second content and a second window including third content on a second display, so that the second electronic device displays the first content on the second display.

For example, the first electronic device may be the source device in the case 2 of the scenario 1 in the foregoing third part of the embodiment, the second electronic device may be the target device in the case 2 of the scenario 1 in the foregoing third part of the embodiment, the first display may be the source display described in the case 2 of the scenario 1 in the foregoing third part of the embodiment, the second display may be the target display described in the case 2 of the scenario 1 in the foregoing third part of the embodiment, and the first operation may be the three-finger sliding operation described in the foregoing embodiments. For a method for performing multi-screen interaction between the first display and the second display by the first electronic device and the second electronic device, refer to the method described in the case 2 of the scenario 1 in the foregoing third part of the embodiment. Details are not described herein.

For example, before and after the first electronic device performs multi-screen interaction with the second electronic device, the first display and the second display may display content in manners shown in FIG. 16A and FIG. 16B.

Based on the foregoing embodiments and a same concept, an embodiment of this application further provides a multi-screen interaction method. As shown in FIG. 26, the method includes the following steps.

S2601: A first electronic device displays first content on a first display.

S2602: The first electronic device receives a first operation, where the first operation is a sliding operation performed on the first display.

S2603: The first electronic device sends, in response to the received first operation, the first content to a second electronic device that displays a first window including second content, a second window including third content, and a third window including fourth content on a second display, so that the second electronic device displays the first content on the second display.

For example, the first electronic device may be the source device in the case 3 of the scenario 1 in the foregoing third part of the embodiment, the second electronic device may be the target device in the case 3 of the scenario 1 in the foregoing third part of the embodiment, the first display may be the source display described in the case 3 of the scenario 1 in the foregoing third part of the embodiment, the second display may be the target display described in the case 3 of the scenario 1 in the foregoing third part of the embodiment, and the first operation may be the three-finger sliding operation described in the foregoing embodiments. For a method for performing multi-screen interaction between the first display and the second display by the first electronic device and the second electronic device, refer to the related method in the case 3 of the scenario 1 in the foregoing third part of the embodiment. Details are not described herein.

Based on the foregoing embodiments and a same concept, an embodiment of this application further provides a multi-screen interaction method. As shown in FIG. 27, the method includes the following steps.

S2701: A first electronic device displays a first window and a second window on a first display, where the first window includes first content, and the second window includes second content.

S2702: The first electronic device receives a first operation, where the first operation is a sliding operation performed on the first display.

S2703: The first electronic device sends, in response to the received first operation, target content to a second electronic device that displays a third window including third content and a fourth window including fourth content on a second display, so that the second electronic device displays the target content on the second display, where the target content is the first content and/or the second content.

For example, the first electronic device may be the source device in the case 3 of the scenario 1 in the foregoing third part of the embodiment, the second electronic device may be the target device in the case 3 of the scenario 1 in the foregoing third part of the embodiment, the first display may be the source display described in the case 3 of the scenario 1 in the foregoing third part of the embodiment, the second display may be the target display described in the case 3 of the scenario 1 in the foregoing third part of the embodiment, and the first operation may be the three-finger sliding operation described in the foregoing embodiments. For a method for performing multi-screen interaction between the first display and the second display by the first electronic device and the second electronic device, refer to the related method in the case 3 of the scenario 1 in the foregoing third part of the embodiment. Details are not described herein.

For example, before and after the first electronic device performs multi-screen interaction with the second electronic device, the first display and the second display may display content in manners shown in FIG. 17A, FIG. 17B-1, and FIG. 17B-2.

Based on the foregoing embodiments and a same concept, an embodiment of this application further provides an electronic device. The electronic device is configured to implement the method implemented by the first electronic device or the second electronic device in the multi-screen interaction method provided in embodiments of this application. As shown in FIG. 28, the electronic device 2800 may include a display 2801, a memory 2802, one or more processors 2803, and one or more computer programs (not shown in the figure). The foregoing components may be coupled through one or more communication buses 2804.

The display 2801 is configured to display a related user interface, for example, an application interface.

The memory 2802 stores one or more computer programs (code), and the one or more computer programs include computer instructions. The one or more processors 2803 invoke the computer instructions stored in the memory 2802, so that the electronic device 2800 performs the multi-screen interaction method provided in embodiments of this application.

During specific implementation, the memory 2802 may include a high-speed random access memory, and may also include a nonvolatile memory such as one or more diskette storage devices, a flash device, or another nonvolatile solid-state storage device. The memory 2802 may store an operating system (referred to as a system for short below), for example, an embedded operating system, for example, Android, iOS, Windows, or Linux. The memory 2802 may be configured to store an implementation program of this embodiment of this application. The memory 2802 may further store a network communication program. The network communication program may be used to communicate with one or more adjuncts, one or more user equipments, or one or more network devices.

The one or more processors 2803 may be a general-purpose central processing unit (Central Processing Unit, CPU), a microprocessor, an application-specific integrated circuit (Application-Specific Integrated Circuit, ASIC), or one or more integrated circuits configured to control execution of programs of the solutions of this application.

It should be noted that FIG. 28 is merely an implementation of the electronic device 2800 provided in this embodiment of this application. In actual application, the electronic device 2800 may further include more or fewer components. This is not limited herein.

Based on the foregoing embodiments and a same concept, an embodiment of this application further provides a multi-screen interaction system. The system includes a first electronic device and a second electronic device. For a method performed by the first electronic device in the system, refer to the method performed by the source device in the foregoing embodiments. For a method performed by the second electronic device in the system, refer to the method performed by the target device in the foregoing embodiment. Details are not described herein.

Based on the foregoing embodiments and a same concept, an embodiment of this application further provides a computer-readable storage medium. The computer-readable storage medium stores a computer program. When the computer program is run on a computer, the computer is enabled to perform the method provided in the foregoing embodiments.

Based on the foregoing embodiments and a same concept, an embodiment of this application further provides a computer program product. The computer program product includes a computer program or instructions. When the computer program or the instructions is/are run on a computer, the computer is enabled to perform the method provided in the foregoing embodiments.

All or some of the methods in embodiments of this application may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the process or functions according to embodiments of the present invention are all or partially generated. The computer may be a general-purpose computer, a special-purpose computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD for short)), a semiconductor medium (for example, an SSD), or the like.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A multi-screen interaction method, wherein the method comprises:
displaying, by a first electronic device, first content on a first display;
receiving, by the first electronic device, a first operation, wherein the first operation is a sliding operation performed on the first display; and
sending, by the first electronic device in response to the received first operation, the first content to a second electronic device that displays second content on a second display, so that the second electronic device displays the first content on the second display.

2. The method according to claim 1, wherein an included angle between a sliding direction of the first operation and a first candidate direction is less than a specified first angle threshold, wherein the first candidate direction indicates a direction from a position of the first display to a position of the second display.

3. The method according to claim 1, wherein the first operation comprises a second operation and a third operation, and the second operation and the third operation are sliding operations performed on the first display, wherein an end contact of the second operation on the first display is a start contact of the third operation on the first display; and
the receiving, by the first electronic device, a first operation comprises:
receiving, by the first electronic device, the second operation;
displaying, by the first electronic device, identification information of at least one candidate display on the first display in response to the received second operation, wherein the at least one candidate display comprises the second display; and
receiving, by the first electronic device, the third operation, wherein the third operation is used to select identification information of the second display.

4. The method according to claim 3, wherein
an included angle between a candidate direction corresponding to the at least one candidate display and a sliding direction of the second operation is less than a specified second angle threshold; or
an included angle between a sliding direction of the second operation and a specified first reference direction is less than a specified second angle threshold, and an included angle between a candidate direction corresponding to the at least one candidate display and the first reference direction is less than the second angle threshold, wherein
a candidate direction corresponding to any candidate display indicates a direction from a position of the first display to a position of the candidate display.

5. The method according to claim 3 or 4, wherein the displaying, by the first electronic device, identification information of at least one candidate display on the first display comprises:
obtaining, by the first electronic device, sorting reference information corresponding to the at least one candidate display, wherein the sorting reference information indicates: a position of a display, or a distance between a display and the first display, or intimacy between an electronic device to which a display belongs and the first electronic device;
sorting, by the first electronic device, the at least one candidate display based on the sorting reference information corresponding to the at least one candidate display; and
displaying, by the first electronic device, the identification information of the at least one candidate display on the first display based on the sorting of the at least one candidate display.

6. The method according to any one of claims 3 to 5, wherein the at least one candidate display is in a screen-on state.

7. The method according to claim 2, wherein the first display and the second display are in a non-relatively static state, and the first candidate direction is a specified direction.

8. The method according to any one of claims 4 to 6, wherein the first display and the second display are in a non-relatively static state, and a candidate direction corresponding to the second display is a specified direction.

9. The method according to claim 7 or 8, wherein the first display is a display disposed in a head unit cockpit, and the second display is a display of a mobile device.

10. The method according to any one of claims 1 to 6, wherein the first display and the second display are in a relatively static state.

11. The method according to any one of claims 1 to 6, wherein the first display and the second display are displays disposed in a same head unit cockpit.

12. The method according to any one of claims 1 to 11, wherein that the second electronic device displays the first content on the second display comprises:
replacing, by the second electronic device with the first content, the second content displayed on the second display; or
displaying, by the second electronic device on the second display, a first window comprising the first content and a second window comprising the second content, wherein the first window and the second window are located in different areas of the second display, or the first window covers the second window.

13. The method according to any one of claims 1 to 12, wherein the method further comprises:
obtaining, by the first electronic device, the second content from the second electronic device; and
displaying, by the first electronic device, the second content on the first display.

14. The method according to any one of claims 1 to 12, wherein the method further comprises:
displaying, by the first electronic device, third content on the first display, wherein the third content is specified content or content displayed before the first electronic device displays the first content; or
switching, by the first electronic device, the first display to a screen-off state.

15. A multi-screen interaction method, wherein the method comprises:
displaying, by a first electronic device, first content on a first display;
receiving, by the first electronic device, a first operation, wherein the first operation is a sliding operation performed on the first display; and
sending, by the first electronic device in response to the received first operation, the first content to a second electronic device that displays second content on a second display, so that the second electronic device displays the first content on the second display.

16. The method according to claim 15, wherein the first operation comprises a second operation and a third operation, and the second operation and the third operation are sliding operations performed on the first display, wherein an end contact of the second operation on the first display is a start contact of the third operation on the first display; and
the receiving, by the first electronic device, a first operation comprises:
receiving, by the first electronic device, the second operation;
displaying, by the first electronic device, identification information of at least one candidate display on the first display in response to the received second operation, wherein the at least one candidate display comprises the second display; and
receiving, by the first electronic device, the third operation, wherein the third operation is used to select identification information of the second display.

17. The method according to claim 15, wherein the first operation comprises a fourth operation, a fifth operation, and a sixth operation, and the fourth operation, the fifth operation, and the sixth operation are sliding operations performed on the first display, wherein an end contact of the fourth operation on the first display is a start contact of the fifth operation on the first display, and an end contact of the fifth operation on the first display is a start contact of the sixth operation on the first display; and
the receiving, by the first electronic device, a first operation comprises:
receiving, by the first electronic device, the fourth operation;
displaying, by the first electronic device, first identification information on the first display in response to the received fourth operation, wherein the first identification information is used to identify a first position area, there is at least one candidate display in the first position area, and the at least one candidate display comprises the second display;
displaying, by the first electronic device, identification information of the at least one candidate display on the first display in response to the received fifth operation, wherein the fifth operation is used to select the first position area; and
receiving, by the first electronic device, the sixth operation, wherein the sixth operation is used to select identification information of the second display.

18. The method according to any one of claims 15 to 17, wherein the first display and the second display are in a non-relatively static state.

19. The method according to any one of claims 15 to 18, wherein the first display is a display of a mobile device, and the second display is a display disposed in a head unit cockpit.

20. The method according to any one of claims 15 to 19, wherein that the second electronic device displays the first content on the second display comprises:
replacing, by the second electronic device with the first content, the second content displayed on the second display; or
displaying, by the second electronic device on the second display, a first window comprising the first content and a second window comprising the second content, wherein the first window and the second window are located in different areas of the second display, or the first window covers the second window.

21. The method according to any one of claims 15 to 20, wherein the method further comprises:
obtaining, by the first electronic device, the second content from the second electronic device; and
displaying, by the first electronic device, the second content on the first display.

22. The method according to any one of claims 15 to 20, wherein the method further comprises:
displaying, by the first electronic device, third content on the first display, wherein the third content is specified content or content displayed before the first electronic device displays the first content; or
switching, by the first electronic device, the first display to a screen-off state.

23. A multi-screen interaction method, wherein the method comprises:
displaying, by a first electronic device, a first window and a second window on a first display, wherein the first window comprises first content, and the second window comprises second content;
receiving, by the first electronic device, a first operation, wherein the first operation is a sliding operation performed on the first display; and
sending, by the first electronic device in response to the received first operation, target content to a second electronic device that displays third content on a second display, so that the second electronic device displays the target content on the second display, wherein the target content is the first content and/or the second content.

24. The method according to claim 23, wherein the sending, by the first electronic device in response to the received first operation, target content to a second electronic device that displays third content on a second display comprises:
sending the first content to the second electronic device when a start contact of the first operation on the first display is located only in the first window; or
sending the second content to the second electronic device when a start contact of the first operation on the first display is located only in the second window; or
sending the first content and the second content to the second electronic device when a start contact of the first operation on the first display is located in the first window and the second window.

25. The method according to claim 23 or 24, wherein the sending, by the first electronic device in response to the received first operation, target content to a second electronic device that displays third content on a second display comprises:
sending the first content to the second display when determining that a distance between the first window and the second display is greater than a distance between the second window and the second display, and the first operation meets a first specified condition, wherein the first specified condition comprises:
an included angle between a sliding direction and a first candidate direction is less than a specified first angle threshold, wherein the first candidate direction indicates a direction from a position of the first display to a position of the second display; and/or
a sliding speed is greater than or equal to a specified first threshold, or a sliding acceleration is greater than or equal to a specified second threshold, or a hand-leaving speed is greater than or equal to a specified third threshold.

26. The method according to claim 25, wherein the determining, by the first electronic device, that a distance between the first window and the second display is greater than a distance between the second window and the second display comprises:
determining, by the first electronic device, a first target direction corresponding to the first window, wherein the first target direction indicates a direction from the first window to the second window; and
when an included angle between the first target direction and the first candidate direction is less than a specified second angle threshold, determining that the distance between the first window and the second display is greater than the distance between the second window and the second display.

27. The method according to claim 25, wherein the determining, by the first electronic device, that a distance between the first window and the second display is greater than a distance between the second window and the second display comprises:
determining, by the first electronic device, a first target direction corresponding to the first window and a second target direction corresponding to the second window, wherein the first target direction indicates a direction from the first window to the second window, and the second target direction indicates a direction from the second window to the first window; and
when an included angle between the first target direction and the first candidate direction is less than an included angle between the second target direction and the first candidate direction, determining that the distance between the first window and the second display is greater than the distance between the second window and the second display.

28. The method according to any one of claims 23 to 27, wherein that the second electronic device displays the target content on the second display comprises:
replacing, by the second electronic device with the target content, the third content displayed on the second display; or
displaying, by the second electronic device on the second display, the first window comprising the target content and the second window comprising the third content, wherein the first window and the second window are located in different areas of the second display, or the first window covers the second window.

29. The method according to any one of claims 23 to 28, wherein the method further comprises:
when the target content is the first content, obtaining, by the first electronic device, the third content from the second electronic device; and
displaying, by the first electronic device, the third content in the first window.

30. The method according to any one of claims 23 to 28, wherein the method further comprises:
displaying, by the first electronic device, fourth content in the first window when the target content is the first content, wherein the fourth content is specified content or content displayed in the first window before the first electronic device displays the first content; or
displaying, by the first electronic device, only the second content on the first display.

31. The method according to any one of claims 23 to 30, wherein the first display and the second display are in a relatively static state.

32. The method according to any one of claims 23 to 31, wherein the first display and the second display are displays disposed in a same head unit cockpit.

33. A multi-screen interaction method, wherein the method comprises:
displaying, by a first electronic device, a first window, a second window, and a third window on a first display, wherein the first window comprises first content, the second window comprises second content, and the third window comprises third content;
receiving, by the first electronic device, a first operation, wherein the first operation is a sliding operation performed on the first display; and
sending, by the first electronic device in response to the received first operation, target content to a second electronic device that displays fourth content on a second display, so that the second electronic device displays the target content on the second display, wherein the target content is the first content, or the second content, or the third content, or the first content, the second content, and the third content.

34. The method according to claim 33, wherein the sending, by the first electronic device in response to the received first operation, target content to a second electronic device that displays fourth content on a second display comprises:
sending the first content to the second electronic device when a start contact of the first operation on the first display is located only in the first window; or
sending the second content to the second electronic device when a start contact of the first operation on the first display is located only in the second window; or
sending the third content to the second electronic device when a start contact of the first operation on the first display is located only in the third window; or
sending the first content, the second content, and the third content to the second electronic device when a start contact of the first operation on the first display is located in the first window and the second window.

35. The method according to claim 33 or 34, wherein the sending, by the first electronic device in response to the received first operation, target content to a second electronic device that displays fourth content on a second display comprises:
sending the first content to the second electronic device when determining that a distance between the first window and the second display is greater than a distance between the second window and the second display, the distance between the first window and the second display is greater than a distance between the third window and the second display, and the first operation meets a first specified condition, wherein the first specified condition comprises:
an included angle between a sliding direction and a first candidate direction is less than a specified first angle threshold, wherein the first candidate direction indicates a direction from a position of the first display to a position of the second display; and/or
a sliding speed is greater than or equal to a specified first threshold, or a sliding acceleration is greater than or equal to a specified second threshold, or a hand-leaving speed is greater than or equal to a specified third threshold.

36. The method according to any one of claims 33 to 35, wherein the method further comprises:
displaying, by the first electronic device, fifth content in the first window when the target content is the first content, wherein the fifth content is specified content or content displayed in the first window before the first electronic device displays the first content; or
displaying, by the first electronic device, the second window and the third window on the first display in a split-screen display manner.

37. A multi-screen interaction method, wherein the method comprises:
displaying, by a first electronic device, first content on a first display;
receiving, by the first electronic device, a first operation, wherein the first operation is a sliding operation performed on the first display; and
sending, by the first electronic device in response to the received first operation, the first content to a second electronic device that displays a first window comprising second content and a second window comprising third content on a second display, so that the second electronic device displays the first content on the second display.

38. The method according to claim 37, wherein the method further comprises:
indicating, by the first electronic device, the second electronic device to display the first content in a target window, wherein the target window is the first window or the second window.

39. The method according to claim 38, wherein the indicating, by the first electronic device, the second electronic device to display the first content in a target window comprises:
when a distance between the first window and the first display is greater than a distance between the second window and the first display, and the first operation meets a first specified condition and/or a second specified condition, indicating the second electronic device to display the first content in the first window; or
when a distance between the first window and the first display is greater than a distance between the second window and the first display, and the first operation does not meet a second specified condition, indicating the second electronic device to display the first content in the second window, wherein
the first specified condition comprises: an included angle between a sliding direction of the first operation and a first candidate direction is less than a specified first angle threshold, wherein the first candidate direction indicates a direction from a position of the first display to a position of the second display; and
the second specified condition comprises: a sliding speed is greater than or equal to a specified first threshold, or a sliding acceleration is greater than or equal to a specified second threshold, or a hand-leaving speed is greater than or equal to a specified third threshold.

40. The method according to claim 39, wherein the determining, by the first electronic device, that a distance between the first window and the first display is greater than a distance between the second window and the first display comprises:
determining, by the first electronic device, a first target direction corresponding to the first window, wherein the first target direction indicates a direction from the first window to the second window; and
when an included angle between the first target direction and the first candidate direction is greater than the specified first angle threshold, determining that the distance between the first window and the first display is greater than the distance between the second window and the first display.

41. The method according to claim 39, wherein the determining, by the first electronic device, that a distance between the first window and the first display is greater than a distance between the second window and the first display comprises:
determining, by the first electronic device, a first target direction corresponding to the first window, wherein the first target direction indicates a direction from the first window to the second window;
determining, by the first electronic device based on the first target direction, a second target direction corresponding to the second window, wherein the second target direction indicates a direction from the second window to the first window; and
when an included angle between the first target direction and the first candidate direction is greater than an included angle between the second target direction and the first candidate direction, determining, by the first electronic device, that the distance between the first window and the first display is greater than the distance between the second window and the first display.

42. The method according to claim 40 or 41, wherein the determining, by the first electronic device, a first target direction corresponding to the first window comprises:
receiving, by the first electronic device, first indication information sent by the second electronic device, wherein the first indication information indicates the first target direction.

43. The method according to claim 37, wherein that the second electronic device displays the first content on the second display comprises:
replacing, by the second electronic device with the first content, the second content displayed in the first window; or
replacing, by the second electronic device with the first content, the third content displayed in the second window; or
displaying, by the second electronic device on the second display, the first window comprising the second content, the second window comprising the third content, and a third window comprising the first content, wherein the first window, the second window, and the third window are located in different areas of the second display, or the third window covers the first window and/or the second window.

44. A multi-screen interaction method, wherein the method comprises:
displaying, by a first electronic device, first content on a first display;
receiving, by the first electronic device, a first operation, wherein the first operation is a sliding operation performed on the first display; and
sending, by the first electronic device in response to the received first operation, the first content to a second electronic device that displays a first window comprising second content, a second window comprising third content, and a third window comprising fourth content on a second display, so that the second electronic device displays the first content on the second display.

45. The method according to claim 44, wherein the method further comprises:
indicating, by the first electronic device, the second electronic device to display the first content in a target window, wherein the target window is the first window, the second window, or the third window.

46. The method according to claim 45, wherein the indicating, by the first electronic device, the second electronic device to display the first content in a target window comprises:
when a distance between the first window and the first display is greater than a distance between the second window and the first display, the distance between the first window and the first display is greater than a distance between the third window and the first display, and the first operation meets a first specified condition and/or a second specified condition, indicating, by the first electronic device, the second electronic device to display the first content in the first window; or
when a distance between the first window and the first display is greater than a distance between the second window and the first display, the distance between the second window and the first display is greater than a distance between the third window and the first display, and the first operation meets a first specified condition and/or a third specified condition, indicating, by the first electronic device, the second electronic device to display the first content in the second window; or
when a distance between the first window and the first display is greater than a distance between the second window and the first display, the distance between the second window and the first display is greater than a distance between the third window and the first display, and the first operation meets a first specified condition and/or a fourth specified condition, indicating, by the first electronic device, the second electronic device to display the first content in the third window, wherein
the first specified condition comprises: an included angle between a sliding direction of the first operation and a first candidate direction is less than a specified first angle threshold, wherein the first candidate direction indicates a direction from a position of the first display to a position of the second display;
the second specified condition comprises: a sliding speed is greater than or equal to a specified first threshold, or a sliding acceleration is greater than or equal to a specified second threshold, or a hand-leaving speed is greater than or equal to a specified third threshold;
the third specified condition comprises: the sliding speed is less than the specified first threshold and is greater than or equal to a specified fourth threshold, or the sliding acceleration is less than the specified second threshold and is greater than or equal to a specified fifth threshold, or the hand-leaving speed is less than the specified third threshold and is greater than or equal to a specified sixth threshold; and
the fourth specified condition comprises: the sliding speed is less than the specified fourth threshold, or the sliding acceleration is less than the specified fifth threshold, or the hand-leaving speed is less than the specified sixth threshold.

47. A multi-screen interaction method, wherein the method comprises:
displaying, by a first electronic device, a first window and a second window on a first display, wherein the first window comprises first content, and the second window comprises second content;
receiving, by the first electronic device, a first operation, wherein the first operation is a sliding operation performed on the first display; and
sending, by the first electronic device in response to the received first operation, target content to a second electronic device that displays a third window comprising third content and a fourth window comprising fourth content on a second display, so that the second electronic device displays the target content on the second display, wherein the target content is the first content and/or the second content.

48. The method according to claim 47, wherein the sending, by the first electronic device in response to the received first operation, target content to a second electronic device that displays a third window comprising third content and a fourth window comprising fourth content on a second display comprises:
sending the first content to the second electronic device when a start contact of the first operation on the first display is located only in the first window; or
sending the second content to the second electronic device when a start contact of the first operation on the first display is located only in the second window; or
sending the first content and the second content to the second electronic device when a start contact of the first operation on the first display is located in the first window and the second window.

49. The method according to claim 47 or 48, wherein the method further comprises:
indicating, by the first electronic device, the second electronic device to display the target content in a target window, wherein the target window is the third window or the fourth window.

50. The method according to claim 47 or 48, wherein the indicating, by the first electronic device, the second electronic device to display the target content in a target window comprises:
when a distance between the third window and the first display is greater than a distance between the fourth window and the first display, and the first operation meets a first specified condition and/or a second specified condition, indicating the second electronic device to display the target content in the third window; or
when a distance between the third window and the first display is greater than a distance between the fourth window and the first display, and the first operation meets a first specified condition and/or a third specified condition, indicating the second electronic device to display the target content in the fourth window, wherein
the first specified condition comprises: an included angle between a sliding direction of the first operation and a first candidate direction is less than a specified first angle threshold, wherein the first candidate direction indicates a direction from a position of the first display to a position of the second display;
the second specified condition is: a sliding speed is greater than or equal to a specified first threshold, or a sliding acceleration is greater than or equal to a specified second threshold, or a hand-leaving speed is greater than or equal to a specified third threshold; and
the third specified condition is: the sliding speed is less than the specified first threshold and is greater than or equal to a specified fourth threshold, or the sliding acceleration is less than the specified second threshold and is greater than or equal to a specified fifth threshold, or the hand-leaving speed is less than the specified third threshold and is greater than or equal to a specified sixth threshold.

51. An electronic device, wherein the electronic device comprises a display, a memory, and one or more processors, wherein
the memory is configured to store computer program code, wherein the computer program code comprises computer instructions; and when the computer instructions are executed by the one or more processors, the electronic device is enabled to perform the method according to any one of claims 1 to 14, or perform the method according to any one of claims 15 to 22, or perform the method according to any one of claims 23 to 32, or perform the method according to any one of claims 33 to 36, or perform the method according to any one of claims 37 to 43, or perform the method according to any one of claims 44 to 46, or perform the method according to any one of claims 47 to 50.

52. A computer-readable storage medium, wherein the computer-readable storage medium stores a computer program, and when the computer program is run on an electronic device, the electronic device is enabled to perform the method according to any one of claims 1 to 14, or perform the method according to any one of claims 15 to 22, perform the method according to any one of claims 23 to 32, or perform the method according to any one of claims 33 to 36, or perform the method according to any one of claims 37 to 43, or perform the method according to any one of claims 44 to 46, or perform the method according to any one of claims 47 to 50.

53. A computer program product, wherein the computer program product stores a computer program, and when the computer program is run on an electronic device, the electronic device is enabled to perform the method according to any one of claims 1 to 14, or perform the method according to any one of claims 15 to 22, perform the method according to any one of claims 23 to 32, or perform the method according to any one of claims 33 to 36, or perform the method according to any one of claims 37 to 43, or perform the method according to any one of claims 44 to 46, or perform the method according to any one of claims 47 to 50.
